# EUROPÄISCHE PATENTSCHRIFT

(11) **EP 4 014 424 B1**
(45) Veröffentlichungstag und Bekanntmachung des Hinweises auf die Patenterteilung: **14.02.2024**
(21) Anmeldenummer: 20745191.5
(22) Anmeldetag: 23.07.2020
(51) Int. Cl.: H04L 9/06, H04L 12/40

(54) **VERFAHREN ZUM VERARBEITEN VON TELEGRAMMEN IN EINEM AUTOMATISIERUNGSNETZWERK, AUTOMATISIERUNGSNETZWERK, MASTERTEILNEHMER UND SLAVETEILNEHMER**
METHOD FOR PROCESSING TELEGRAMS IN AN AUTOMATION NETWORK, AUTOMATION NETWORK, MASTER SUBSCRIBER AND SLAVE SUBSCRIBER
PROCÉDÉ DE TRAITEMENT DE TÉLÉGRAMMES DANS UN RÉSEAU D'AUTOMATISATION, RÉSEAU D'AUTOMATISATION, ABONNÉ MAÎTRE ET ABONNÉ ESCLAVE

(30) Priorität: 19.09.2019 DE 102019125270
(43) Veröffentlichungstag der Anmeldung: 22.06.2022
(73) Patentinhaber: Beckhoff Automation GmbH, 33415 Verl (DE)
(72) Erfinder: BÜTTNER, Holger, 12205 Berlin (DE); JANSSEN, Dirk, 33415 Verl (DE); VONNAHME, Erik, 33154 Salzkotten (DE); BECKHOFF, Hans, 33415 Verl (DE); RETTIG, Thomas, 33378 Rheda-Wiedenbrück (DE); BUNTE, Thorsten, 33335 Gütersloh (DE); BECKHOFF, Johannes, 33758 Schloß Holte-Stukenbrock (DE)
(74) Vertreter: Patentanwaltskanzlei WILHELM & BECK
(86) Internationale Anmeldenummer: PCT/EP2020/070844
(87) Internationale Veröffentlichungsnummer: WO 2021/052656

(56) Entgegenhaltungen:
- DE-B3-102015 120 242
- FELIX WIECZOREK ET AL: "Towards Secure Fieldbus Communication", 25. September 2012 (2012-09-25), 12TH EUROPEAN CONFERENCE ON COMPUTER VISION, ECCV 2012; [LECTURE NOTES IN COMPUTER SCIENCE], SPRINGER BERLIN HEIDELBERG, BERLIN GERMANY, PAGE(S) 149 - 160, XP047016660, ISSN: 0302-9743 ISBN: 978-3-642-36741-0 Abschnitt 3; Figuren 2, 3

## Beschreibung

Die Erfindung betrifft ein Verfahren zum Verarbeiten von Telegrammen in einem Automatisierungsnetzwerk. Des Weiteren betrifft die Erfindung ein Automatisierungsnetzwerk zur Durchführung des Verfahrens und einen Masterteilnehmer sowie einen Slaveteilnehmer für das Automatisierungsnetzwerk.

Automatisierungsnetzwerke werden häufig als "Feldbussysteme" betrieben. Dies sind industrielle Bussysteme, die eine echtzeitfähige Steuerung der Maschinen oder Anlagen des Automatisierungsnetzwerks ermöglichen, wobei die Maschinen oder Anlagen des Automatisierungsnetzwerks mithilfe von speicherprogrammierbaren Steuerungen (SPS) gesteuert werden. Zur Kommunikation der Feldgeräte, also beispielsweise Sensoren und Aktoren der Maschinen oder Anlagen des Automatisierungsnetzwerks mit der SPS, nutzt die SPS das Feldbussystem. Senden mehrere Netzwerkteilnehmer Telegramme über dieselbe Datenleitung in dem Automatisierungsnetzwerk, die als leitungsgebundenes oder drahtloses Bussystem ausgebildet sein kann, so muss es eine Möglichkeit geben, dass sich die Netzwerkteilnehmer dieselbe Datenleitung für die Datenübertragung teilen können. Zu diesem Zweck gibt es festgelegte Hierarchien und normierte Datenübertragungsprotokolle.

Meist arbeiten die Feldbussysteme im sogenannten "Master-Slave-Betrieb". Das heißt wenigstens ein Netzwerkteilnehmer ist als Masterteilnehmer ausgebildet und übernimmt die Steuerung der Prozesse, während die übrigen Netzwerkteilnehmer als Slaveteilnehmer die Abarbeitung von Teilaufgaben im Steuerungsbetrieb des Automatisierungsnetzwerks übernehmen. Der Austausch von Daten erfolgt dabei im Automatisierungsnetzwerk mithilfe von Telegrammen, die vom Masterteilnehmer an die Slaveteilnehmer ausgegeben werden. Die Slaveteilnehmer lesen die an sie adressierten Ausgangsdaten aus dem Telegramm und legen ihre Eingangsdaten in das Telegramm und senden das Telegramm an den Masterteilnehmer zurück.

Häufig sind die Automatisierungsnetzwerke als Ethernet basierte Netzwerke ausgebildet, beziehungsweise als Ethernet basierter Feldbus. Das heißt, das dem Telegrammverkehr im Automatisierungsnetzwerk zugrundeliegende echtzeitfähige Datenübertragungsprotokoll kann beispielsweise das EtherCAT Protokoll bilden. Ein Automatisierungsnetzwerk mit zugrundeliegendem EtherCAT Datenübertragungsprotokoll, nachfolgend kurz EtherCAT Netzwerk genannt, das aus dem Stand der Technik bekannt ist, umfasst eine direkte Verbindung zwischen dem Masterteilnehmer und den mehreren Slaveteilnehmern. Der Masterteilnehmer und die mehreren Slaveteilnehmer sind also jeweils über eine Punkt-zu-Punkt Verbindung ohne Zwischenstationen, zum Beispiel in Form von Netzwerkverteilern, über ein Datenleitungsnetz miteinander verbunden.

Die oben genannte Maschinensteuerung kann als lokale Maschinensteuerung ausgebildet sein und mit anderen Maschinensteuerungen anderer Maschinen oder Anlagen vernetzt sein. In der Regel weisen die Maschinen oder Anlagen wenigstens eine Schnittstelle für eine externe Verbindung, beispielsweise dem Internet und/oder wenigstens eine Schnittstelle zur Leitebene auf. Dabei bezeichnet eine Leitebene eine zentrale Steuerungsebene der Maschinen oder Anlagen. Also eine zentrale Überwachungsebene, die die einzelnen Maschinen oder Anlagen samt deren jeweiligen lokalen Steuerungen umfasst. Die lokalen Maschinensteuerungen können demnach über ein weiteres Ethernet Netzwerk mit der Leitebene oder dem Internet verbunden sein.

Gerade die Verbindung mit dem Internet birgt die Gefahr vor einem unerwünschten Hacker-Angriff auf die lokalen Maschinensteuerungen und/oder die zentrale Maschinensteuerung. Abhilfe gegen einen solchen Hacker-Angriff kann die Installation einer Firewall für die lokale Maschinensteuerung, die den Masterteilnehmer mit umfasst, bieten. Dies ist ausreichend, da nur über den Masterteilnehmer ein Zugriff auf die Slaveteilnehmer möglich ist.

Wird das EtherCAT Netzwerk durch Netzwerkverteiler erweitert, die als sogenannte Switche oder Branche ausgebildet sein können, so kann ein externer Angriff auf einen Slaveteilnehmer über einen Ein-/Ausgangs-Port eines Netzwerkverteilers erfolgen, der beispielsweise mit dem Internet verbunden ist. Durch einen solchen Hackerangriff kann es möglich sein, dass eine Steuerungsaufgabe beziehungsweise der Steuerungsbetrieb im EtherCAT Netzwerk manipuliert wird. Auch bei anderen Ethernet basierten Feldbussen, wie dem PROFINET Feldbussystem, kann dieses Problem auftreten. Eine nach dem Stand der Technik bekannte Möglichkeit zur Überwindung des Problems liegt in der Verschlüsselung der Verbindung zwischen der Steuerung, also dem Masterteilnehmer und dem Peripheriegerät, dem Slaveteilnehmer. Nachteilig an der Verschlüsselung der Verbindung ist jedoch, dass beispielsweise ein verschlüsseltes PROFINET Telegramm im Slaveteilnehmer erst vollständig empfangen werden muss, bevor eine Entschlüsselung möglich ist, da die PROFINET Telegramme jeweils als Einzeltelegramme ausgebildet sind, also nur für einen einzelnen Slaveteilnehmer bestimmt sind. Telegramme mit zugrundeliegendem EtherCAT Protokoll hingegen sind als sogenannte Durchlauftelegramme ausgebildet, das heißt sie können von mehreren Slaveteilnehmern im Durchlauf, also jeweils parallel zum fortlaufenden Empfang des restlichen EtherCAT Telegramms verarbeitet werden. Demnach erfordert ein EtherCAT Netzwerk eine vom Stand der Technik abweichende Methode zur Gewährleistung einer sicheren Kommunikation.

Dokument DE 10 2015 120 242 B3 offenbart ein Verfahren zum Verarbeiten von Telegrammen sowie ein Automatisierungsnetzwerk mit mehreren Netzwerkteilnehmern, von denen wenigstens einer als Masterteilnehmer und wenigstens ein weiterer Teilnehmer als ein Slaveteilnehmer ausgebildet sind. Auch der Masterteilnehmer ist in der genannten Schrift ausgelegt, Telegramme an die Slaveteilnehmer auszugeben und die Slaveteilnehmer sind ausgelegt, die über einen Eingang empfangenen Telegramme im Durchlauf zu verarbeiten und über einen Ausgang an den nächsten Teilnehmer weiterzuleiten. Eine zumindest teilweise Verschlüsselung der Telegramme, sowie die internen Komponenten des Slaveteilnehmers zu Empfang, direkter Entschlüsselung, parallel zum fortlaufenden Empfang eines Telegramms, und Verschlüsselung, sowie ihre Verbindungen sind in der genannten Schrift nicht offenbart.

Dokument Wieczorek et al.: "Towards Secure Fieldbus Communication", 25. September 2012, 12TH EUROPEAN CONFERENCE ON COMPUTER VISION, SPRINGER HEIDELBERG BERLIN, Seiten 149 bis 160, ISBN: 978-3-642-36741-0 offenbart zwar einen Algorithmus zur Ver- und Entschlüsselung von Telegrammen für Echtzeitanwendungen mit Zykluszeiten von 10 ms, jedoch werden weder eine konkrete Master-Slave-Struktur, noch die internen Komponenten eines Slaveteilnehmers zu Empfang, direkter Entschlüsselung, parallel zum fortlaufenden Empfang eines Telegramms, und Verschlüsselung der Telegramme samt ihren Verbindungen zueinander offenbart.

Der in der genannten Schrift offenbarte Algorithmus beinhaltet eine Kombination aus Verschlüsselung und Authentifizierung und zeichnet sich durch Austauschbarkeit der verwendeten Stream Cipher (SC) und Message Authentication Code (MAC) Primitiven aus, sowie durch die Anpassungsfähigkeit der Sicherheitsstufen. Ein über den Feldbus übermitteltes Telegramm besteht aus dem Chiffriertext, der mit dem MAC verknüpft ist. Der Empfänger verwendet denselben Chiffrierstrom, so dass sich derselbe Zustand wie beim Sender einstellt. Der Empfänge geht zweistufig vor und prüft zunächst im ersten Schritt die Korrektheit des MAC mit einem Verifikations Algorithmus Vrf. Bei erfolgreicher Verifizierung des MAC wird der Chiffriertext in einem zweiten Schritt entschlüsselt. Die beiden Schritte sind untrennbar miteinander verbunden.

Es ist daher Aufgabe der vorliegenden Erfindung, ein optimiertes Verfahren zum Verarbeiten von Telegrammen in einem Automatisierungsnetzwerk anzugeben, das die Vertraulichkeit bei der Datenübertragung erhöht und einen Schutz vor unerlaubten Zugriffen bietet. Es ist weiterhin Aufgabe der Erfindung ein verbessertes Automatisierungsnetzwerk, einen verbesserten Masterteilnehmer sowie einen verbesserten Slaveteilnehmer anzugeben.

Diese Aufgabe wird durch die Merkmale der unabhängigen Ansprüche gelöst. Weitere vorteilhafte Ausführungsformen der Erfindung sind in den abhängigen Ansprüchen angegeben.

Erfindungsgemäß werden ein Verfahren zum Verarbeiten von Telegrammen in einem Automatisierungsnetzwerk und ein zugehöriges Automatisierungsnetzwerk vorgeschlagen. Das Automatisierungsnetzwerk weist mehrere Netzwerkteilnehmer auf, die in Form einer Master-Slave-Struktur ausgebildet sind. Wenigstens ein Netzwerkteilnehmer des Automatisierungsnetzwerks ist als ein Masterteilnehmer und wenigstens ein Netzwerkteilnehmer des Automatisierungsnetzwerks ist als ein Slaveteilnehmer ausgebildet. Der Masterteilnehmer ist ausgelegt, Telegramme an den wenigstens einen Slaveteilnehmer auszugeben. Ferner ist der Masterteilnehmer ausgelegt, die Telegramme jeweils zumindest teilweise zu verschlüsseln. Der wenigstens eine Slaveteilnehmer weist einen Eingangs-Port, eine Empfangslogik, die mit dem Eingangs-Port verbunden ist, eine Entschlüsselungseinheit, die mit der Empfangslogik verbunden ist und eine Verarbeitungseinheit, die zur Verarbeitung der Telegramme im Durchlauf ausgelegt ist und mit der Entschlüsselungseinheit und der Empfangslogik verbunden ist, auf. Die Empfangslogik ist ausgelegt, wenn am Eingangs-Port des wenigstens einen Slaveteilnehmers ein vom Masterteilnehmer zumindest teilweise verschlüsseltes Telegramm anliegt, einen verschlüsselten Teil des zumindest teilweise verschlüsselten Telegramms direkt an die Entschlüsselungseinheit weiterzuleiten. Die Entschlüsselungseinheit ist ausgelegt, den verschlüsselten Teil des zumindest teilweise verschlüsselten Telegramms mit einem Schlüssel im Durchlauf, also parallel zum fortlaufenden Empfang des zumindest teilweise verschlüsselten Telegramms, zu entschlüsseln und den entschlüsselten Teil des zumindest teilweise verschlüsselten Telegramms an die Verarbeitungseinheit weiterzuleiten. Die Verarbeitungseinheit ist ausgelegt, den entschlüsselten Teil des zumindest teilweise verschlüsselten Telegramms zu verarbeiten. Die Empfangslogik ist ausgelegt, wenn am Eingangs-Port des wenigstens einen Slaveteilnehmers ein vom Masterteilnehmer unverschlüsseltes Telegramm anliegt, das unverschlüsselte Telegramm direkt an die Verarbeitungseinheit weiterzuleiten. Die Verarbeitungseinheit ist ausgelegt, das unverschlüsselte Telegramm zu verarbeiten.

Der wenigstens eine Slaveteilnehmer weist einen Ausgangs-Port und eine Verschlüsselungseinheit auf, wobei die Verschlüsselungseinheit mit der Verarbeitungseinheit und dem Ausgangs-Port verbunden ist.

Der wenigstens eine Slaveteilnehmer ist über den Ausgangs-Port über ein Datenleitungsnetz mit einem nachfolgenden Slaveteilnehmer verbunden. Die Verarbeitungseinheit ist ausgelegt, den entschlüsselten Teil des zumindest teilweise verschlüsselten Telegramms an die Verschlüsselungseinheit weiterzuleiten. Die Verschlüsselungseinheit ist ausgelegt, den entschlüsselten Teil des zumindest teilweise verschlüsselten Telegramms mit dem Schlüssel im Durchlauf zu verschlüsseln und an den Ausgangs-Port weiterzuleiten. Ein erster Prozessorchip des Slaveteilnehmers umfasst dabei die Empfangslogik, die Verarbeitungseinheit, die Entschlüsselungseinheit sowie die Verschlüsselungseinheit.

Die Netzwerkteilnehmer in dem Automatisierungsnetzwerk können in Form einer Master-Slave-Struktur ausgebildet sein, wobei damit eine logische bzw. hierarchische Struktur der Teilnehmer gemeint ist. Für die Datenübertragung über das Datenleitungsnetz im Automatisierungsnetzwerk steht in der Regel ein Übertragungskanal zur Verfügung. Diesen müssen sich die Teilnehmer im gegenseitigen Einvernehmen teilen. Dabei ist der Masterteilnehmer der Teilnehmer, der die unaufgeforderte Zugriffsberechtigung auf den Übertragungskanal besitzt und dem Slaveteilnehmer eine Berechtigung dafür erteilen kann. Das vorgeschlagene Verfahren bietet die Möglichkeit der gewohnten Verarbeitung der Telegramme durch die Verarbeitungseinheit eines Slaveteilnehmers im Durchlauf. Dabei wird unter dem Begriff im Durchlauf verstanden, dass die Verarbeitungseinheit ausgelegt ist, mit der Verarbeitung des Telegramms zu beginnen, bevor das Telegramm vollständig über den Eingangs-Port eines Slaveteilnehmers empfangen worden ist. Die Verarbeitung erfolgt also parallel zum fortlaufenden Empfang des Telegramms über den Eingangs-Port. Neben der bekannten Verarbeitung der Telegramme im Durchlauf, die sich dabei vorzugsweise um EtherCAT Telegramme handeln, bietet das vorgeschlagene Verfahren jeweils die Möglichkeit ein Telegramm, das vom Masterteilnehmer zumindest teilweise verschlüsselt worden ist, mithilfe der Entschlüsselungseinheit im Durchlauf zu entschlüsseln. Auch zur Entschlüsselung ist es für den Slaveteilnehmer nicht erforderlich, das zumindest teilweise verschlüsselte Telegramms vollständig empfangen zu haben und dann erst mit der Entschlüsselung zu beginnen. Stattdessen kann mithilfe des Verfahrens in vorteilhafter Weise parallel zum fortlaufenden Empfang eines zumindest teilweise verschlüsselten Telegramms entschlüsselt werden. Dies kann Verzögerungszeiten minimieren und dazu beitragen, die Durchlaufzeit eines solchen genannten Telegramms durch einen Slaveteilnehmer nicht unnötigerweise zu verlängern.

Zur Verschlüsselung der Telegramme kann der Masterteilnehmer eine Masterteilnehmer-Verschlüsselungseinheit aufweisen, die beispielsweise als Software-Modul oder als kombiniertes Hard- und Software-Modul ausgebildet sein kann. Der Masterteilnehmer kann die Telegramme zumindest teilweise verschlüsseln und die zumindest teilweise Verschlüsselung flexibel an die Slaveteilnehmer im Automatisierungsnetzwerk anpassen. Bei einem und/oder mehreren zwischen dem Masterteilnehmer und dem Slaveteilnehmer bzw. den Slaveteilnehmern angeordneten Netzwerkverteilern kann der Masterteilnehmer zum Beispiel einen Ethernet-Kopfabschnitt eines Telegramms unverschlüsselt belassen, damit die Netzwerkverteiler den Ethernet-Kopfabschnitt für das Weiterleiten eines Telegramms über den entsprechenden Port des Netzwerkverteilers korrekt auswerten können. Kann der Masterteilnehmer die für den Steuerungsbetrieb relevanten Telegramme zumindest teilweise verschlüsseln, also zum Beispiel die Steuerungsdaten für die Maschinen oder Anlagen innerhalb eines Telegramms oder bei Ausbildung eines EtherCAT Telegramms auch innerhalb eines Datagramms oder innerhalb mehrerer Datagramme, so kann dies in vorteilhafter Weise vor unerlaubten Zugriffen in den Steuerungsbetrieb des Automatisierungsnetzwerks und vor Manipulationen schützen. Nachfolgend wird unter einem zumindest teilweise verschlüsselten Telegramm ein solches Telegramm verstanden, bei dem ein Ethernet-Datenabschnitt verschlüsselt ist, oder bei dem wenigstens ein Datagramm eines EtherCAT Telegramms im Ethernet-Datenabschnitt verschlüsselt ist oder bei dem ein Datagramm-Datenabschnitt wenigstens eines Datagramms eines EtherCAT Telegramms im Ethernet-Datenabschnitt verschlüsselt ist. Das vorgeschlagene Verfahren ist ferner auch auf vollständig verschlüsselte Telegramme, das heißt Telegramme bei denen auch der Ethernet-Kopfabschnitt samt des Ethernet-Datenabschnitts und gegebenenfalls des Ethernet-Endabschnitts mit verschlüsselt ist, anwendbar.

Das vorgeschlagene Verfahren bietet den Vorteil, dass nicht nur die Entschlüsselung des verschlüsselten Teils des vom Masterteilnehmer zumindest teilweise verschlüsselten Telegramms sowie die Verarbeitung des von der Entschlüsselungseinheit entschlüsselten Teils des Telegramms jeweils im Durchlauf erfolgen können, sondern auch die Verschlüsselung des entschlüsselten Teils des Telegramms selbst auch. Insbesondere kann die Verschlüsselung durch die Verschlüsselungseinheit vorgesehen sein, wenn die Daten im Telegramm bzw. im Datagramm bei einem EtherCAT Telegramm bei der Verarbeitung mittels der Verarbeitungseinheit verändert worden sind. Auf diese Weise kann gewährleistet werden, dass sensible Daten auch für die Übertragung über das Datenleitungsnetz an den nachfolgenden Slaveteilnehmer gesichert übertragen werden können. Der nachfolgende Slaveteilnehmer kann zur Entschlüsselung des zumindest teilweise vom vorangehenden Slaveteilnehmer mit dem Schlüssel verschlüsselten Telegramms in ähnlicher Weise vorgehen, wie es im Zusammenhang mit der Entschlüsselung des vom Masterteilnehmer zumindest teilweise verschlüsselten Telegramms vom vorangehenden Slaveteilnehmer beschrieben ist. Die Entschlüsselung und Verschlüsselung im Durchlauf ist nicht auf einen Slaveteilnehmer beschränkt, sondern kann von allen Slaveteilnehmern im Automatisierungsnetzwerk umgesetzt werden.

In einer weiteren Ausführungsform ist die Empfangslogik ausgelegt, eine erste Version und eine zweite Version eines zumindest teilweise verschlüsselten Telegramms durch Duplizierung des zumindest teilweise verschlüsselten Telegramms zu erzeugen. Die Empfangslogik ist ausgelegt, die erste Version an die Entschlüsselungseinheit und die zweite Version an die Verarbeitungseinheit weiterzuleiten. Die Verarbeitungseinheit ist ausgelegt, einen unverschlüsselten Teil der zweiten Version im Durchlauf zu verarbeiten und an den Ausgangs-Port weiterzuleiten. Ferner ist die Verarbeitungseinheit ausgelegt, die Weiterleitung der zweiten Version an den Ausgangs-Port an der Stelle des verschlüsselten Teils der zweiten Version zu stoppen, sofern der verschlüsselte Teil einen Telegrammabschnitt mit Schreibzugriff für die Verarbeitungseinheit aufweist. Überdies ist die Verarbeitungseinheit ausgelegt, den Schreibzugriff für den von der Entschlüsselungseinheit entschlüsselten und an die Verarbeitungseinheit weitergeleiteten Teil der ersten Version auszuführen und somit diesen Teil der ersten Version im Durchlauf zu verarbeiten und danach zur Verschlüsselung an die Verschlüsselungseinheit weiterzuleiten. Die Verschlüsselungseinheit ist ausgelegt, den entschlüsselten Teil der ersten Version im Durchlauf zu verschlüsseln und an den Ausgangs-Port weiterzuleiten. Sofern
der verschlüsselte Teil der zweiten Version einen Telegrammabschnitt mit Schreibzugriff für die Verarbeitungseinheit aufwies, wird der verarbeitete Teil des unverschlüsselten Teils der zweiten Version mit dem verschlüsselten Teil der ersten Version vor der Ausgabe über den Ausgangs-Port verbunden.

Die Duplizierung des zumindest teilweise verschlüsselten Telegramms durch die Empfangslogik kann zur optimalen Nutzung der Durchlaufzeit eines zumindest teilweise verschlüsselten Telegramms durch den Slaveteilnehmer beitragen. Dabei können die von der Empfangslogik duplizierte erste Version und zweite Version des zumindest teilweise verschlüsselten Telegramms identisch ausgebildet sein. Die zweite Version, die von der Empfangslogik instantan an die Verarbeitungseinheit weitergeleitet wird, kann von der Verarbeitungseinheit, sofern es sich um einen unverschlüsselten Teil der zweiten Version handelt, im Durchlauf verarbeitet werden, wobei die Verarbeitung im Durchlauf dabei in Form eines Schreibzugriffs oder eines Lesezugriffs, der nachfolgend im Zusammenhang mit dem verschlüsselten Teil der ersten Version beschrieben wird, ausgebildet sein kann und für den unverschlüsselten Teil der zweiten Version gleichermaßen gilt. Die Die Verarbeitungseinheit kann den unverschlüsselten Teil nach erfolgter Verarbeitung im Durchlauf zur Ausgabe an den nachfolgenden Slaveteilnehmer an den Ausgangs-Port weiterleiten. Die Verarbeitungseinheit stoppt die Weiterleitung der zweiten Version an den Ausgangs-Port an der Stelle eines verschlüsselten Teils der zweiten Version. Da die erste Version und die zweite Version Duplikate sind, weist auch die erste Version an der gleichen Stelle den verschlüsselten Teil auf. Die Entschlüsselungseinheit des ersten Prozessorchips kann den verschlüsselten Teil der ersten Version mit dem Schlüssel entschlüsseln, sofern eine vorgegebene Länge in Byte, die sogenannte Datenblockgröße, in einer Speichereinheit der Entschlüsselungseinheit zwischengespeichert ist, und zur Auswertung an die Verarbeitungseinheit weiterleiten. Dabei kann die Auswertung beispielsweise eine Prüfung der Adressierung des Slaveteilnehmers beinhalten. Beispielsweise falls es sich um einen verschlüsselten Datagramm-Datenkopfabschnitt eines nachfolgend noch erläuterten Prozessdaten-Datagramms oder Register-Datagramms in einem EtherCAT Telegramm handelt.

Die Adressierungsprüfung kann zum Beispiel durch Auswerten eines Befehlsfeldes, eines Adressfeldes und eines zweiten Längenfeldes in dem Datagramm-Datenkopfabschnitt erfolgen. Insbesondere kann die Verarbeitungseinheit durch Auswerten des Befehlsfeldes der ersten Version feststellen, wie beispielsweise die Verarbeitung der Daten im Datagramm-Datenabschnitt erfolgen soll, also mit welcher Zugriffsart. Ist das jeweilige Datagramm mit einem Schreibzugriff in dem Befehlsfeld im Datagramm-Kopfabschnitt ausgebildet, also das Datagramm als ein sogenanntes Schreib-Datagramm ausgebildet, so sind durch die Verarbeitungseinheit in der Regel Daten mit einem Datenspeicher des Slaveteilnehmers auszutauschen, wobei der Datenspeicher zum Beispiel Teil des ersten Prozessorchips und/oder eines zweiten Prozessorchips des Slaveteilnehmers sein kann. Vorzugsweise stoppt die Verarbeitungseinheit die Weiterleitung der zweiten Version an der Stelle des verschlüsselten Teils der zweiten Version bei festgestelltem Schreibzugriff im entschlüsselten Teil und führt dann den Schreibzugriff, also den Datenaustausch bzw. die Änderung der Daten, mit dem entschlüsselten Teil der ersten Version aus.

Im Rahmen des Datenaustauschs bzw. der Änderung der Daten können die Daten vom Datenspeicher des Slaveteilnehmers an die Verschlüsselungseinheit übergeben werden, damit diese sie verschlüsseln und an der entsprechenden Stelle bzw. Position in das Telegramm einfügen kann. Die Verschlüsselungseinheit kann Zeit benötigen, um die Daten zu verschlüsseln und in das Telegramm einzufügen, wobei die benötigte Zeit mit einer Anzahl an ungenutzten Byte bzw. sogenannten Füllbyte gleichgesetzt werden kann, die zwischen dem Datagramm-Kopfabschnitt und dem Datagramm-Datenabschnitt im Ethernet-Datenabschnitt eines Telegramms angeordnet sein können. Die ungenutzten Byte bzw. Füllbyte sind nur für die Verschlüsselung notwendig, nicht jedoch für die Entschlüsselung, da die Speichereinheit der Entschlüsselungseinheit mit der gleichen Übertragungsrate mit Telegrammbyte eines zumindest teilweise verschlüsselten Telegramms gefüllt wird, wie auch die Durchlaufgeschwindigkeit eines zumindest teilweise verschlüsselten Telegramms durch den Slaveteilnehmer ausgebildet ist. Die Entschlüsselungseinheit kann grundsätzlich erst nach dem Empfang, das heißt der Zwischenspeicherung der vorgegebenen Länge in Byte, also der Datenblockgröße des verschlüsselten Teils der ersten Version in der Speichereinheit, mit der Entschlüsselung beginnen. Dieses Merkmal gilt gleichermaßen für die Verschlüsselungseinheit und eine Verschlüsselungseinheit-Speichereinheit, die die Verschlüsselungseinheit umfassen kann.

Für die Verschlüsselungseinheit und die Verschlüsselungseinheit-Speichereinheit sind jedoch unterschiedliche Szenarien in Bezug auf die Geschwindigkeit bzw. die Übertragungsrate denkbar. Die Daten des Datenspeichers des Slaveteilnehmers können zum Beispiel über verschiedene Schnittstellen bereitgestellt werden und dies kann mit einer höheren Übertragungsrate erfolgen, als die Durchlaufgeschwindigkeit des zumindest teilweise verschlüsselten Telegramms, also eines Datenstroms an Byte, durch den Slaveteilnehmer ausgebildet ist. Ferner ist denkbar, dass die Daten über die verschiedenen Schnittstellen jeweils mit unterschiedlichen Übertragungsraten bereitgestellt werden können. In einem dritten Szenario kann der Slaveteilnehmer zum Beispiel im Adressfeld des Datagramm-Kopfabschnitts eine exemplarische Adresse von 10.000 aufweisen und für die Position 10.016 adressiert sein, die Daten in einem Datagramm-Datenabschnitt können im zweiten Adressfeld eine Länge von 32 Byte aufweisen. Die Verschlüsselung kann mit einer exemplarischen Datenblockgröße von 16 Byte erfolgt sein und der Slaveteilnehmer kann zum Beispiel ausgelegt sein, 8 Byte an Daten in das Telegramm einzufügen. Weisen die Daten im Datagramm-Datenabschnitt eine Länge bzw. Größe von 32 Byte auf, so können die ersten 16 Byte zum Beispiel für einen und/oder mehrere andere Slaveteilnehmer bestimmt sein, während der Slaveteilnehmer selbst die ersten 8 Byte der zweiten 16 Byte (wegen der oben genannten Adressierung des Slaveteilnehmers für die Position 10.016) verändern darf, wohingegen der Slaveteilnehmer zum Beispiel für die zweiten 8 Byte der zweiten 16 Byte nicht zur Veränderung der Daten ausgelegt sein kann.

Im genannten Beispielsfall könnten die Daten für die ersten 8 Byte, die der Slaveteilnehmer verändern darf über die oben genannten Schnittstellen für die Verschlüsselungseinheit bzw. die Verschlüsselungseinheit-Speichereinheit bereitgestellt werden, während die zweiten 8 Byte in der Verschlüsselungseinheit-Speichereinheit vom Slaveteilnehmer über den Eingangs-Port empfangen worden sein können und über die Empfangslogik zur Entschlüsselung an die Entschlüsselungseinheit weitergeleitet sein können. Da die Entschlüsselungseinheit die Entschlüsselung der Daten erst mit Empfang bzw. Zwischenspeicherung von 16 Byte (also dem Aufweisen der Datenblockgröße) in der Speichereinheit und die Verschlüsselungseinheit die Verschlüsselung der Daten erst mit Empfang bzw. Zwischenspeicherung von 16 Byte in der Verschlüsselungseinheit-Speichereinheit vornehmen kann, ist es also in dem dritten Szenario erforderlich, die zweiten 8 Byte jeweils in der Speichereinheit der Entschlüsselungseinheit bzw. in der Verschlüsselungseinheit-Speichereinheit zwischen zu speichern, bis die erforderliche Datenblockgröße empfangen ist. Demnach sollte die Anzahl der ungenutzten Byte bzw. Füllbyte der Datenblockgröße entsprechen, um in vorteilhafter Weise zu vermeiden, dass ein Telegramm beim Durchlauf durch die Slaveteilnehmer zu einer Verzögerung pro Slaveteilnehmer führt, die durch eine auszuführende Aktion des Slaveteilnehmers bedingt sein kann.

Damit sichergestellt wird, dass nur ein Duplikat des zumindest teilweise verschlüsselten Telegramms über den Ausgangs-Port des Slaveteilnehmers an den nachfolgenden Slaveteilnehmer weitergeleitet wird, verwirft die Verarbeitungseinheit einen auf die Stelle des verschlüsselten Teils nachfolgenden restlichen Teil der zweiten Version und leitet stattdessen einen auf die Stelle des verschlüsselten Teils nachfolgenden restlichen Teil der ersten Version zur Verschlüsselung an die Verschlüsselungseinheit des ersten Prozessorchips. Die Verschlüsselungseinheit kann ebenfalls wie die Entschlüsselungseinheit des ersten Prozessorchips eine Speichereinheit aufweisen, beispielsweise die oben genannte Verschlüsselungseinheit-Speichereinheit, um mit der Verschlüsselung erst zu beginnen, wenn die erforderliche Datenblockgröße des zu verschlüsselnden Telegrammabschnitts in der Verschlüsselungseinheit-Speichereinheit zwischengespeichert ist. Die Verschlüsselungseinheit des ersten Prozessorchips leitet den verschlüsselten Telegrammabschnitt an den Ausgangs-Port weiter. Damit der unverschlüsselte Teil der beiden Duplikate dann nicht doppelt gesendet wird, muss die Verarbeitungseinheit zum Beispiel den unverschlüsselten Teil der ersten Version verwerfen, wenn die Verarbeitungseinheit den unverschlüsselten Teil der zweiten Version bereits weitergeleitet hat.

Das Zusammenfügen der einzelnen Telegrammabschnitte vor der Ausgabe über den Ausgangs-Port, also das Verbinden des unverschlüsselten Teils der zweiten Version sowie des nach der Verarbeitung des entschlüsselten Teils der ersten Version wieder verschlüsselten Teils der ersten Version und des auf den verschlüsselten Teils der ersten Version folgenden restlichen Teils des Telegramms kann durch eine Komponente des ersten Prozessorchips erfolgen, die zwischen der Verarbeitungseinheit und dem Ausgangs-Port angeordnet ist. Alternativ kann der Ausgangs-Port die genannte Komponente, die die Telegrammabschnitte vor der Ausgabe an den nachfolgenden Slaveteilnehmer verbindet selbst aufweisen. Zusätzlich ist denkbar, dass die genannte Komponente in der Verarbeitungseinheit integriert ist und die Verschlüsselungseinheit einen verschlüsselten Teil des Telegramms dann wieder an die Verarbeitungseinheit weiterleitet.

Gemäß einer weiteren Ausführungsform ist die Empfangslogik ausgelegt, eine erste Version und eine zweite Version eines zumindest teilweise verschlüsselten Telegramms durch Duplizierung des zumindest teilweise verschlüsselten Telegramms zu erzeugen. Die Empfangslogik ist ausgelegt, die erste Version an die Entschlüsselungseinheit und die zweite Version an die Verarbeitungseinheit weiterzuleiten. Die Verarbeitungseinheit ist ausgelegt, einen unverschlüsselten Teil der zweiten Version im Durchlauf zu verarbeiten, wobei die Verarbeitung im Durchlauf einen Schreibzugriff oder einen Lesezugriff umfassen kann, und an den Ausgangs-Port weiterzuleiten. Ferner ist die Verarbeitungseinheit ausgelegt, sofern der verschlüsselte Teil der zweiten Version einen Lesezugriff für die Verarbeitungseinheit aufweist, den verschlüsselten Teil der zweiten Version an den Ausgangs-Port weiterzuleiten und den Lesezugriff für den von der Entschlüsselungseinheit entschlüsselten und an die Verarbeitungseinheit weitergeleiteten Teil der ersten Version auszuführen und somit diesen Teil der ersten Version im Durchlauf zu verarbeiten. Sofern der verschlüsselte Teil der zweiten Version einen Telegrammabschnitt mit Lesezugriff für die Verarbeitungseinheit aufwies, wird der verarbeitete Teil des unverschlüsselten Teils der zweiten Version mit dem verschlüsselten Teil der zweiten Version vor der Ausgabe über den Ausgangs-Port verbunden.

Neben einem Schreibdatagramm kann ein Datagramm auch als sogenanntes Lese-Datagramm mit einem Lesezugriff auf den Datenspeicher des Slaveteilnehmers ausgebildet sein. Mit Feststellung des entschlüsselten Teils der ersten Version als Lese-Datagramm mit Lesezugriff kann die Verarbeitungseinheit den Lesezugriff mit dem entschlüsselten Teil der ersten Version parallel zur Weiterleitung der zweiten Version ausführen. Den entschlüsselten Teil der ersten Version sowie den auf die Stelle des entschlüsselten Teils nachfolgenden restlichen Teils der ersten Version kann die Verarbeitungseinheit verwerfen, damit in dem Fall nur die zweite Version an den Ausgangs-Port weitergeleitet wird. Das Zusammenfügen der Telegrammabschnitte vor der Ausgabe über den Ausgangs-Port, also des unverschlüsselten Teils der zweiten Version und des verschlüsselten Teils der zweiten Version sowie des restlichen Teils der zweiten Version kann dabei in ähnlicher Weise zur obenstehenden Erläuterung von einer Komponente ausgeführt werden, daher wird auf die obige Erläuterung verwiesen.

Durch die Duplizierung eines zumindest teilweise verschlüsselten Telegramms kann insgesamt eine schnellere Datenübertragung als ohne Duplizierung eines zumindest teilweise verschlüsselten Telegramms erzielt werden, da keine zusätzliche Durchlaufverzögerungszeit durch den Slaveteilnehmer hinzukommt, die sich aus einer Hardware-Durchlaufzeit ergibt, also der gewöhnlichen Durchlaufzeit durch den einzelnen Slaveteilnehmer für die Verarbeitung eines Telegramms im Durchlauf. Dieser positive Effekt der schnellen Datenübertragung gilt auch für die oben erläuterte Ausführungsform im Zusammenhang mit dem Schreibzugriff. Für die obenstehende Erläuterung ist zudem vorausgesetzt worden, dass die Entschlüsselungseinheit und die Verschlüsselungseinheit des Slaveteilnehmers den passenden Schlüssel aufweisen, mit dem der Masterteilnehmer die Telegramme zumindest teilweise verschlüsselt.

Gemäß einer weiteren Ausführungsform ist die Empfangslogik ausgelegt, eine erste Version und eine zweite Version eines zumindest teilweise verschlüsselten Telegramms durch Duplizierung des zumindest teilweise verschlüsselten Telegramms zu erzeugen. Die Empfangslogik ist ausgelegt, die erste Version an die Entschlüsselungseinheit und die zweite Version an die Verarbeitungseinheit weiterzuleiten. Die Verarbeitungseinheit ist ausgelegt, einen unverschlüsselten Teil der zweiten Version im Durchlauf zu verarbeiten, wobei die Verarbeitung im Durchlauf einen Schreibzugriff oder einen Lesezugriff umfassen kann, und an den Ausgangs-Port weiterzuleiten. Weist ein verschlüsselter Teil der zweiten Version keinen Schreibzugriff für die Verarbeitungseinheit und keinen Lesezugriff für die Verarbeitungseinheit auf, so ist die Verarbeitungseinheit ausgelegt, den verschlüsselten Teil der zweiten Version an den Ausgangs-Port weiterzuleiten. Sofern der verschlüsselte Teil der zweiten Version keinen Telegrammabschnitt mit Schreibzugriff für die Verarbeitungseinheit und keinen Telegrammabschnitt mit Lesezugriff für die Verarbeitungseinheit aufwies, wird der verarbeitete Teil des unverschlüsselten Teils der zweiten Version mit dem verschlüsselten Teil der zweiten Version vor der Ausgabe über den Ausgangs-Port verbunden.

Zur Verbindung der genannten Telegrammabschnitte vor der Ausgabe über den Ausgangs-Port wird auf obenstehende Erläuterung verwiesen. In der genannten Ausführungsform kann die erste Version von der Verarbeitungseinheit verworfen werden und nur die zweite Version über den Ausgangs-Port an den nachfolgenden Slaveteilnehmer weitergeleitet werden. Ein unverschlüsselter Teil des Telegramms mit Schreibzugriff erfordert trotz Änderung der Daten nicht zwingend eine Verschlüsselung vor der Ausgabe an den nachfolgenden Slaveteilnehmer und trägt zur Minimierung der Verzögerung des Telegramms beim Durchlauf durch den Slaveteilnehmer bei.

Je nach Ausführungsform können auch unverschlüsselte Teile der ersten und/oder zweiten Versionen nach der Verarbeitung im Durchlauf seitens der Verarbeitungseinheit zur Verschlüsselung an die Verschlüsselungseinheit weitergeleitet werden. Diese leitet die Teile dann nach erfolgter Verschlüsselung an den Ausgangs-Port weiter.

In einer weiteren Ausführungsform sind die Telegramme als Ethernet Telegramm ausgebildet und weisen jeweils einen Ethernet-Kopfabschnitt mit einem ersten Datenfeld und einen Ethernet-Datenabschnitt auf. In einer ersten Verschlüsselungsmethode ist der Masterteilnehmer ausgelegt, den Ethernet-Datenabschnitt eines Ethernet Telegramms mit dem Schlüssel zu verschlüsseln und die Verschlüsselung des Ethernet-Datenabschnitts wird vom Masterteilnehmer mit einer ersten Telegrammkennung im ersten Datenfeld im Ethernet-Kopfabschnitt angezeigt. Die Empfangslogik des wenigstens einen Slaveteilnehmers ist ausgelegt, die erste Telegrammkennung im Ethernet-Kopfabschnitt auszuwerten.

Die Telegramme können jeweils als Ethernet Telegramme ausgebildet sein. Falls das erste Datenfeld im Ethernet-Kopfabschnitt zum Beispiel als Protokollfeld (Ethertype) ausgebildet ist, kann die erste Telegrammkennung einem bislang ungenutzten Wert des Protokollfelds entsprechen. Das Protokollfeld gibt Auskunft über das verwendete Protokoll der nächsthöheren Schicht innerhalb der Nutzdaten, wobei eine Schicht und eine nächsthöhere Schicht nach dem OSI-Modell (OSI: Open Systems Interconnection), also dem Referenzmodell für Datenübertragungsprotokolle in einer Schichtenarchitektur, definiert sind. Dieser Wert kann sich von den bekannten Werten für das VLAN Tag (VLAN: Virtual Local Area Network) mit 0x8100 (im Hexadezimalsystem), das UDP/IP-Protokoll (UDP/IP: User Datagram Protocol/Internet Protocol) mit 0x0800 (im Hexadezimalsystem) oder das EtherCAT Protokoll 0x88A4 (im Hexadezimalsystem) unterscheiden und einem neuen Wert entsprechen. Der Wert kann der Empfangslogik anzeigen, dass der Ethernet-Datenabschnitt in der ersten Verschlüsselungsmethode vom Masterteilnehmer vollständig verschlüsselt worden ist.

Gemäß einer weiteren Ausführungsform sind die Telegramme als Ethernet Telegramme ausgebildet und weisen jeweils einen Ethernet-Kopfabschnitt und einen Ethernet-Datenabschnitt auf, wobei der Ethernet-Datenabschnitt einen weiteren Kopfabschnitt und Datagramme umfasst. Der weitere Kopfabschnitt kann als ein EtherCAT-Kopfabschnitt ausgebildet sein und ein zweites Datenfeld aufweisen. Der Masterteilnehmer ist in der zweiten Verschlüsselungsmethode ausgelegt, wenigstens ein Datagramm mit dem Schlüssel zu verschlüsseln und die Verschlüsselung des wenigstens einen Datagramms wird vom Masterteilnehmer mit einer zweiten Telegrammkennung in dem zweiten Datenfeld des EtherCAT Kopfabschnitts angezeigt. Die Empfangslogik des wenigstens einen Slaveteilnehmers ist ausgelegt, die zweite Telegrammkennung im weiteren Kopfabschnitt auszuwerten.

Die zweite Telegrammkennung im zweiten Datenfeld kann, wenn das zweite Datenfeld für ein EtherCAT Telegramm als EtherCAT Typfeld ausgebildet ist, einem bislang ungenutzten Wert des Typfelds entsprechen. Das Typfeld kann 4 Bit umfassen, also 16 (2⁴ = 16) unterschiedliche Werte aufweisen. Der Wert 0x1 (im Hexadezimalsystem) des EtherCAT Typfelds ist bereits reserviert und zeigt der Verarbeitungseinheit die Freigabe der Verarbeitung an. Da auch eine Sperrung der Verarbeitung eines EtherCAT Telegramms über einen bereits reservierten Wert des EtherCAT Typfelds möglich ist, muss sich der Wert der zweiten Telegrammkennung für die Anzeige der Verschlüsselung des EtherCAT-Abschnitts, der wenigstens ein Datagramm umfasst, davon unterscheiden. Neben der zweiten Telegrammkennung ist für die Verschlüsselung des wenigstens einen Datagramms auch noch eine Zusatzinformation erforderlich, die der Empfangslogik und der Entschlüsselungseinheit des Slaveteilnehmers anzeigt, ob der Masterteilnehmer einzelne Datagramme verschlüsselt oder sämtliche Datagramme verschlüsselt hat. Beispielsweise kann diese Zusatzinformation im weiteren Kopfabschnitt, der vorzugsweise als EtherCAT-Kopfabschnitt ausgebildet ist, in einem ersten Reservefeld untergebracht sein, das bislang keine Information umfasst. Die Zusatzinformation kann von der Empfangslogik bzw. der Entschlüsselungseinheit ausgewertet werden.

In einer weiteren Ausführungsform sind die Telegramme als Ethernet Telegramme ausgebildet und weisen jeweils einen Ethernet-Kopfabschnitt und einen Ethernet-Datenabschnitt auf, wobei der Ethernet-Datenabschnitt einen weiteren Kopfabschnitt, der als ein EtherCAT-Kopfabschnitt ausgebildet sein kann, und Datagramme umfasst. Die Datagramme umfassen jeweils einen Datagramm-Kopfabschnitt mit einem dritten Datenfeld und einen Datagramm-Datenabschnitt. Der Masterteilnehmer ist in einer dritten Verschlüsselungsmethode ausgelegt, den Datagramm-Datenabschnitt wenigstens eines Datagramms mit dem Schlüssel zu verschlüsseln und die Verschlüsselung des Datagramm-Datenabschnitts wenigstens eines Datagramms wird von dem Masterteilnehmer mit einer dritten Telegrammkennung in dem dritten Datenfeld des Datagramm-Kopfabschnitts angezeigt. Die Empfangslogik des wenigstens einen Slaveteilnehmers ist ausgelegt, die dritte Telegrammkennung im Datagramm-Kopfabschnitt auszuwerten.

Überdies ist es mit dem vorgeschlagenen Verfahren in Kombination mit der vorgeschlagenen Telegrammausbildung auch möglich, dass vom Masterteilnehmer nur Teile wenigstens eines Datagramms verschlüsselt werden, also jeweils der Datagramm-Datenabschnitt. Der Masterteilnehmer zeigt die Verschlüsselung des Datagramm-Datenabschnitts in der dritten Verschlüsselungsmethode über die dritte Telegrammkennung im dritten Datenfeld des Datagramm-Kopfabschnitts an. Dies kann von der Empfangslogik bzw. der Entschlüsselungseinheit eines Slaveteilnehmers interpretiert werden. Das dritte Datenfeld des Datagramm-Kopfabschnitts kann insbesondere als weiteres Reserve-Datenfeld ausgebildet sein und bislang zum Beispiel ungenutzt sein. Beispielsweise kann das weitere Reserve-Datenfeld im Datagramm-Kopfabschnitt 3 Bits umfassen, wobei damit 8 verschiedene Werte darstellbar sind. Der Masterteilnehmer kann die Verschlüsselung über die dargestellten Verschlüsselungsmethoden daher flexibel für die Slaveteilnehmer einstellen.

Gemäß einer weiteren Ausführungsform sind die Datagramme des Ethernet Datenabschnitts jeweils als Prozessdaten-Datagramme und/oder als Mailbox-Datagramme und/oder als Register-Datagramme ausgebildet. Prozessdaten-Datagramme können im Unterschied für mehrere Slaveteilnehmer bestimmt sein, während Mailbox-Datagramme zum Beispiel nur für einen einzelnen Slaveteilnehmer bestimmt sein können. Register-Datagramme können für einen oder für mehrere Slaveteilnehmer bestimmt sein. Wird der bekannte EtherCAT Standard für die Ausbildung der Telegramme genutzt, die vom Masterteilnehmer an den bzw. die Slaveteilnehmer ausgegeben werden, so kann ein EtherCAT Telegramm jeweils unterschiedliche Datagrammarten aufweisen. Dabei können insbesondere Prozessdaten-Datagramme sowie Register-Datagramme für die Steuerung des Automatisierungsnetzwerks relevante Daten bzw. Informationen umfassen, während Mailbox-Datagramme zum Beispiel im Gegensatz dazu von einem ersten Protokollchip der Verarbeitungseinheit, der beispielsweise als EtherCAT Slave Controller ausgebildet ist, nicht verarbeitet werden. Es ist denkbar, dass die genannten Datagramme alle jeweils verschieden voneinander vom Masterteilnehmer verschlüsselt werden. Sind die einzelnen Datagrammarten alle verschiedenartig verschlüsselt, so ist insbesondere denkbar, dass ein Slaveteilnehmer jeweils mehrere Entschlüsselungseinheiten bzw. Verschlüsselungseinheiten umfasst. Beispielsweise kann pro Datagrammart eine eigene Entschlüsselungseinheit und Verschlüsselungseinheit dafür im Slaveteilnehmer vorgesehen sein, wobei der Slaveteilnehmer dann für jede Datagrammart einen separaten Schlüssel vom Masterteilnehmer erhalten kann. Darüber hinaus ist auch denkbar, dass für jede Datagrammart für jeden Slaveteilnehmer jeweils ein separater Schlüssel zur Entschlüsselung der Datagramme vom Masterteilnehmer ausgegeben wird. Zusätzlich ist denkbar, dass alle Slaveteilnehmer den gleichen Schlüssel vom Masterteilnehmer erhalten.

In einer weiteren Ausführungsform ist der Masterteilnehmer ausgelegt, ein Zeitfenster festzulegen, in dem der Masterteilnehmer zumindest teilweise verschlüsselte Telegramme an den wenigstens einen Slaveteilnehmer ausgibt. Die Empfangslogik ist ausgelegt, das zumindest teilweise verschlüsselte Telegramm im festgelegten Zeitfenster zur Entschlüsselung an die Entschlüsselungseinheit weiterzuleiten. Hierbei kann ein vom Masterteilnehmer verschlüsseltes Telegramm insbesondere vollständig verschlüsselt sein. Dabei kann vollständig in diesem Zusammenhang auch den Ethernet-Kopfabschnitt mit einschließen. Ist ein Netzwerkverteiler im Automatisierungsnetzwerk vorgesehen, so kann dieser aufgrund des verschlüsselten Ethernet-Kopfabschnitts die Informationen für die Weiterleitung des Telegramms nicht auswerten, sofern der Netzwerkverteiler keinen Schlüssel zum Entschlüsseln des Telegramms aufweist. Der Netzwerkverteiler kann aber einen Schlüssel vom Masterteilnehmer erhalten oder dahingehend eingestellt werden, dass der Netzwerkverteiler Telegramme deren Ethernet-Kopfabschnitt nicht auszuwerten sind, generell über einen bestimmten Port ausgibt. Selbstverständlich kann der Masterteilnehmer auch nur Teile eines Telegramms verschlüsseln und diese Telegramme im festgelegten Zeitfenster an den Slaveteilnehmer ausgeben. Die Empfangslogik kann durch das vom Masterteilnehmer festgelegte Zeitfenster Telegramme schneller intern im Slaveteilnehmer zur Entschlüsselung weiterleiten.

Gemäß einer weiteren Ausführungsform ist der Masterteilnehmer ausgelegt, vor dem Versenden der zumindest teilweise verschlüsselten Telegramme ein Umschalttelegramm an den wenigstens einen Slaveteilnehmer auszugeben. Die Empfangslogik ist ausgelegt, nach dem Empfang des Umschalttelegramms das zumindest teilweise verschlüsselten Telegramm zur Entschlüsselung an die Entschlüsselungseinheit weiterzuleiten. Auch für diese Variante des vorgeschlagenen Verfahrens kann der Masterteilnehmer die Telegramme jeweils vollständig verschlüsseln, also inklusive des Ethernet-Kopfabschnitts, wie oben erläutert. Das Umschalttelegramm kann dabei zum Beispiel ebenfalls als EtherCAT Telegramm ausgebildet sein, falls der Telegrammverkehr im Steuerungsbetrieb ebenfalls auf EtherCAT Telegrammen basiert.

In einer weiteren Ausführungsform ist die Empfangslogik ausgelegt, vom Masterteilnehmer zumindest teilweise verschlüsselte Telegramme und vom Masterteilnehmer unverschlüsselte Telegramme auf der Grundlage einer Ausbildung der Telegramme zu unterscheiden, bei der jeweils ein Kopfabschnitt der zumindest teilweise verschlüsselten Telegramme verschieden von einem Kopfabschnitt der unverschlüsselten Telegramme ausgebildet ist. Zum Beispiel kann der Masterteilnehmer eine Präambel, also einen Abschnitt, der sich an der ersten Stelle im Ethernet-Kopfabschnitt eines zumindest teilweise verschlüsselten Telegramms befindet, entsprechend kennzeichnen und die Empfangslogik mit der Kennzeichnung einstellen, damit diese ein zumindest teilweise verschlüsseltes Telegramm mit erkannter Kennzeichnung in einer ersten Einstellung beispielsweise exklusiv an die Entschlüsselungseinheit weiterleitet. Eine abweichende Kennzeichnung der Präambel und Einstellung der Empfangslogik kann beispielsweise zur Erzeugung einer ersten Version und einer zweiten Version eines zumindest teilweise verschlüsselten Telegramms durch Duplizierung des zumindest teilweise verschlüsselten Telegramms in einer zweiten Einstellung der Empfangslogik führen. Hierbei kann die Empfangslogik die erste Version zum Beispiel an die Entschlüsselungseinheit und die zweite Version zum Beispiel an die Verarbeitungseinheit weiterleiten. Darüber hinaus kann der Masterteilnehmer die Präambel eines unverschlüsselten Telegramms verschieden von der Präambel der ersten Einstellung der Empfangslogik bzw. verschieden von der zweiten Einstellung der Empfangslogik bzw. verschieden von der Ausbildung der Präambel eines zumindest teilweise verschlüsselten Telegramms ausbilden. Alternativ ist zudem denkbar, dass der Masterteilnehmer die Unterscheidung der genannten Varianten nicht auf der Grundlage der verschiedenen Ausbildungen der Präambel im Ethernet-Kopfabschnitt der Telegramme vornimmt, sondern zum Beispiel in einem anderen Datenfeld im Ethernet-Kopfabschnitt. Durch ein Unterscheidungsmerkmal im Ethernet-Kopfabschnitt kann die Empfangslogik eine frühestmögliche Entscheidung für die Weiterleitung oder Duplizierung eines Telegramms treffen, da die Empfangslogik den Ethernet-Kopfabschnitt zuerst auswertet.

In einer weiteren Ausführungsform umfasst der Slaveteilnehmer einen ersten Prozessorchip und einen zweiten Prozessorchip, wobei der erste Prozessorchip die Verarbeitungseinheit umfasst. Der erste Prozessorchip ist als EtherCAT Slave Controller und der zweite Prozessorchip ist als Mikrocontroller ausgebildet. Der EtherCAT Slave Controller umfasst eine Schnittstelle und ist über die Schnittstelle mit dem Mikrocontroller verbunden. Der Masterteilnehmer ist ausgelegt, jeweils die vertrauenswürdige Verbindung zu der Schnittstelle des EtherCAT Slave Controllers des Slaveteilnehmers aufzubauen, um den Schlüssel, mit dem der Masterteilnehmer die Telegramme zumindest teilweise verschlüsselt, mit dem Verschlüsselungsprotokoll zu verschlüsseln und über die vertrauenswürdige Verbindung an den EtherCAT Slave Controller des Slaveteilnehmers zu übertragen. Der EtherCAT Slave Controller ist ausgelegt, den mit dem Verschlüsselungsprotokoll verschlüsselten Schlüssel über die Schnittstelle an den Mikrocontroller weiterzuleiten. Der Mikrocontroller ist ausgelegt, den mit dem Verschlüsselungsprotokoll vom Masterteilnehmer verschlüsselten Schlüssel zu entschlüsseln und den Schlüssel an die Entschlüsselungseinheit und an die Verschlüsselungseinheit weiterzuleiten.

Nachfolgend wird unter der Entschlüsselungseinheit und der Verschlüsselungseinheit die Entschlüsselungseinheit und die Verschlüsselungseinheit verstanden, die der erste Prozessorchip, also der EtherCAT Slave Controller aufweist. Vorzugsweise weist der erste Prozessorchip die Entschlüsselungseinheit und Verschlüsselungseinheit für Prozessdaten-Datagramme und Register-Datagramme auf. Insbesondere können die genannte Entschlüsselungseinheit und Verschlüsselungseinheit des ersten Prozessorchips zur Entschlüsselung und/oder Verschlüsselung von Prozessdaten-Datagrammen und Register-Datagrammen vorgesehen sein. Weiterhin kann der zweite Prozessorchip ebenfalls eine weitere Entschlüsselungseinheit und eine weitere Verschlüsselungseinheit aufweisen, wobei die weitere Entschlüsselungseinheit und die weitere Verschlüsselungseinheit insbesondere für die Entschlüsselung und Verschlüsselung von Mailbox-Datagrammen vorgesehen sind. Auch kann die weitere Entschlüsselungseinheit des zweiten Prozessorchips für die Entschlüsselung des geheimen Schlüssels vorgesehen sein, der vom Masterteilnehmer an den Slaveteilnehmer übertragen wird, damit der Slaveteilnehmer die vom Masterteilnehmer mit dem Schlüssel zumindest teilweise verschlüsselten Telegramme wieder entschlüsseln kann.

Der geheime Schlüssel, mit dem der Masterteilnehmer die Telegramme jeweils zumindest teilweise verschlüsselt, wird vom Masterteilnehmer vor dem Versenden der zumindest teilweise verschlüsselten Telegramme über eine vertrauenswürdige Verbindung an den Slaveteilnehmer übertragen. Um die vertrauenswürdige Verbindung zu erlangen, baut der Masterteilnehmer zunächst eine Verbindung zum Slaveteilnehmer auf. Nach erfolgter Authentifikation des Masterteilnehmers und des Slaveteilnehmers, beispielsweise mithilfe von Zertifikaten, können die beiden Verbindungspartner als vertrauenswürdig eingestuft werden. Daten können dann mithilfe eines Verschlüsselungsprotokolls verschlüsselt über die vertrauenswürdige Verbindung übertragen werden. Die für die vertrauenswürdige Verbindung genutzte Verschlüsselung kann als Punkt-zu-Punkt-Verschlüsselung ausgebildet sein, das heißt jeweils die Teilstrecke zwischen Masterteilnehmer und Slaveteilnehmer kann verschlüsselt sein.

Die verschlüsselte Übertragung von Daten kann zum Beispiel mithilfe des TLS-Protokolls (TLS: Transport Layer Security) über Mailbox-Datagramme eines EtherCAT Telegramms verwirklicht werden. So kann ein Mailbox-Datagramm zum Beispiel jeweils einen Schlüssel umfassen, der mit dem TLS-Protokoll verschlüsselt an den Slaveteilnehmer übertragen werden kann. Der erste Prozessorchip eines Slaveteilnehmers in einem EtherCAT Netzwerk, also in einem Automatisierungsnetzwerk in dem der Telegrammverkehr auf dem EtherCAT Standard beruht, kann zum Beispiel dahingehend ausgelegt sein, dass der erste Prozessorchip das mit dem TLS-Protokoll verschlüsselte Mailbox-Datagramm nicht verarbeiten bzw. entschlüsseln kann. Mailbox-Datagramme werden zur Verarbeitung bzw. Entschlüsselung vom ersten Prozessorchip jedoch über die erste Schnittstelle an den zweiten Prozessorchip, also den Mikrocontroller übertragen.

Der Mikrocontroller kann das mit dem TLS-Protokoll verschlüsselte Mailbox-Datagramm eines EtherCAT Telegramms zum Beispiel mit der weiteren Entschlüsselungseinheit entschlüsseln, um den geheimen Schlüssel des Masterteilnehmers zu erhalten und kann weiterhin dazu ausgelegt sein, den geheimen Schlüssel intern an die Entschlüsselungseinheit bzw. die Verschlüsselungseinheit des ersten Prozessorchips weiterzuleiten. Die Entschlüsselungs- bzw. die Verschlüsselungseinheit des ersten Prozessorchips kann den Schlüssel zum Beispiel jeweils in einem speziellen Register ablegen, das als nicht lesbar ausgebildet ist, sodass keine anderen Teilnehmer des Automatisierungsnetzwerks oder andere interne Komponenten des Slaveteilnehmers darauf zugreifen können, sondern nur die Entschlüsselungs- und/oder Verschlüsselungseinheit des ersten Prozessorchips selbst zur Entschlüsselung bzw. Verschlüsselung. Damit ist der geheime Schlüssel im Slaveteilnehmer selbst von außen nicht "sichtbar". Auf diese Weise kann die Vertraulichkeit bei der Datenübertragung mittels Telegrammen in vorteilhafter Weise verbessert werden. Die Verarbeitungseinheit kann als Software-Modul, als Hardware-Modul und gleichermaßen auch als kombiniertes Hard- und Software-Modul umgesetzt sein.

In einer weiteren Ausführungsform weist die Entschlüsselungseinheit des ersten Prozessorchips des Slaveteilnehmers eine Speichereinheit auf, die mit der Empfangslogik verbunden ist. Die Entschlüsselungseinheit ist ausgelegt, den verschlüsselten Teil des vom Masterteilnehmer zumindest teilweise verschlüsselten Telegramms in der Speichereinheit zwischen zu speichern, bis der verschlüsselte Teil des zumindest teilweise verschlüsselten Telegramms einer vorgegebenen Länge in Byte entspricht. Die vorgegebene Länge in Byte entspricht einer Datenblockgröße, mit der der Masterteilnehmer jeweils Datenblöcke eines Telegramms verschlüsselt. Ein vom Masterteilnehmer zumindest teilweise verschlüsseltes Telegramm muss von dem jeweiligen Slaveteilnehmer in vorteilhafter Weise nicht erst vollständig empfangen werden und kann erst im Anschluss daran entschlüsselt werden, sondern kann von der Entschlüsselungseinheit des ersten Prozessorchips im Durchlauf, also parallel zum fortlaufenden Empfang über den Eingangs-Port des Slaveteilnehmers entschlüsselt werden. Dazu muss die Entschlüsselungseinheit des ersten Prozessorchips das zumindest teilweise verschlüsselte Telegramm lediglich geringfügig in der Speichereinheit der Entschlüsselungseinheit verzögern, also zwischenspeichern, bis der empfangene Teil des vom Masterteilnehmer zumindest teilweise verschlüsselten Telegramms der vorgegebenen Länge in Byte entspricht, das heißt der Datenblockgröße, mit der der Masterteilnehmer Datenblöcke eines Telegramms verschlüsselt. Die Verzögerung des empfangenen Teils des zumindest teilweise verschlüsselten Telegramms in der Speichereinheit der Entschlüsselungseinheit des ersten Prozessorchips ist dabei in vorteilhafter Weise kalkulierbar.

Gemäß einer weiteren Ausführungsform ist die Entschlüsselungseinheit des ersten Prozessorchips ausgelegt, wenn in der Speichereinheit mindestens die vorgegebene Länge in Byte von dem verschlüsselten Teil des zumindest teilweise verschlüsselten Telegramms zwischengespeichert worden ist, den verschlüsselten Teil des zumindest teilweise verschlüsselten Telegramms zu entschlüsseln. Dies erfordert keinen vollständigen Empfang des zumindest teilweise verschlüsselten Telegramms vor der Entschlüsselung. Das vorgeschlagene Verfahren kann also trotz eingesetzter Verschlüsselung weiterhin kurze Durchlaufzeiten der Telegramme durch die einzelnen Slaveteilnehmer gewährleisten.

In einer weiteren Ausführungsform weist die Verschlüsselungseinheit eine Verschlüsselungseinheit-Speichereinheit auf, die mit dem Ausgangs-Port verbunden ist. Die Verschlüsselungseinheit des ersten Prozessorchips ist ausgelegt, den entschlüsselten Teil des zumindest teilweise verschlüsselten Telegramms in der Verschlüsselungseinheit-Speichereinheit zwischen zu speichern, bis der entschlüsselte Teil des zumindest teilweise verschlüsselten Telegramms der vorgegebenen Länge in Byte entspricht. Weiterhin ist die Verschlüsselungseinheit ausgelegt, den entschlüsselten Teil des zumindest teilweise verschlüsselten Telegramms zu verschlüsseln, sofern der entschlüsselte Teil des zumindest teilweise verschlüsselten Telegramms in der Verschlüsselungseinheit-Speichereinheit mindestens der vorgegebenen Länge in Byte entspricht, also der Datenblockgröße. Die Verschlüsselungseinheit-Speichereinheit kann in vorteilhafter Weise ähnlich zur Speichereinheit der Entschlüsselungseinheit des ersten Prozessorchips ausgebildet sein. Beide Komponenten können jeweils in die Entschlüsselungseinheit oder in die Verschlüsselungseinheit integriert sein oder in Form separater Komponenten ausgebildet sein. Insbesondere weist die Verschlüsselungseinheit-Speichereinheit die oben genannten Vorteile für die Speichereinheit der Entschlüsselungseinheit auf.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 einen schematischen Aufbau eines Automatisierungsnetzwerks mit Netzwerkteilnehmern;
Figur 2 ein erstes Ablaufdiagramm für ein Verfahren zum Verarbeiten von Telegrammen in dem Automatisierungsnetzwerk gemäß einer ersten Ausführungsform;
Figur 3 ein zweites Ablaufdiagramm für ein Verfahren zum Verarbeiten von Telegrammen in dem Automatisierungsnetzwerk gemäß einer zweiten Ausführungsform;
Figur 4 einen schematischen Aufbau eines als Slaveteilnehmer ausgebildeten Netzwerkteilnehmers und
Figur 5 einen schematischen Aufbau einer Datenstruktur zur Verwendung in einem Verfahren in dem Automatisierungsnetzwerk.

Es wird darauf hingewiesen, dass die Figuren lediglich schematischer Natur und nicht maßstabsgetreu sind. In diesem Sinne können in den Figuren gezeigte Komponenten und Elemente zum besseren Verständnis übertrieben groß oder verkleinert dargestellt sein. Ferner wird darauf hingewiesen, dass die Bezugszeichen in den Figuren unverändert gewählt worden sind, wenn es sich um gleich ausgebildete Elemente und/oder Komponenten handelt.

Automatisierungsnetzwerke 100 sind üblicherweise als Feldbussysteme verwirklicht, bei denen die Netzwerkteilnehmer 300 über den Feldbus miteinander vernetzt sind. Die Netzwerkteilnehmer 300 können als wenigstens ein Masterteilnehmer 105 und als wenigstens ein Slaveteilnehmer 110 ausgebildet sein. Die genannten Netzwerkteilnehmer 300 können dazu ausgelegt sein mit Steuerungseinheiten Daten austauschen, wobei dazu in der Regel echtzeitfähige Datenübertragungsprotokolle wie beispielsweise das EtherCAT Datenübertragungsprotokoll eingesetzt werden. Die Erfindung wird nachfolgend beispielhaft anhand des echtzeitfähigen EtherCAT Datenübertragungsprotokolls erläutert.

Die Kernidee der vorliegenden Erfindung liegt in der Bereitstellung eines Verfahrens, das es ermöglicht, zumindest teilweise verschlüsselte Telegramme, die für den Steuerungsbetrieb des Automatisierungsnetzwerks 100 relevante Informationen bzw. Daten umfassen können, parallel zum fortlaufenden Empfang, also im Durchlauf, zu entschlüsseln und den entschlüsselten Teil der Telegramme jeweils im Durchlauf zu verarbeiten. Ein dafür entwickeltes Automatisierungsnetzwerk 100, sowie ein dafür entwickelter Masterteilnehmer 105 und ein dafür entwickelter Slaveteilnehmer 110 dienen dabei zur Umsetzung des vorgeschlagenen Verfahrens und der Verarbeitung von zumindest teilweise verschlüsselten Telegrammen.

Die Erfindung ist hierbei nicht auf die Verwendung des EtherCAT Datenübertragungsprotokolls beschränkt, auch wenn dies das bevorzugte Datenübertragungsprotokoll darstellt, sondern kann in allen Automatisierungsnetzwerken 100 eingesetzt werden, in denen zumindest teilweise verschlüsselte Telegramme eines Masterteilnehmers 105 im Durchlauf zur Verarbeitung von den Slaveteilnehmern 110 entschlüsselt werden sollen.

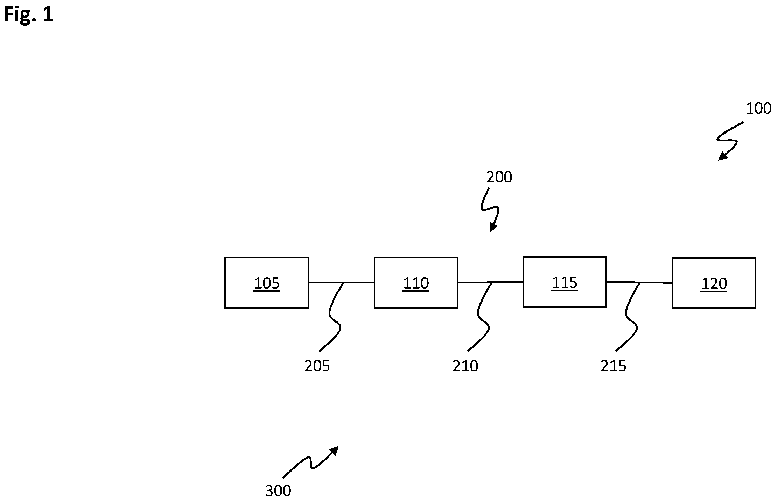

Der Aufbau und die Funktionsweise des erfindungsgemäßen Automatisierungsnetzwerks 100 wird nachfolgend anhand der Figuren 1 bis 5 beschrieben, wobei in der Beschreibung, sofern sinnvoll und erforderlich, die zugehörigen Bezugszeichen aus den fünf Figuren Verwendung finden.

Figur 1 zeigt einen schematischen Aufbau eines Automatisierungsnetzwerks 100 mit Netzwerkteilnehmern 300, das für ein Verfahren zum Verarbeiten von Telegrammen in dem Automatisierungsnetzwerk 100 ausgelegt ist. Das Automatisierungsnetzwerk 100 umfasst mehrere Netzwerkteilnehmer 300, die über ein Datenleitungsnetz 200 miteinander verbunden sind. Wenigstens ein Netzwerkteilnehmer 300 des Automatisierungsnetzwerks 100 ist als ein Masterteilnehmer 105 ausgebildet und wenigstens ein Netzwerkteilnehmer 300 des Automatisierungsnetzwerks 100 ist als ein Slaveteilnehmer 110 ausgebildet. Die Netzwerkteilnehmer 300 des Automatisierungsnetzwerks 100 sind also in Form einer Master-Slave-Struktur ausgebildet. Die Master-Slave-Struktur bildet dabei die Zugriffshierarchie auf das Datenleitungsnetz 200 ab, das heißt der Masterteilnehmer 105 besitzt die Zugriffsberechtigung auf das Datenleitungsnetz 200 und kann den Slaveteilnehmern 110 im Automatisierungsnetzwerk 100 jeweils einen Zugriff einräumen. Der Masterteilnehmer 105 ist über eine erste Datenleitung 205 mit dem Slaveteilnehmer 110 verbunden. Der Slaveteilnehmer 110 kann über eine zweite Datenleitung 210 mit einem ersten weiteren Slaveteilnehmer 115 verbunden sein. Über eine dritte Datenleitung 215 kann der erste weitere Slaveteilnehmer 115 mit einem zweiten weiteren Slaveteilnehmer 120 verbunden sein. Die Darstellungen der Netzwerkteilnehmer 300 sowie der ersten bis dritten Datenleitungen 205, 210, 215 sind beispielhaft gewählt worden und schränken die Erfindung nicht auf diese ein. Auch wurden zur Vereinfachung keine Ein-/Ausgangs-Ports der einzelnen Netzwerkteilnehmer 300 eingezeichnet, gleichwohl diese Netzwerkteilnehmer 300 Ein-/Ausgangs-Ports zum Empfang und zum Weiterleiten von Telegrammen aufweisen. Auch könnte das Automatisierungsnetzwerk 100 in Figur 1 weitere Netzwerkteilnehmer 300 aufweisen, die nicht dargestellt sind. Dies können weitere Slaveteilnehmer 110 und/oder ein oder mehrere Netzwerkverteiler sein, wobei an den Ports des einen oder der mehreren Netzwerkverteiler Slaveteilnehmer 110 über weitere Datenleitungen angeschlossen sein können.

In dem in Figur 1 dargestellten Automatisierungsnetzwerk 100 kann der Slaveteilnehmer 110 zum Entschlüsseln und Verarbeiten von Telegrammen im Durchlauf ausgebildet sein, die vom Masterteilnehmer 105 mit einem Schlüssel zumindest teilweise verschlüsselt werden. Der Slaveteilnehmer 110 kann dazu ausgelegt sein, die Telegramme von dem Masterteilnehmer 105 mit dem Schlüssel in einer Entschlüsselungseinheit 415 parallel zum fortlaufenden Empfang des vom Masterteilnehmer 105 zumindest teilweise verschlüsselten Telegramms zu entschlüsseln. Dabei können der Schlüssel, mit dem der Masterteilnehmer 105 die Telegramme zumindest teilweise verschlüsselt und der Schlüssel, mit dem der Slaveteilnehmer 110 die Telegramme jeweils im Durchlauf, also parallel zum fortlaufenden Empfang über einen in Figur 1 nicht gezeigten Eingangs-Port 400 entschlüsseln kann, symmetrisch ausgebildet sein. Das heißt der Masterteilnehmer 105 und der Slaveteilnehmer 110 können jeweils den gleichen Schlüssel zum Verschlüsseln bzw. Entschlüsseln nutzen und die Verschlüsselung somit in Form einer symmetrischen Verschlüsselung verwirklicht sein. Darüber hinaus ist ebenfalls denkbar, dass sich die Schlüssel voneinander unterscheiden können und im Automatisierungsnetzwerk 100 eine asymmetrische Verschlüsselung implementiert ist beziehungsweise ist überdies auch denkbar, ein Hybridverfahren, das eine symmetrische Verschlüsselung mit einer asymmetrischen Verschlüsselung miteinander kombiniert, im Automatisierungsnetzwerk 100 einzusetzen.

Neben der Entschlüsselung eines zumindest teilweise vom Masterteilnehmer 105 verschlüsselten Telegramms, das für den Steuerungsbetrieb des Automatisierungsnetzwerks 100 erforderliche Daten bzw. Informationen umfassen kann, durch den Slaveteilnehmer 110 im Durchlauf, kann der Slaveteilnehmer 110 den entschlüsselten Teil des Telegramms auch im Durchlauf verarbeiten. Dabei bezieht sich die Verarbeitung eines Telegramms, das vorzugsweise als EtherCAT Telegramm ausgebildet ist, auf das Auslesen der an den Slaveteilnehmer 110 adressierten Ausgangsdaten des Telegramms, sowie das Einfügen von Eingangsdaten in das Telegramm und das Weiterleiten an den nachfolgenden ersten weiteren Slaveteilnehmer 115. Insbesondere ein EtherCAT Telegramm kann in einem Ethernet-Datenabschnitt 510 des Telegramms einen EtherCAT-Kopfabschnitt 525 und eine Mehrzahl an Datagrammen aufweisen. Ein Datagramm wiederum kann weiterhin in einen Datagramm-Kopfabschnitt 590 und in einen Datagramm-Datenabschnitt 595 unterteilt sein. Auch kann die Mehrzahl an Datagrammen unterschiedlich ausgebildet sein. So kann ein EtherCAT Telegramm zum Beispiel jeweils Datagramme in Form von Prozessdaten-Datagrammen und/oder Register-Datagrammen und/oder Mailbox-Datagrammen umfassen. Insbesondere Prozessdaten-Datagramme sowie Register-Datagramme können dabei in ihren Datagramm-Datenabschnitten 595 für den Steuerungsbetrieb des Automatisierungsnetzwerks 100 relevante Daten bzw. Informationen aufweisen, die der Masterteilnehmer 105 auf diese Weise mit den Slaveteilnehmern im Automatisierungsnetzwerk 100 austauschen kann. Die Prozessdaten-Datagramme sowie die Register-Datagramme können jeweils mit einem Schreibzugriff, einem Lesezugriff oder einem kombinierten Schreib-/Lesezugriff ausgebildet sein. Wird im Folgenden also von vom Masterteilnehmer 105 zumindest teilweise verschlüsselten Telegrammen oder von EtherCAT Telegrammen gesprochen, so sind damit stets die genannten Datagrammarten mit umfasst.

Auch der erste weitere Slaveteilnehmer 115 sowie der zweite weitere Slaveteilnehmer 120 können ähnlich zu dem Slaveteilnehmer 110 ausgelegt sein. Dann gilt die obige Beschreibung für den ersten weiteren Slaveteilnehmer 115 sowie den zweiten weiteren Slaveteilnehmer 120 gleichermaßen und soll an dieser Stelle nicht wiederholt werden. Der zweite weitere Slaveteilnehmer 120 kann über einen weiteren Ein-/Ausgangs-Port, an dem kein nachfolgender Netzwerkteilnehmer 300 angeschlossen und der in Figur 1 nicht gezeigt ist, mit einem Schalter kurzgeschlossenen worden sein, sodass der zweite weitere Slaveteilnehmer 120 den letzten Netzwerkteilnehmer 300 in der Kette bildet. Daraufhin sendet der zweite weitere Slaveteilnehmer 120 ein vom Masterteilnehmer 105 erhaltenes Telegramm, das vorzugsweise als EtherCAT Telegramm ausgebildet ist und vorher den Slaveteilnehmer 110 sowie den ersten weiteren Slaveteilnehmer 115 durchlaufen hat, aufgrund des mit dem Schalter kurzgeschlossenen weiteren Ein-/Ausgangs-Ports an den Masterteilnehmer 105 zurück. Die Hinleitung sowie die Rückleitung, die das Datenleitungsnetz 200 umfasst, sind in Figur 1 nicht gezeigt.

Ein EtherCAT Netzwerk, also ein Automatisierungsnetzwerk 100 bei dem der Telegrammverkehr mit zugrundeliegendem EtherCAT Datenübertragungsprotokoll umgesetzt ist, umfasst in der Regel ein Datenleitungsnetz 200 mit Datenleitungen, die jeweils eine Hinleitung zum Versenden der Telegramme von dem Masterteilnehmer 105 an die Netzwerkteilnehmer 300 und eine Rückleitung, zum Empfang der Telegramme von dem Masterteilnehmer 105, aufweisen. Dies ist aus Übersichtlichkeitsgründen in Figur 1 nicht gezeigt. Ein Netzwerkteilnehmer 300 in einem EtherCAT Netzwerk ist dazu ausgelegt, ein Telegramm, das vorzugsweise als EtherCAT Telegramm ausgebildet ist, auf der Hinleitung zu verarbeiten, also die an den Netzwerkteilnehmer 300 adressierten Ausgangsdaten des Telegramms zu lesen und die Eingangsdaten des Netzwerkteilnehmers 300 in das Telegramm zu legen. Ist das Telegramm zumindest teilweise vom Masterteilnehmer 105 verschlüsselt worden, so kann der Netzwerkteilnehmer 300 zunächst vor der Verarbeitung dazu ausgelegt sein, das zumindest teilweise verschlüsselte Telegramm im Durchlauf in der Entschlüsselungseinheit 415 zu entschlüsseln.

Das Zurücksenden der Telegramme erfolgt in dem EtherCAT Netzwerk über die Rückleitung, wobei die Netzwerkteilnehmer 300 die Telegramme über die Rückleitung nicht verarbeiten. Insbesondere kann der letzte Netzwerkteilnehmer 300 in der Kette gemäß der obigen Erläuterung das vom Masterteilnehmer 105 auf der Hinleitung empfangene Telegramm entschlüsselt haben und über den weiteren Ein-/Ausgangs-Port, der mit dem Schalter mit der Rückleitung kurzgeschlossenen ist, wieder verschlüsselt über die Rückleitung an den Masterteilnehmer 105 versenden. Alternativ ist jedoch auch eine Verarbeitung der Telegramme durch die Netzwerkteilnehmer 300 auf der Rückleitung denkbar.

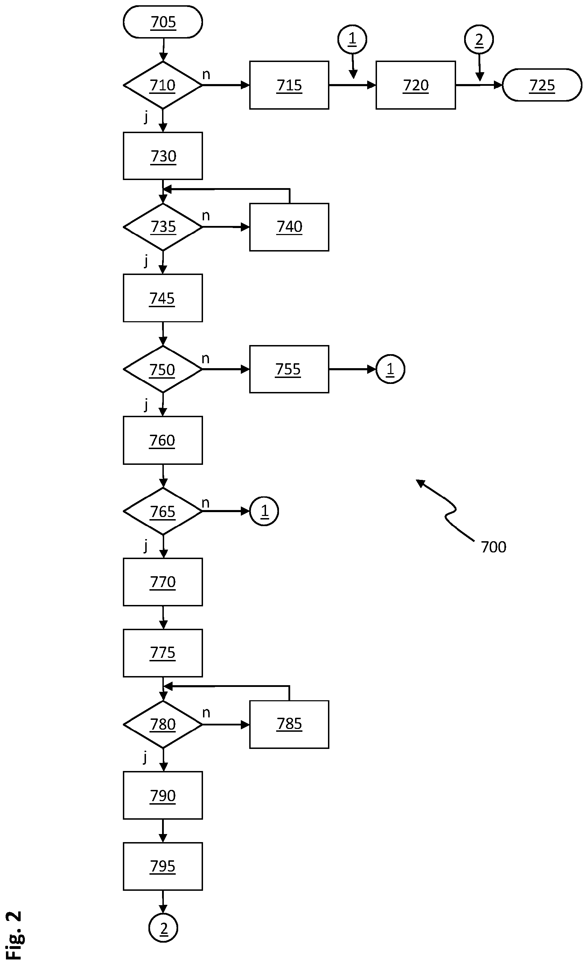

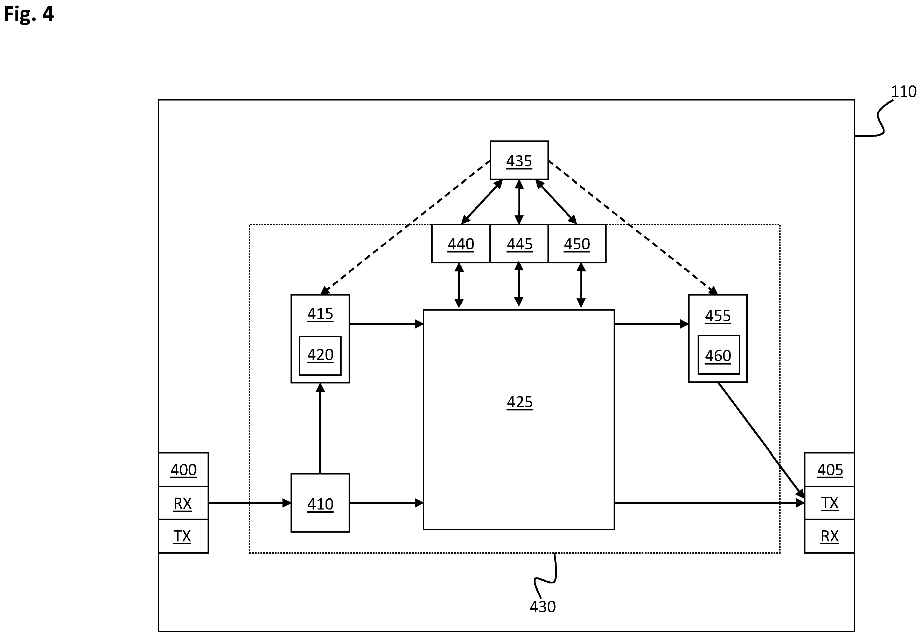

Figur 2 zeigt ein erstes Ablaufdiagramm 700 eines Verfahrens zum Verarbeiten von Telegrammen in dem in Figur 1 gezeigten Automatisierungsnetzwerk 100 gemäß einer ersten Ausführungsform. In der ersten Ausführungsform des Verfahrens weist eine Empfangslogik 410 des Slaveteilnehmers 110 in Figur 4 zum Beispiel eine erste Einstellung auf. Der Masterteilnehmer 105 kann zumindest teilweise verschlüsselte Telegramme und/oder unverschlüsselte Telegramme an den wenigstens einen Slaveteilnehmer 110 ausgeben. Ein erster Verfahrensschritt 705 in Figur 2 stellt den Start des Verfahrens dar. Der erste Verfahrensschritt 705, also der Start, kann mit dem Empfang eines zumindest teilweise verschlüsselten Telegramms über einen Eingangs-Port 400 des Slaveteilnehmers 110 und dem Weiterleiten des zumindest teilweise verschlüsselten Telegramms an die Empfangslogik 410 gleichgesetzt werden. In einem zweiten Verfahrensschritt 710 wird mithilfe einer Verzweigung geprüft, ob die Empfangslogik 410 die erste Einstellung aufweist. Die erste Einstellung der Empfangslogik 410 kann dabei bedeuten, dass die Empfangslogik 410 ein zumindest teilweise verschlüsseltes Telegramm exklusiv an eine Entschlüsselungseinheit 415 des Slaveteilnehmers 110 weiterleitet.

Die erste Einstellung der Empfangslogik 410 kann von Masterteilnehmer 105 vorgenommen werden. Zum Beispiel kann der Masterteilnehmer 105 der Empfangslogik 410 ein Zeitfenster vorgeben, für das die Empfangslogik 410 des Slaveteilnehmers 110 ausgelegt ist, zumindest teilweise verschlüsselte Telegramme exklusiv an die Entschlüsselungseinheit 415 weiterzuleiten. Demnach kann die Empfangslogik 410 in der ersten Einstellung als eine Art Weiche fungieren, die auf das Weiterleiten der zumindest teilweise verschlüsselten Telegramme an die Entschlüsselungseinheit 415 konfiguriert ist. Weiterhin kann der Masterteilnehmer 105 vor dem Versenden der zumindest teilweise verschlüsselten Telegramme ein Umschalttelegramm an den wenigstens einen Slaveteilnehmer 110 ausgeben, mit dem der Masterteilnehmer 105 die Empfangslogik 410 mit der ersten Einstellung konfigurieren kann. Überdies kann der Masterteilnehmer 105 ausgelegt sein, die Empfangslogik 410 einzustellen, dass die Empfangslogik 410 ein zumindest teilweise verschlüsseltes Telegramm für die erste Einstellung der Empfangslogik 410 auf der Grundlage einer Ausbildung eines Kopfabschnitts des zumindest teilweise verschlüsselten Telegramms erkennt und dann an die Entschlüsselungseinheit 415 weiterleitet. Zum Beispiel kann der Masterteilnehmer 105 eine Präambel, also einen Abschnitt, der sich an der ersten Stelle im Kopfabschnitt eines zumindest teilweise verschlüsselten Telegramms befindet, entsprechend kennzeichnen und die Empfangslogik 410 mit der Kennzeichnung einstellen, damit diese ein zumindest teilweise verschlüsseltes Telegramm mit erkannter Kennzeichnung für die erste Einstellung exklusiv an die Entschlüsselungseinheit 415 weiterleitet.

Ergibt die Prüfung im zweiten Verfahrensschritt 710, dass die Empfangslogik 410 nicht die erste Einstellung aufweist, was in der Verzweigung im zweiten Verfahrensschritt 710 mit dem Symbol n gekennzeichnet ist, so ist das vom Masterteilnehmer 105 ausgegebene Telegramm nicht als zumindest teilweise verschlüsseltes Telegramm ausgebildet, sondern als unverschlüsseltes Telegramm, das keine Entschlüsselung durch die Entschlüsselungseinheit 415 erfordert. Bei negativem Prüfungsergebnis des zweiten Verfahrensschritts 710 leitet die Empfangslogik 410 das unverschlüsselte Telegramm in einem dritten Verfahrensschritt 715 zur Verarbeitung im Durchlauf an eine Verarbeitungseinheit 425 des Slaveteilnehmers 110. Die Verarbeitungseinheit 425 leitet das unverschlüsselte Telegramm im einem vierten Verfahrensschritt 720 an den Ausgangs-Port 405 und die Ausgabe des unverschlüsselten Telegramms erfolgt in einem fünften Verfahrensschritt 725, der gleichzeitig auch das Ende des Verfahrens kennzeichnet, über den Ausgangs-Port 405 des Slaveteilnehmers 110 an den nachfolgenden Slaveteilnehmer.

Ergibt die Prüfung des zweiten Verfahrensschritts 710 hingegen, dass die erste Einstellung der Empfangslogik 410 vorliegt, was mithilfe des Symbols j gekennzeichnet ist, so leitet die Empfangslogik 410 das zumindest teilweise verschlüsselte Telegramm in einem sechsten Verfahrensschritt 730 an die Entschlüsselungseinheit 415 zur Entschlüsselung. Der sechste Verfahrensschritt 730 beinhaltet zudem, dass die Entschlüsselungseinheit 415 einen verschlüsselten Teil des zumindest teilweise verschlüsselten Telegramms in einer Speichereinheit 420 zwischenspeichert und nur einen unverschlüsselten Teil an die Verarbeitungseinheit 425 weiterleitet. In einem siebten Verfahrensschritt 735 wird durch die Speichereinheit 420 der Entschlüsselungseinheit 415 in einer Verzweigung geprüft, ob der verschlüsselte Teil des zumindest teilweise verschlüsselten Telegramms, der in der Speichereinheit 420 zwischengespeichert ist, einer Datenblockgröße entspricht, also der Größe eines Datenblocks des Telegramms in Byte, den der Masterteilnehmer 105 für die Verschlüsselung nutzt. Ergibt die Prüfung des siebten Verfahrensschritts 735, dass der in der Speichereinheit 420 der Entschlüsselungseinheit 415 zwischengespeicherte verschlüsselte Teil des zumindest teilweise verschlüsselten Telegramms der Datenblockgröße nicht entspricht, so wartet die Entschlüsselungseinheit 415 in einem achten Verfahrensschritt 740 so lange, bis die erforderliche Mindestgröße in Byte, die mit der Datenblockgröße korrespondiert, des verschlüsselten Teils des zumindest teilweise verschlüsselten Telegramms in der Speichereinheit 420 zwischengespeichert sind. Daher führt der achte Verfahrensschritt 740 auf die Verzweigung, also den siebten Verfahrensschritt 735 zurück.

Ein positives Prüfungsergebnis des siebten Verfahrensschritts 735 ist durch das Symbol j gekennzeichnet und bedeutet, dass die Speichereinheit 420 die Datenblockgröße, also die erforderliche Mindestgröße des verschlüsselten Teils des zumindest teilweise verschlüsselten Telegramms aufweist. Der siebte Verfahrensschritt 735 führt bei positivem Prüfungsergebnis dazu, dass die Entschlüsselungseinheit 415 in einem neunten Verfahrensschritt 745 dazu ausgelegt ist, den verschlüsselten Teil des zumindest teilweise verschlüsselten Telegramms im Durchlauf zu entschlüsseln. Hierbei kann die Entschlüsselungseinheit 415 in einer Verzweigung in einem zehnten Verfahrensschritt 750 prüfen, ob die Entschlüsselungseinheit 415 einen passenden Schlüssel aufweist, mit dem der Masterteilnehmer 105 das Telegramm zumindest teilweise verschlüsselt hat. Ergibt die Prüfung des zehnten Verfahrensschritts 750, dass der Schlüssel der Entschlüsselungseinheit 415 nicht passt, durch das Symbol n gekennzeichnet, so leitet die Entschlüsselungseinheit 415 den verschlüsselten Teil des zumindest teilweise verschlüsselten Telegramms in einem elften Verfahrensschritt 755 an die Verarbeitungseinheit 425 weiter. Die Verarbeitungseinheit 425 kann den verschlüsselten Teil des zumindest teilweise verschlüsselten Telegramms nicht verarbeiten, daher kann sie vom Masterteilnehmer 105 zur Weiterleitung des verschlüsselten Teils des zumindest teilweise verschlüsselten Telegramms an den Ausgangs-Port 405 des Slaveteilnehmers 110 ausgelegt sein, was dem vierten Verfahrensschritt 720 entspricht. Demnach erfolgt nach dem elften Verfahrensschritt 755 ein Sprung mithilfe der ersten Verweisstelle 1 auf den vierten Verfahrensschritt 720. Der fünfte Verfahrensschritt 725 kann im Anschluss, wie oben beschrieben, mit dem verschlüsselten Teil des zumindest teilweise verschlüsselten Telegramms durchgeführt werden.

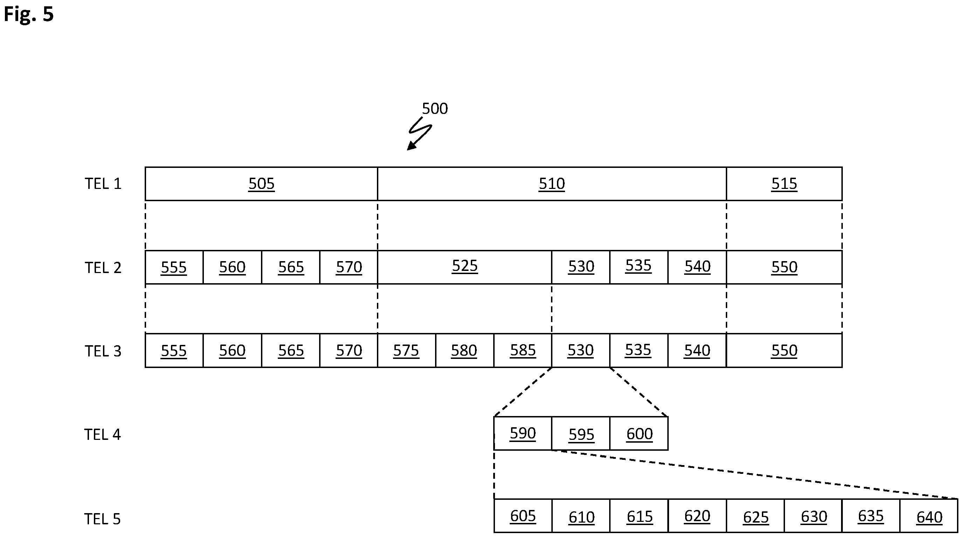

Sofern die Prüfung des zehnten Verfahrensschritts 750 ein positives Ergebnis aufweist, was durch das Symbol j gekennzeichnet ist, entschlüsselt die Entschlüsselungseinheit 415 den verschlüsselten Teil des zumindest teilweise verschlüsselten Telegramms in einem zwölften Verfahrensschritt 760 im Durchlauf mit dem passenden Schlüssel. Weiterhin leitet die Entschlüsselungseinheit 415 den entschlüsselten Teil des zumindest teilweise verschlüsselten Telegramms im zwölften Verfahrensschritt 760 an die Verarbeitungseinheit 425. Die Verarbeitungseinheit 425 prüft daraufhin in einem dreizehnten Verfahrensschritt 765 in einer Verzweigung, ob der Slaveteilnehmer 110 mit dem Telegramm adressiert ist. Dies kann bei einem EtherCAT Telegramm zum Beispiel durch das Auswerten eines Datagramm-Kopfabschnitts 590 in einem Ethernet-Datenabschnitt 510 des Telegramms erfolgen, also durch Auswerten eines Befehlsfeldes 605 eines Adressfeldes 615 und eines zweiten Längenfeldes 620. Auf den Telegrammaufbau wird jedoch erst im Zusammenhang mit der Beschreibung der Figur 5 eingegangen. Sofern der Slaveteilnehmer 110 nicht adressiert ist, wird das Verfahren mithilfe der ersten Verweisstelle 1 mit dem vierten Verfahrensschritt 720 fortgeführt, also der Weiterleitung des Telegramms an den Ausgangs-Port 405. Im Anschluss kann der fünfte Verfahrensschritt 725 wie oben beschrieben durchgeführt werden und das Verfahren beendet sein.

Weist die Prüfung durch die Verarbeitungseinheit 425 im dreizehnten Verfahrensschritt 765 ein positives Ergebnis auf, der Slaveteilnehmer 110 ist also mit dem Telegramm des Masterteilnehmers 105 adressiert, durch das Symbol j gekennzeichnet, so verarbeitet die Verarbeitungseinheit 425 einen unverschlüsselten Teil des zumindest teilweise verschlüsselten Telegramms gleichermaßen wie den entschlüsselten Teil des zumindest teilweise verschlüsselten Telegramms in einem vierzehnten Verfahrensschritt 770. Die Verarbeitung des Telegramms, das im Falle eines EtherCAT Telegramms in dem Ethernet-Datenabschnitt 510 mehrere Datagramme aufweisen kann, durch die Verarbeitungseinheit 425 kann hierbei gegebenenfalls mit einem Austausch von Daten der einzelnen Datagramme mit den in Figur 4 dargestellten ersten Schnittstelle 440, zweiten Schnittstelle 445 und dritten Schnittstelle 450 einhergehen. Dies ist insbesondere denkbar, wenn ein Datagramm mit einem Schreibzugriff in dem Befehlsfeld 605 des Datagramm-Kopfabschnitts 590 ausgebildet ist, um auf einen Datenspeicher des Slaveteilnehmers zuzugreifen, wobei der erste Prozessorchip 430 und/oder der zweite Prozessorchip 435 in Figur 4 einen solchen Datenspeicher aufweisen kann.

Nach der Verarbeitung des entschlüsselten Teils des zumindest teilweise verschlüsselten Telegramms bzw. des unverschlüsselten Teils des zumindest teilweise verschlüsselten Telegramms leitet die Verarbeitungseinheit 425 den entschlüsselten Teil des zumindest teilweise verschlüsselten Telegramms bzw. den unverschlüsselten Teil des zumindest teilweise verschlüsselten Telegramms in einem fünfzehnten Verfahrensschritt 775 an eine Verschlüsselungseinheit 455 weiter. Die Verschlüsselungseinheit 455 prüft ähnlich zur Entschlüsselungseinheit 415 in einer Verzweigung im sechzehnten Verfahrensschritt 780, ob die Datenblockgröße, mit der der Masterteilnehmer 105 die Datenblöcke des Telegramms verschlüsselt hat, in einer Verschlüsselungseinheit-Speichereinheit 460 zwischengespeichert ist. Ähnlich zum achten Verfahrensschritt 740 wird auch ein siebzehnter Verfahrensschritt 785 auf den sechzehnten Verfahrensschritt 780 zurückgeführt, sofern die Prüfung durch die Verschlüsselungseinheit-Speichereinheit 460 ergibt, dass die Datenblockgröße für den in der Verschlüsselungseinheit-Speichereinheit 460 zwischengespeicherten entschlüsselten Teil des zumindest teilweise verschlüsselten Telegramms bzw. den unverschlüsselten Teil des zumindest teilweise verschlüsselten Telegramms noch nicht erreicht, also bereitgestellt ist.

Bei positivem Prüfungsergebnis im sechzehnten Verfahrensschritt 780, durch das Symbol j gekennzeichnet, verschlüsselt die Verschlüsselungseinheit 455 das gesamte Telegramm, also den entschlüsselten Teil und den unverschlüsselten Teil des zumindest teilweise verschlüsselten Telegramms in einem achtzehnten Verfahrensschritt 790. Alternativ kann die Verschlüsselungseinheit im achtzehnten Verfahrensschritt 790 nur den Teil des zumindest teilweise verschlüsselten Telegramms verschlüsseln, der beim Empfang des zumindest teilweise verschlüsselten Telegramms schon verschlüsselt war und von der Entschlüsselungseinheit entschlüsselt worden ist. Anschließend an den achtzehnten Verfahrensschritt 790 wird das verschlüsselte Telegramm in einem neunzehnten Verfahrensschritt 795 an den Ausgangs-Port 405 weitergeleitet. Über die zweite Verweisstelle 2 erfolgt ein Sprung auf den fünften Verfahrensschritt 725, das Ende des Verfahrens, wobei hier das verschlüsselte Telegramm über den Ausgangs-Port 405 an den nachfolgenden Slaveteilnehmer ausgegeben wird.

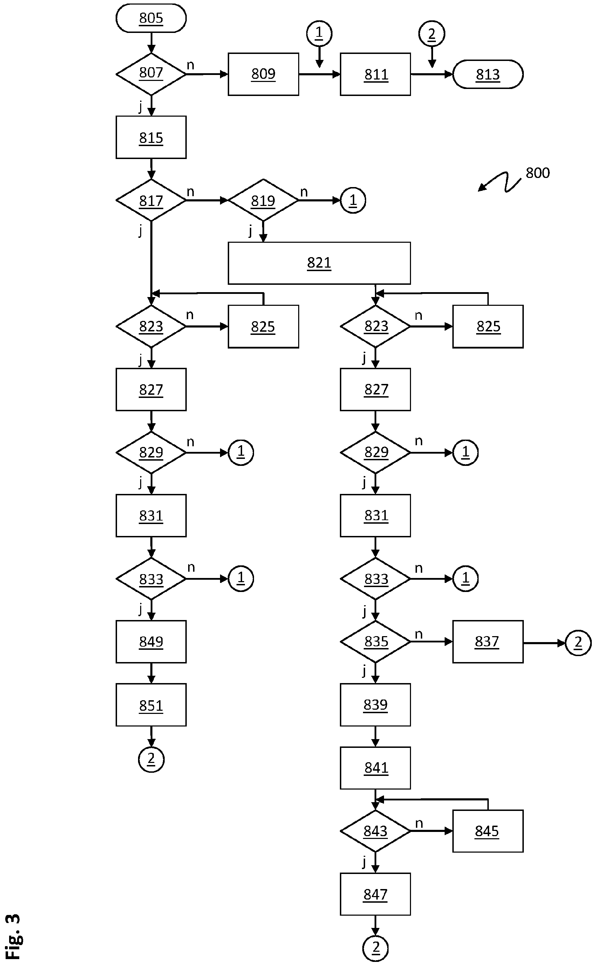

Figur 3 zeigt ein zweites Ablaufdiagramm 800 eines Verfahrens zum Verarbeiten von Telegrammen in dem in Figur 1 gezeigten Automatisierungsnetzwerk 100 gemäß einer zweiten Ausführungsform. In der zweiten Ausführungsform kann die Empfangslogik 410 eine zweite Einstellung aufweisen. Ein erster Schritt 805 in dem zweiten Ablaufdiagramm 800 kann ähnlich zum ersten Verfahrensschritt 705 im ersten Ablaufdiagramm 700 ausgebildet sein und den Start des Verfahrens markieren, also den Empfang eines zumindest teilweise verschlüsselten Telegramms vom Masterteilnehmer 105 über den Eingangs-Port 400 des Slaveteilnehmers 110 und das Weiterleiten des zumindest teilweise verschlüsselten Telegramms an die Empfangslogik 410. In einem zweiten Schritt 807 wird mithilfe einer Verzweigung geprüft, ob die Empfangslogik 410 die zweite Einstellung aufweist. Dabei kann die zweite Einstellung der Empfangslogik 410 bedeuten, dass die Empfangslogik 410 eine erste Version und zweite Version eines zumindest teilweise verschlüsselten Telegramms durch Duplizieren eines zumindest teilweise verschlüsselten Telegramms erzeugt. Die erste Version und die zweite Version sind dabei vorzugsweise identisch ausgebildet.

Die zweite Einstellung der Empfangslogik 410 kann von Masterteilnehmer 105 vorgenommen werden. Zum Beispiel kann der Masterteilnehmer 105 der Empfangslogik 410 ein Zeitfenster vorgeben, für das die Empfangslogik 410 ausgelegt ist, zumindest teilweise verschlüsselte Telegramme zu duplizieren und eine erste Version des zumindest teilweise verschlüsselten Telegramms an die Entschlüsselungseinheit 415 und eine zweite Version des zumindest teilweise verschlüsselten Telegramms an die Verarbeitungseinheit 425 weiterzuleiten. Weiterhin kann der Masterteilnehmer 105 vor dem Versenden der zumindest teilweise verschlüsselten Telegramme ein Umschalttelegramm an den wenigstens einen Slaveteilnehmer 110 ausgeben, mit dem der Masterteilnehmer 105 die Empfangslogik 410 mit der zweiten Einstellung konfigurieren kann. Überdies kann der Masterteilnehmer 105 ausgelegt sein, die Empfangslogik 410 einzustellen, dass die Empfangslogik 410 ein zumindest teilweise verschlüsseltes Telegramm für die zweite Einstellung der Empfangslogik 410 auf der Grundlage einer Ausbildung eines Kopfabschnitts des zumindest teilweise verschlüsselten Telegramms erkennt und dann an die Entschlüsselungseinheit 415 weiterleitet. Zum Beispiel kann der Masterteilnehmer 105 die Präambel eines zumindest teilweise verschlüsselten Telegramms entsprechend kennzeichnen und die Empfangslogik 410 mit der Kennzeichnung einstellen, damit diese ein zumindest teilweise verschlüsseltes Telegramm mit erkannter Kennzeichnung für die zweite Einstellung verdoppelt und die erste Version des verdoppelten zumindest teilweise verschlüsselten Telegramms an die Entschlüsselungseinheit 415 und die zweite Version des verdoppelten zumindest teilweise verschlüsselten Telegramms an die Verarbeitungseinheit 425 weiterleitet.

Ergibt die Prüfung im zweiten Schritt 807, dass die Empfangslogik 410 nicht die zweite Einstellung aufweist, was in der Verzweigung im zweiten Schritt 807 mit dem Symbol n gekennzeichnet ist, so ist das vom Masterteilnehmer 105 ausgegebene Telegramm nicht als zumindest teilweise verschlüsseltes Telegramm ausgebildet, sondern als unverschlüsseltes Telegramm, das keine Entschlüsselung durch die Entschlüsselungseinheit 415 erfordert. Bei negativem Prüfungsergebnis des zweiten Schritts 807 leitet die Empfangslogik 410 das unverschlüsselte Telegramm in einem dritten Schritt 809 zur Verarbeitung im Durchlauf an die Verarbeitungseinheit 425 des Slaveteilnehmers 110. Die Verarbeitungseinheit 425 leitet das unverschlüsselte Telegramm im einem vierten Schritt 811 an den Ausgangs-Port 405 und die Ausgabe des unverschlüsselten Telegramms erfolgt in einem fünften Schritt 813, der gleichzeitig auch das Ende des Verfahrens kennzeichnet, über den Ausgangs-Port 405 des Slaveteilnehmers 110 an den nachfolgenden Slaveteilnehmer. Der dritte Schritt 809 bis fünfte Schritt 813 sind ähnlich zu dem dritten Verfahrensschritt 715 bis fünften Verfahrensschritt 725 in Figur 2 ausgebildet.

Ergibt die Prüfung des zweiten Schritts 807 hingegen, dass die zweite Einstellung der Empfangslogik 410 vorliegt, was mithilfe des Symbols j gekennzeichnet ist, so erzeugt die Empfangslogik 410 zunächst eine erste Version und zweite Version des zumindest teilweise verschlüsselten Telegramms durch Duplizieren des zumindest teilweise verschlüsselten Telegramms. Die Empfangslogik 410 leitet die erste Version des zumindest teilweise verschlüsselten Telegramms in einem sechsten Schritt 815 an die Entschlüsselungseinheit 415 zur Entschlüsselung. Zusätzlich beinhaltet der sechste Schritt 815 das Weiterleiten der zweiten Version des zumindest teilweise verschlüsselten Telegramms von der Empfangslogik 410 an die Verarbeitungseinheit 425. Zudem beinhaltet der sechste Schritt 815, dass die Entschlüsselungseinheit 415 einen verschlüsselten Teil der ersten Version des zumindest teilweise verschlüsselten Telegramms in der Speichereinheit 420 zwischenspeichert und nur einen unverschlüsselten Teil der ersten Version an die Verarbeitungseinheit 425 weiterleitet.

Die Empfangslogik 410 kann beispielsweise für die Erkennung eines Telegrammabschnitts mit Lesezugriff vom Masterteilnehmer 105 eingestellt worden sein. Denkbar ist zum Beispiel, dass der Masterteilnehmer 105 einen Kopfabschnitt eines zumindest teilweise verschlüsselten Telegramms mit einem Telegrammabschnitt, der in Form eines Lesezugriffs ausgebildet ist, kennzeichnet, zum Beispiel über die Präambel, die sich bei dem genannten Telegramm von der Präambel anderer Telegramme des Masterteilnehmers 105 unterscheidet. Alternativ sind für die Einstellung der Empfangslogik 410 die oben genannten Varianten denkbar, über ein Zeitfenster oder über ein Umschalttelegramm. In einem siebten Schritt 817 kann die Empfangslogik 410 wie beschrieben zur Erkennung eines zumindest teilweise verschlüsselten Telegramms mit einem Telegrammabschnitt mit Lesezugriff ausgebildet sein und dies mithilfe einer Verzweigung abgeprüft werden. Kann die Empfangslogik 410 das zumindest teilweise verschlüsselte Telegramm als solches nicht mit einem Telegrammabschnitt mit Lesezugriff erkennen, durch das Symbol n gekennzeichnet, so kann mit einer Verzweigung in einem achten Schritt 819 geprüft werden, ob der Slaveteilnehmer 110 mit dem zumindest teilweise verschlüsselten Telegramm des Masterteilnehmers 110 adressiert ist. Ein negatives Resultat in der Prüfung des achten Schritts 819 ist wiederum mit dem Symbol n gekennzeichnet und führt auf die erste Verweisstelle 1. Die erste Verweisstelle 1 führt auf den vierten Schritt 811, bei dem zum Beispiel die zweite Version des zumindest teilweise verschlüsselten Telegramms über die Verarbeitungseinheit 425 und von der Verarbeitungseinheit 425 an den Ausgangs-Port 405 zur Ausgabe an den nachfolgenden Slaveteilnehmer weitergeleitet wird und damit der fünfte Schritt 813, also das Ende des zweiten Ablaufdiagramms 800 erreicht ist.

Die Verarbeitungseinheit 425 kann neben dem Weiterleiten der zweiten Version des zumindest teilweise verschlüsselten Telegramms auch dazu ausgelegt sein, die erste Version des zumindest teilweise verschlüsselten Telegramms, das die Empfangslogik 410 an die Entschlüsselungseinheit 415 weiterleitet, zu verwerfen. Insbesondere kann die Empfangslogik 410 dazu ausgelegt sein, ein Steuersignal an die Entschlüsselungseinheit 415 zu versenden, damit die Entschlüsselungseinheit 415 die erste Version des zumindest teilweise verschlüsselten Telegramms direkt an die Verarbeitungseinheit 425 weiterleitet, wenn in der zweiten Version festgestellt wird, dass der Slaveteilnehmer 110 nicht adressiert ist. Ergibt die Prüfung im achten Schritt 819 hingegen (durch das Symbol j gekennzeichnet), dass der Slaveteilnehmer 110 adressiert ist mit dem zumindest teilweise verschlüsselten Telegramm des Masterteilnehmers 105, so verarbeitet die Verarbeitungseinheit 425 einen unverschlüsselten Teil der zweiten Version im Durchlauf in einem neunten Schritt 821 und tauscht gegebenenfalls Daten mit einem Datenspeicher des Slaveteilnehmers 110 aus. Nach erfolgter Verarbeitung des unverschlüsselten Teils der zweiten Version des zumindest teilweise verschlüsselten Telegramms leitet die Verarbeitungseinheit 425 die zweite Version instantan an den Ausgangs-Port 405 des Slaveteilnehmers 110 zur Ausgabe. Dabei wartet die Verarbeitungseinheit 425 nicht, bis der unverschlüsselte Teil der zweiten Version vollständig verarbeitet ist, sondern beginnt mit der Weiterleitung des bereits verarbeiteten Teils, auch wenn ein Teil des unverschlüsselten Teils der zweiten Version noch nicht von der Verarbeitungseinheit 425 verarbeitet worden ist.

In einem zehnten Schritt 823 wird von der Speichereinheit 420 der Entschlüsselungseinheit 415 für einen verschlüsselten Teil der ersten Version des zumindest teilweise verschlüsselten Telegramms in einer Verzweigung geprüft, ob der verschlüsselte Teil der ersten Version des zumindest teilweise verschlüsselten Telegramms, der in der Speichereinheit 420 zwischengespeichert ist, einer Datenblockgröße entspricht, also der Größe eines Datenblocks des Telegramms in Byte, den der Masterteilnehmer 105 für die Verschlüsselung nutzt. Ergibt die Prüfung des zehnten Schritts 823, dass der in der Speichereinheit 420 der Entschlüsselungseinheit 415 zwischengespeicherte verschlüsselte Teil der ersten Version des zumindest teilweise verschlüsselten Telegramms der Datenblockgröße nicht entspricht, so wartet die Entschlüsselungseinheit 415 in einem elften Schritt 825 so lange, bis die erforderliche Mindestgröße in Byte, die mit der Datenblockgröße korrespondiert, des verschlüsselten Teils der ersten Version des zumindest teilweise verschlüsselten Telegramms in der Speichereinheit 420 zwischengespeichert ist. Daher führt der elfte Schritt 825 auf die Verzweigung, also den zehnten Schritt 823 zurück.

Sofern die Mindestgröße in Byte des verschlüsselten Teils der ersten Version in der Speichereinheit 420 vorliegt (durch das Symbol j gekennzeichnet), so ist die Entschlüsselungseinheit 415 in einem zwölften Schritt 827 ausgelegt, den verschlüsselten Teil der ersten Version mit dem Schlüssel im Durchlauf zu entschlüsseln. Dazu erfolgt in einem dreizehnten Schritt 829 durch die Entschlüsselungseinheit 415 eine Prüfung mit einer Verzweigung auf das Vorhandensein eines passenden Schlüssels zur Entschlüsselung. Ein negatives Prüfungsresultat des dreizehnten Schritts 829 führt auf die erste Verweisstelle 1, also auf den vierten Schritt 811, das Weiterleiten der ersten Variante durch die Verarbeitungseinheit 425 an den Ausgangs-Port 405 des Slaveteilnehmers 110 und nachfolgend auf den fünften Schritt 813, das Ende. Die Verarbeitungseinheit 425 ist in der zweiten Einstellung der Empfangslogik 410 dazu eingestellt, nur eine Version des zumindest teilweise verschlüsselten Telegramms über den Ausgangs-Port 405 an den nachfolgenden Slaveteilnehmer weiterzuleiten. Demnach kann die Verarbeitungseinheit 425 die zweite Version über die erste Verweisstelle 1 und den vierten Schritt 811 an den Ausgangs-Port 405 weiterleiten und die erste Version des zumindest teilweise verschlüsselten Telegramms von der Entschlüsselungseinheit 415 bei nicht Vorhandensein eines passenden Schlüssels verwerfen, um sicherzustellen, dass über den Ausgangs-Port 405 nur eine Version des zumindest teilweise verschlüsselten Telegramms ausgegeben wird.

Weist die Entschlüsselungseinheit 415 den passenden Schlüssel auf, so entschlüsselt die Entschlüsselungseinheit 415 den verschlüsselten Teil der ersten Version des zumindest teilweise verschlüsselten Telegramms in einem vierzehnten Schritt 831 im Durchlauf. Weiterhin leitet die Entschlüsselungseinheit 415 den im Durchlauf entschlüsselten Teil der ersten Version an die Verarbeitungseinheit 425 weiter. Die Verarbeitungseinheit prüft in einem fünfzehnten Schritt 833, ob der Slaveteilnehmer 110 mit dem Telegramm adressiert ist. Dies kann bei einem EtherCAT Telegramm zum Beispiel durch das Auswerten eines Datagramm-Kopfabschnitts 590 in einem Ethernet-Datenabschnitt 510 des Telegramms erfolgen, also durch Auswerten eines Befehlsfeldes 605 eines Adressfeldes 615 und eines zweiten Längenfeldes 620, wie oben beschrieben. Ist der Slaveteilnehmer 110 nicht adressiert, so verfährt die Verarbeitungseinheit 425 ähnlich zum dreizehnten Schritt 829 und leitet die zweite Version über die erste Verweisstelle 1 an den Ausgangs-Port 405 weiter. Die erste Version des zumindest teilweise verschlüsselten Telegramms kann von der Verarbeitungseinheit 425 verworfen werden, um sicherzustellen, dass nur eine Version des zumindest teilweise verschlüsselten Telegramms über den Ausgangs-Port 405 an einen nachfolgenden Slaveteilnehmer weitergeleitet wird.

Sofern der Slaveteilnehmer 110 adressiert ist mit dem zumindest teilweise verschlüsselten Telegramm des Masterteilnehmers 105, so prüft die Verarbeitungseinheit 425 in einem sechzehnten Schritt 835 durch Auswerten des entschlüsselten Teils der ersten Version, ob der entschlüsselte Teil als ein Telegrammabschnitt mit Schreibzugriff ausgebildet ist. Die Prüfung im sechzehnten Schritt 835 setzt voraus, dass die Verarbeitungseinheit 425 die Weiterleitung der zweiten Version an der Stelle des verschlüsselten Teils der zweiten Version für die Auswertung der Zugriffsart des Telegrammabschnitts stoppt. Ist der Telegrammabschnitt nicht in Form eines Schreibzugriffs ausgebildet, so verwirft die Verarbeitungseinheit 425 einen auf die Stelle des verschlüsselten Teils folgenden restlichen Teil der ersten Version in einem siebzehnten Schritt 837, damit nur die zweite Version über den Ausgangs-Port 405 an den nachfolgenden Slaveteilnehmer weitergeleitet wird. Der siebzehnte Schritt 837 führt über eine zweite Verweisstelle 2 auf das Ende, also den fünften Schritt 813.

Hat die Verarbeitungseinheit 425 den Telegrammabschnitt der ersten Version hingegen als einen mit Schreibzugriff ausgebildeten Telegrammabschnitt erkannt, durch Auswerten des oben genannten Befehlsfelds 605 bei einem EtherCAT Telegramm zum Beispiel, so verwirft die Verarbeitungseinheit 425 den auf die Stelle des verschlüsselten Teils folgenden restlichen Teil der zweiten Version sowie den verschlüsselten Teil der zweiten Version in einem achtzehnten Schritt 839. In einem neunzehnten Schritt 841 führt die Verarbeitungseinheit 425 den Schreibzugriff auf den Datenspeicher des Slaveteilnehmers 110 aus, der sich auf einen Austausch von Daten mit der ersten Schnittstelle 440, der zweiten Schnittstelle 445, sowie der dritten Schnittstelle 450 des Slaveteilnehmers 110 in Figur 4 belaufen kann. Insbesondere werden die Daten bei einem Schreibzugriff im Vergleich zu einem Lesezugriff verändert. Zudem beinhaltet der neunzehnte Schritt 841, dass die geänderten Daten bzw. die zu ändernden Daten von der ersten bis dritten Schnittstelle 440, 445, 450 sowie der entschlüsselte Teil der ersten Version und der auf den entschlüsselten Teil folgende restliche Teil der ersten Version zur Verschlüsselung an die Verschlüsselungseinheit 455 weitergeleitet wird. Die Verschlüsselungseinheit 455 kann wie die Entschlüsselungseinheit 415 auch, eine Speichereinheit aufweisen, beispielsweise weist die Verschlüsselungseinheit 455 eine Verschlüsselungseinheit-Speichereinheit 460 auf, die beispielsweise zur Zwischenspeicherung der von der Verarbeitungseinheit 425 erhaltenen Daten der ersten Version des zumindest teilweise verschlüsselten Telegramms dient.

Die Verschlüsselungseinheit-Speichereinheit 460 prüft in einer Verzweigung in einem zwanzigsten Schritt 843, ob die Mindestgröße in Byte, also die Datenblockgröße von dem in der Verschlüsselungseinheit-Speichereinheit 460 zwischengespeicherten, entschlüsselten Teils der ersten Version vorliegt. Bei negativem Prüfungsresultat, durch das Symbol n ausgedrückt, wartet die Verschlüsselungseinheit 455 in einem einundzwanzigsten Schritt 845 mit der Verschlüsselung des entschlüsselten Teils und des auf die Stelle des entschlüsselten Teils nachfolgenden restlichen Teils der ersten Version des zumindest teilweise verschlüsselten Telegramms so lange, bis die Mindestgröße in Byte in der Verschlüsselungseinheit-Speichereinheit 460 zwischengespeichert ist. Folglich führt der einundzwanzigste Schritt 845 auf den zwanzigsten Schritt 843 zurück. Ist mindestens die Datenblockgröße, mit der der Masterteilnehmer 105 das Telegramm zumindest teilweise mit dem Schlüssel verschlüsselt hat, in der Verschlüsselungseinheit-Speichereinheit 460 zwischengespeichert, so verschlüsselt die Verschlüsselungseinheit die oben genannten Teile der ersten Version mit dem Schlüssel im Durchlauf in einem zweiundzwanzigsten Schritt 847. Zudem beinhaltet der zweiundzwanzigste Schritt 847 das Weiterleiten des verschlüsselten Teils der ersten Version an den Ausgangs-Port 405 zur Ausgabe an den nachfolgenden Slaveteilnehmer. Der zweiundzwanzigste Schritt 847 führt ferner über die zweite Verweisstelle 2 auf den fünften Schritt 813, das Ende des zweiten Ablaufdiagramms 800.

Ein positives Resultat des siebten Schritts 817, also der Erkennung eines zumindest teilweise verschlüsselten Telegramms als ein solches, das einen Telegrammabschnitt der in Form eines Lesezugriffs ausgebildet ist, aufweist, führt auf die Verzweigung im zehnten Schritt 823. Im zehnten Schritt 823 wird wie oben beschrieben von der Speichereinheit 420 der Entschlüsselungseinheit 415 geprüft, ob die Datenblockgröße des verschlüsselten Teils der ersten Version zwischengespeichert ist. Ist dies nicht der Fall, so wird in dem elften Schritt 825, wie oben erläutert, so lange gewartet, bis die Datenblockgröße empfangen ist. Da die übrigen zwölften bis fünfzehnten Schritte 827 bis 833 ähnlich zur obigen Erläuterung ausgebildet sind, wird für die Beschreibung dessen auf vorstehende Erläuterung verwiesen und an der Stelle mit der Beschreibung des fünfzehnten Schritts 833 fortgefahren. Im fünfzehnten Schritt 833 prüft die Verarbeitungseinheit 425 mithilfe einer Verzweigung, ob der Slaveteilnehmer 110 adressiert ist. Dies kann durch Auswerten der oben stehenden Bereiche und Datenfelder der ersten Version des zumindest teilweise verschlüsselten Telegramms, das vorzugsweise als ein EtherCAT Telegramm ausgebildet ist, geschehen. Ein negatives Prüfungsresultat des fünfzehnten Schritts 833 führt über die erste Verweisstelle 1 zum vierten Schritt 811, also dem Fortsetzen des Weiterleitens der zweiten Version an den Ausgangs-Port 405 und dem Verwerfen der ersten Version des zumindest teilweise verschlüsselten Telegramms durch die Verarbeitungseinheit 425. Schließlich folgt darauf der fünfte Schritt 813, also das Ende.

Die Auswertung des entschlüsselten Teils der ersten Version setzt voraus, dass die Verarbeitungseinheit die Weiterleitung der zweiten Version an den Ausgangs-Port 405 an der Stelle des verschlüsselten Teils der zweiten Version stoppt. Ist der Slaveteilnehmer 110 adressiert, so verarbeitet die Verarbeitungseinheit 425 den entschlüsselten Teil der ersten Version und verwirft jedoch den auf die Stelle des entschlüsselten Teils nachfolgenden Teil der ersten Version in einem dreiundzwanzigsten Schritt 849, da der entschlüsselte Teil als Telegrammabschnitt mit Lesezugriff für den Slaveteilnehmer 110 ausgebildet ist und für den nachfolgenden Slaveteilnehmer 110 verschlüsselt über die zweite Version weitergeleitet werden kann. Folglich setzt die Verarbeitungseinheit 425 die Weiterleitung der zweiten Version, die die Verarbeitungseinheit 425 direkt von der Empfangslogik 410 erhalten hat, und für die Auswertung des entschlüsselten Teils der ersten Version gestoppt hat, an den Ausgangs-Port 405 in einem vierundzwanzigsten Schritt 851 fort. Der vierundzwanzigste Schritt 851 führt auf die zweite Verweisstelle 2, also den fünften Schritt 813 und damit das Ende des zweiten Ablaufdiagramms 800.

Figur 2 und Figur 3 zeigen ein erstes Ablaufdiagramm und ein zweites Ablaufdiagramm für das Verfahren zum Verarbeiten von Telegrammen in dem Automatisierungsnetzwerk 100 in Figur 1. Es ist denkbar, dass einzelne Verfahrensschritte bzw. einzelne Schritte variiert werden können, ohne dabei den Schutzumfang der Erfindung zu verlassen.

Figur 4 zeigt einen schematischen Aufbau des Slaveteilnehmers 110 in dem Automatisierungsnetzwerk 100 in Figur 1, der ausgelegt ist, zumindest teilweise verschlüsselte Telegramme des Masterteilnehmers 105 im Durchlauf zu entschlüsseln sowie im Durchlauf zu verarbeiten und ggf. auch im Durchlauf zu verschlüsseln. Dieses Merkmal ist jedoch insbesondere nicht auf den Slaveteilnehmer 110 in dem Automatisierungsnetzwerk 100 in Figur 1 beschränkt. Auch der erste weitere Slaveteilnehmer 115 sowie der zweite weitere Slaveteilnehmer 120 können dahingehend ausgelegt sein.

Der Slaveteilnehmer 110 umfasst den Eingangs-Port 400 und den Ausgangs-Port 405, an die weitere Netzwerkteilnehmer 300 über das Datenleitungsnetz 200 angeschlossen sein können. Zum Beispiel kann der Slaveteilnehmer 110 über den Eingangs-Port 400 und die erste Datenleitung 205 mit dem Masterteilnehmer 105 und über den Ausgangs-Port 405 und über die zweite Datenleitung 210 mit dem ersten weiteren Slaveteilnehmer 115 in Figur 1 verbunden sein. Darüber hinaus kann der Slaveteilnehmer 110 auch weitere, nicht dargestellte Eingangs-Ports und/oder Ausgangs-Ports aufweisen. Der Slaveteilnehmer 110 ist ausgelegt, Telegramme, die von dem Masterteilnehmer 105 ausgegeben und zumindest teilweise verschlüsselt werden, über den Eingangs-Port 400 zu empfangen und über den Ausgangs-Port 405 zu versenden. Dabei stehen die Symbole "RX" und "TX" am Eingangs-Port 400 und am Ausgangs-Port 405 jeweils für Empfang bzw. den Empfänger (RX: Receive bzw. Receiver) und für Senden bzw. den Sender (TX: Transmit bzw. Transmitter). Die Symbole dienen der Vereinfachung der Darstellung, um insbesondere den Empfang der vom Masterteilnehmer 105 verschlüsselten Telegramme über den Eingangs-Port 400 und das Versenden der gegebenenfalls vom Slaveteilnehmer 110 wieder verschlüsselten Telegramme über den Ausgangs-Port 405 durch den Slaveteilnehmer 110 zu kennzeichnen.

Der Slaveteilnehmer 110 weist einen ersten Prozessorchip 430 und einen zweiten Prozessorchip 435 auf. Der erste Prozessorchip 430 umfasst die Verarbeitungseinheit 425. Die Verarbeitungseinheit 425 kann als Software Modul oder als Hardware Modul oder als kombiniertes Hard- und Software Modul umgesetzt sein. Vorzugsweise sind der erste Prozessorchip 430 als EtherCAT Slave Controller sowie der zweite Prozessorchip 435 als Mikrocontroller in dem Slaveteilnehmer 110 ausgebildet. Der EtherCAT Slave Controller umfasst eine erste Schnittstelle 440 zum Austausch von Daten bzw. Informationen im Datagramm-Datenabschnitt 595 von Register-Datagrammen mit dem Mikrocontroller. Ferner weist der EtherCAT Slave Controller eine zweite Schnittstelle 445 auf, über die der EtherCAT Slave Controller Daten bzw. Informationen in dem Datagramm-Datenabschnitt 595 eines Mailbox-Datagramms mit dem Mikrocontroller austauschen kann. Die Verarbeitung der Daten bzw. Informationen im Datagramm-Datenabschnitt 595 eines Mailbox-Datagramms erfolgt erst vom Mikrocontroller und nicht von dem EtherCAT Slave-Controller wie beispielsweise für Daten bzw. Informationen im Datagramm-Datenabschnitt 595 von Register-Datagrammen oder von Prozessdaten-Datagrammen. Daten bzw. Informationen für letztgenannte Datagrammarten werden bereits jeweils vom EtherCAT Slave Controller verarbeitet. Über eine dritte Schnittstelle 450 kann der EtherCAT Slave Controller Daten bzw. Informationen im Datagramm-Datenabschnitt 595 eines Prozessdaten-Datagramms mit dem Mikrocontroller austauschen. Die dritte Schnittstelle 450 wird in der Regel dafür genutzt, zyklisch in kurzen Abständen Prozessdaten auszutauschen. Der Austausch der Daten bzw. Informationen über die einzelnen ersten bis dritten Schnittstellen 440, 445, 450 ist mithilfe der drei Pfeile zwischen den drei Schnittstellen und dem Mikrocontroller dargestellt.

Vom Masterteilnehmer 105 unverschlüsselt gesendete Telegramme werden von der Empfangslogik 410 des Slaveteilnehmers 110 selektiert und direkt zur Verarbeitung im Durchlauf an die Verarbeitungseinheit 425 des ersten Prozessorchips 430 weitergeleitet. Damit der Slaveteilnehmer 110 in der Lage ist, die vom Masterteilnehmer 105 zumindest teilweise verschlüsselten Telegramme zu entschlüsseln, benötigt der Slaveteilnehmer 110 einen geheimen Schlüssel. Der Masterteilnehmer 105 kann demnach ausgelegt sein, vor dem Versenden der zumindest teilweise verschlüsselten Telegramme über das Datenleitungsnetz 200 eine vertrauenswürdige Verbindung zu dem Slaveteilnehmer 110 aufzubauen und den geheimen Schlüssel, mit dem der Masterteilnehmer 105 die Telegramme selbst zumindest teilweise verschlüsselt, über die vertrauenswürdige Verbindung an den Slaveteilnehmer 110 über das Datenleitungsnetz zu übertragen. Dabei kann unter einer vertrauenswürdigen Verbindung eine Verbindung verstanden werden, bei der der Masterteilnehmer 105 zunächst eine Verbindung zum Slaveteilnehmer 110 aufbaut. Nach erfolgter Authentifikation des Masterteilnehmers 105 und des Slaveteilnehmers 110, beispielsweise mithilfe von Zertifikaten, können die beiden Verbindungspartner als vertrauenswürdig eingestuft werden. Daten, zum Beispiel der geheime Schlüssel, können dann mithilfe eines Verschlüsselungsprotokolls verschlüsselt über die vertrauenswürdige Verbindung übertragen werden.. Der Masterteilnehmer 105 kann den geheimen Schlüssel also mit einem Verschlüsselungsprotokoll, wie beispielsweise dem TLS Protokoll (TLS: Transport Layer Security) verschlüsseln und den mit dem TLS Verschlüsselungsprotokoll verschlüsselten Schlüssel in einem EtherCAT Telegramm über die erste Datenleitung 205 an den Slaveteilnehmer 110 senden. Zum Beispiel kann sich der Schlüssel dabei im Datagramm-Datenabschnitt 595 eines Mailbox-Datagramms eines EtherCAT Telegramms befinden.

Der Slaveteilnehmer 110 empfängt das mit dem Verschlüsselungsprotokoll verschlüsselte EtherCAT Telegramm mit dem geheimen Schlüssel über den Eingangs-Port 400 und leitet es an die Empfangslogik 410 weiter. Die Empfangslogik 410 kann vom Masterteilnehmer 105 zum Beispiel dahingehend eingestellt worden sein, dass die Empfangslogik 410 ein mit dem TLS Verschlüsselungsprotokoll verschlüsseltes EtherCAT Telegramm direkt über die Verarbeitungseinheit 425 und über die zweite Schnittstelle 445 des EtherCAT Slave Controllers an den Mikrocontroller weiterleitet, da der Mikrocontroller beispielsweise zur Entschlüsselung des TLS Verschlüsselungsprotokolls ausgelegt ist und dazu eine weitere Entschlüsselungseinheit aufweist, die in Figur 4 nicht dargestellt ist. Zusätzlich weist der Mikrokontroller auch eine weitere Verschlüsselungseinheit auf, die in Figur 4 ebenfalls nicht dargestellt ist. Der Mikrocontroller entschlüsselt also das mit dem TLS Protokoll verschlüsselte EtherCAT Telegramm, das den Schlüssel des Masterteilnehmers 105 umfasst, mit der weiteren Entschlüsselungseinheit und erhält nach der Entschlüsselung den Schlüssel zum Entschlüsseln der vom Masterteilnehmer 105 mit dem gleichen Schlüssel verschlüsselten Telegramme. Die Telegramme sind vorzugsweise ebenfalls als EtherCAT Telegramme ausgebildet, werden im Folgenden aber nur noch als Telegramme bezeichnet. Anschließend kann der Mikrocontroller den Schlüssel an die Entschlüsselungseinheit 415 des ersten Prozessorchips 430 und an die Verschlüsselungseinheit 455 des ersten Prozessorchips 430 weiterleiten. Die Weiterleitung des geheimen Schlüssels ist in Figur 4 über die beiden Pfeile mit gestrichelten Linien angedeutet. Der interne Weiterleitungsprozess des geheimen Schlüssels im Slaveteilnehmer 110 ist von außen nicht sichtbar, demnach kann der geheime Schlüssel über einen sicheren Kanal, also die vertrauenswürdige Verbindung gesichert an den Slaveteilnehmer 110 und die jeweiligen Komponenten des Slaveteilnehmers 110, die den Schlüssel zum Entschlüsseln bzw. Verschlüsseln erfordern, übertragen werden.

Dabei können der erste weitere Slaveteilnehmer 115 sowie der zweite weitere Slaveteilnehmer 120 jeweils den gleichen Schlüssel auf die oben vorgestellte Weise von dem Masterteilnehmer 105 erhalten, wie der Slaveteilnehmer 110. Darüber hinaus ist denkbar, dass der erste weitere Slaveteilnehmer 115 sowie der zweite weitere Slaveteilnehmer 120 jeweils einen separaten Schlüssel erhalten, der sich von dem Schlüssel des Slaveteilnehmers 110 unterscheidet. Überdies ist ferner denkbar, dass der Slaveteilnehmer 110 mehrere Entschlüsselungseinheiten 415 aufweist und gegebenenfalls auch mehrere Verschlüsselungseinheiten 455 und in diesem Zusammenhang jede Datagrammart eines Telegramms mit einem eigenen Schlüssel vom Masterteilnehmer 105 verschlüsselt wird. Die mehreren Entschlüsselungseinheiten 415 bzw. Verschlüsselungseinheiten 455 können dann jeweils dazu ausgelegt sein, eine bestimmte Datagrammart mit dem passenden Schlüssel zu entschlüsseln und nach der Verarbeitung gegebenenfalls wieder zu verschlüsseln. Dabei bezieht sich sowohl die Entschlüsselung, als auch die Verarbeitung und die mögliche Verschlüsselung durch den Slaveteilnehmer 110 stets jeweils auf eine Tätigkeit, die von der jeweiligen genannten Einheit im Durchlauf erfolgen kann.

In diesem Zusammenhang ist denkbar, dass der Masterteilnehmer 105 die Verarbeitungseinheit 425 des Slaveteilnehmers 110 derart einstellt, sodass der EtherCAT Slave Controller zum Beispiel nur vorher verschlüsselte Prozessdaten-Datagramme und/oder nur vorher verschlüsselte Register-Datagramme zur Verarbeitung akzeptiert und Prozessdaten-Datagramme und/oder Register-Datagramme, die vorher nicht verschlüsselt waren, verwirft. Die vorherige Verschlüsselung der Prozessdaten-Datagramme und/oder die vorherige Verschlüsselung der Register-Datagramme kann die Verarbeitungseinheit 425 des EtherCAT Slave Controllerszum Beispiel anhand der Telegramme selbst erkennen, zum Beispiel über den Datagramm-Kopfabschnitt 590, zum Beispiel über eine Telegrammkennung oder über ein Datenfeld oder über einen bestimmten Wert, falls nur die Daten bzw. die Information im Datagramm-Datenabschnitt 595 vom Masterteilnehmer 105 verschlüsselt worden ist. Die Prozessdaten-Datagramme und/oder die Register-Datagramme können von der Entschlüsselungseinheit 415 mit dem Schlüssel im Durchlauf entschlüsselt und dann zur Verarbeitung an die Verarbeitungseinheit 425 des EtherCAT Slave Controllers weitergeleitet worden sein.

Weiterhin kann der Masterteilnehmer 105 auch dazu ausgelegt sein, ein Telegramm jeweils vollständig zu verschlüsseln. Der Masterteilnehmer kann zur vollständigen Verschlüsselung eines Telegramms sowie zur zumindest teilweisen Verschlüsselung eine Masterteilnehmer-Verschlüsselungseinheit aufweisen. Diese kann in Form von Software oder in Form von Hardware oder als kombinierte Hard- und Software Einheit ausgebildet sein und dazu dienen, die Telegramme jeweils mit dem Schlüssel zu verschlüsseln. Verschlüsselt der Masterteilnehmer 105 ein Telegramm also mit der Masterteilnehmer-Verschlüsselungseinheit vollständig, dann ist denkbar, dass der Masterteilnehmer 105 die Verarbeitungseinheit 425 des Slaveteilnehmers 110 dahingehend einstellen kann, dass die Verarbeitungseinheit 425 in der Betriebsweise zwischen vollständig verschlüsselten Telegrammen und unverschlüsselten Telegrammen umschalten kann.

Zum Beispiel kann der Masterteilnehmer 105 vor dem Versenden von vollständig verschlüsselten Telegrammen ein Umschalttelegramm an den Slaveteilnehmer 110 über die erste Datenleitung 205 senden. Vor dem Versenden des Umschalttelegramms gibt der Masterteilnehmer 105 zum Beispiel unverschlüsselte Telegramme an den Slaveteilnehmer 110 aus. Der Slaveteilnehmer 110 empfängt die unverschlüsselten Telegramme über den Eingangs-Port 400 und leitet sie an die Empfangslogik 410 weiter. Die Empfangslogik 410 kann als eine Art Weiche eingestellt sein, sodass die Empfangslogik 410 die unverschlüsselten Telegramme direkt an die Verarbeitungseinheit 425 zur Verarbeitung weiterleitet. Nach der Verarbeitung im Durchlauf, also parallel zum fortlaufenden Empfang des Telegramms, kann die Verarbeitungseinheit 425 des EtherCAT Slave Controllers das unverschlüsselte Telegramm an den Ausgangs-Port 405 weiterleiten. Der Slaveteilnehmer 110 gibt das unverschlüsselte Telegramm über den Ausgangs-Port 405 über die zweite Datenleitung 210 an den ersten weiteren Slaveteilnehmer 115 aus.

Der Masterteilnehmer 105 kann das Umschalttelegramm als unverschlüsseltes Telegramm an den Slaveteilnehmer 110 senden. Der Slaveteilnehmer 110 kann das Umschalttelegramm über den Eingangs-Port 400 empfangen und an die Empfangslogik 410 weiterleiten. Die Empfangslogik 410 kann zur Weiterleitung des Umschalttelegramms an die Verarbeitungseinheit 425 des EtherCAT Slave Controllers ausgelegt sein, sodass das Umschalttelegramm den oben beschriebenen Weg für ein unverschlüsseltes Telegramm im Slaveteilnehmer 110 durchläuft. Mit dem Umschalttelegramm kann die Empfangslogik 410 als Weiche umgestellt werden, sodass die Empfangslogik 410 nach dem Umschalttelegramm ausgelegt ist, die vollständig verschlüsselten Telegramme des Masterteilnehmers 105 nach dem Anliegen an dem Eingangs-Port 400 an die Speichereinheit 420 der Entschlüsselungseinheit 415 des Slaveteilnehmers 110 weiterzuleiten. Mit dem Begriff Anliegen ist gemeint, dass das erste Bit des zumindest teilweise verschlüsselten Telegramms über den Eingangs-Port 400 des Slaveteilnehmers 110 empfangen werden kann. In Figur 4 umfasst die Entschlüsselungseinheit 415 die Speichereinheit 420. In einer alternativen Ausgestaltung kann die Speichereinheit 420 auch separat zur Entschlüsselungseinheit 415 im ersten Prozessorchip 430 angeordnet sein. Die Speichereinheit 420 des ersten Prozessorchips 430 des Slaveteilnehmers 110 ist erforderlich, um ein vollständig verschlüsseltes Telegramm im Durchlauf von der Entschlüsselungseinheit 415 entschlüsseln zu können. Die Speichereinheit 420 kann als FIFO Speicher ausgebildet sein (FIFO: First In First Out).

Die Speichereinheit 420 ist mit der Empfangslogik 410 und der Entschlüsselungseinheit 415 verbunden. Der Eingangs-Port 400 ist mit der Empfangslogik 410 des Slaveteilnehmers 110 und mit der ersten Datenleitung 205 des Datenleitungsnetzes 200 verbunden. Die Empfangslogik 410 ist überdies mit der Verarbeitungseinheit 425 verbunden. Auch die Entschlüsselungseinheit 415 ist mit der Verarbeitungseinheit 425 verbunden. Der EtherCAT Slave Controller ist jeweils über die erste Schnittstelle 440, die zweite Schnittstelle 445 und die dritte Schnittstelle 450 mit dem Mikrocontroller verbunden. Die Verarbeitungseinheit 425 ist sowohl mit der Verschlüsselungseinheit 455 als auch mit dem Ausgangs-Port 405 verbunden. Schließlich weist auch die Verschlüsselungseinheit 455 des ersten Prozessorchips 430 eine Verbindung zu dem Ausgangs-Port 405 des Slaveteilnehmers 110 auf und umfasst eine Verschlüsselungseinheit-Speichereinheit 460. Die Verschlüsselungseinheit-Speichereinheit 460 ist ähnlich zur Speichereinheit 420 ausgebildet und daher wird auf die obenstehende Erläuterung verwiesen, die für die Verschlüsselungseinheit-Speichereinheit 460 ebenfalls gilt, zum Beispiel die Ausbildung als FIFO Speicher. Die Verschlüsselungseinheit-Speichereinheit 460 ist erforderlich, um eine erforderliche Mindestgröße in Byte von dem Telegramm zwischen zu speichern, mit der auch wieder verschlüsselt wird.

Für die vorstehende Erläuterung wurden als Beispiel vollständig verschlüsselte Telegramme des Masterteilnehmers 105 herangezogen. Dies ist jedoch nicht zwingend erforderlich, da der Masterteilnehmer 105 die Telegramme auch nur teilweise verschlüsseln kann. Folglich gelten die oben genannten Merkmale für die vollständig verschlüsselten Telegramme uneingeschränkt auch für zumindest teilweise verschlüsselte Telegramme. Auch die Eigenschaften der Entschlüsselungseinheit 415, der Speichereinheit 420, der Verschlüsselungseinheit 455 und der Verschlüsselungseinheit-Speichereinheit 460 sind nicht auf vollständig verschlüsselte Telegramme eingeschränkt, sondern gelten uneingeschränkt auch für zumindest teilweise verschlüsselte Telegramme. Die nachfolgende Beschreibung ist auf die Verwendung zumindest teilweise verschlüsselter Telegramme gestützt. Sie gilt jedoch ebenfalls für vollständig verschlüsselte Telegramme.

Der Masterteilnehmer 105 ist ausgelegt, die Telegramme zumindest teilweise zu verschlüsseln. Für die zumindest teilweise Verschlüsselung nutzt der Masterteilnehmer 105 die Masterteilnehmer-Verschlüsselungseinheit. Diese ist in den Figuren nicht gezeigt. Der Masterteilnehmer 105 verschlüsselt jeweils Datenblöcke eines Telegramms mithilfe der Masterteilnehmer-Verschlüsselungseinheit. Je nach genutztem Verschlüsselungsverfahren kann sich die Datenblockgröße der zu verschlüsselnden Datenblöcke der Telegramme unterscheiden. Beispielsweise kann die Datenblockgröße 8 Byte oder 16 Byte oder eine alternative Anzahl in Byte umfassen. Die einzelnen Verschlüsselungsmethoden, die der Masterteilnehmer 105 umsetzen kann, werden anhand von Figur 5 näher erläutert. Verschlüsselt der Masterteilnehmer 105 die Telegramme zumindest teilweise mit der Masterteilnehmer-Verschlüsselungseinheit mit einer Datenblockgröße von zum Beispiel 16 Byte und versendet sie an den Slaveteilnehmer 110, so speichert der Slaveteilnehmer 110 die Telegramme jeweils, sobald sie am Eingangs-Port 400 anliegen in der Speichereinheit 420 zwischen. Die Entschlüsselungseinheit 415 des Slaveteilnehmers 110 ist dann dazu ausgelegt, mit der Entschlüsselung so lange zu warten, bis der in der Speichereinheit 420 zwischengespeicherte Teil des vom Masterteilnehmer 105 zumindest teilweise verschlüsselten Telegramms die Mindestlänge in Byte aufweist. Die Mindestlänge in Byte entspricht dabei genau der Datenblockgröße, mit der der Masterteilnehmer 105 ein Telegramm jeweils zumindest teilweise verschlüsselt hat. Im genannten Beispiel also 16 Byte.

Demnach verzögert der Slaveteilnehmer 110 ein vom Masterteilnehmer 105 zumindest teilweise verschlüsseltes Telegramm in der Speichereinheit 420 so lange, bis der in Speichereinheit zwischengespeicherte Teil des zumindest teilweise verschlüsselten Telegramms der Datenblockgröße entspricht. Im genannten Beispiel wartet die Entschlüsselungseinheit 415 mit der Entschlüsselung der zumindest teilweise verschlüsselten Telegramme des Masterteilnehmers 105 so lange, bis der in der Speichereinheit 420 zwischengespeicherte Teil des zumindest teilweise verschlüsselten Telegramms 16 Byte beträgt. Sobald in der Speichereinheit 420 die 16 Byte des zumindest teilweise verschlüsselten Telegramms zwischengespeichert worden sind, beginnt die Entschlüsselungseinheit 415 mit der Entschlüsselung der 16 Byte des verschlüsselten Teils des Telegramms im Durchlauf.

Dabei werden die entschlüsselten Daten mit der gleichen Geschwindigkeit an die Verarbeitungseinheit 425 weitergeleitet, mit der sie vom Slaveteilnehmer 110 empfangen wurden.

Bei einem teilweise verschlüsselten Telegramm durchlaufen also alle Telegrammbytes die Speichereinheit 420, da andernfalls Lücken auftreten könnten bzw. eine Überholung der Bytes möglich wäre. Die unverschlüsselten Teile eines zumindest teilweise verschlüsselten Telegramms werden durch die Entschlüsselungseinheit 415 des ersten Prozessorchips 430 aber nicht bearbeitet, sondern einfach nur an die Verarbeitungseinheit 425 weitergeleitet.

Mit der Zwischenspeicherung der nächsten 16 Byte beginnt die Entschlüsselungseinheit 415 mit der Entschlüsselung des nächsten Datenblocks des zumindest teilweise verschlüsselten Telegramms, usw. Auf diese Weise können die zumindest teilweise verschlüsselten Telegramme des Masterteilnehmers 105 mithilfe einer geringfügigen Verzögerung durch die Zwischenspeicherung der empfangenen Teile der Telegramme, um die erforderliche Mindestlänge in Byte, die der Datenblockgröße der Verschlüsselung entspricht, zu erhalten, im Durchlauf entschlüsselt werden. Insbesondere kann die Entschlüsselung im Durchlauf so ohne den vollständigen vorherigen Empfang eines zumindest teilweise verschlüsselten Telegramms umgesetzt werden. Somit kann das vorgeschlagene Verfahren samt den vorgeschlagenen Teilnehmern in vorteilhafter Weise zur Reduktion der Verzögerung eines zumindest teilweise verschlüsselten Telegramms beitragen. Die Verzögerung eines zumindest teilweise verschlüsselten Telegramms hängt davon ab, ob die Entschlüsselung und/oder die Verschlüsselung des zumindest teilweise verschlüsselten Telegramms im Durchlauf, also parallel zum Empfang erfolgen kann. Für den Fall, dass dies möglich ist, ergibt sich die Verzögerung dabei aus der Verzögerung des zumindest teilweise verschlüsselten Telegramms in der Speichereinheit 420 bis die erforderliche Datenblockgröße des zumindest teilweise verschlüsselten Telegramms empfangen worden ist. Gegebenenfalls wird das Telegramm in der Verschlüsselungseinheit-Speichereinheit 460 noch bis zum Empfang der Datenblockgröße verzögert, falls eine erneute Verschlüsselung des Telegramms erfolgen soll. Für den Fall, dass die Entschlüsselung und/oder die Verschlüsselung nicht parallel zum Empfang des zumindest teilweise verschlüsselten Telegramms über den Eingangs-Port 400 möglich ist, so muss das zumindest teilweise verschlüsselte Telegramm erst vollständig empfangen werden, bevor entschlüsselt werden kann und auf diese Weise die Verzögerung durch die Verschlüsselung berücksichtigt werden.

Die Reduktion der Verzögerung ist insbesondere zur Einhaltung von Deadlines oder zur Verkürzung der Reaktionszeiten im Automatisierungsnetzwerk 100 erstrebenswert. Dabei kann der Masterteilnehmer 105 die Verzögerung eines zumindest teilweise verschlüsselten Telegramms in der Speichereinheit 420 des Slaveteilnehmers 110 reduzieren, in dem der Masterteilnehmer 105 die Verschlüsselung der Datenblöcke der Telegramme mit einer kleineren Datenblockgröße umsetzt, beispielsweise statt 16 Byte Datenblöcke, Datenblöcke mit 8 Byte für die Verschlüsselung nutzen, etc.

Die Entschlüsselungseinheit 415 des ersten Prozessorchips 430 leitet den entschlüsselten Datenblock des zumindest teilweise vom Masterteilnehmer 105 verschlüsselten Telegramms an die Verarbeitungseinheit 425 weiter und die Verarbeitungseinheit 425 verarbeitet den entschlüsselten Datenblock im Durchlauf, während der Slaveteilnehmer 110 über den Eingangs-Port 400 den Rest des zumindest teilweise verschlüsselten Telegramms empfangen kann und die Entschlüsselungseinheit 415 mit der Entschlüsselung des nächsten Datenblocks beschäftigt sein kann. Bei der Verarbeitung des entschlüsselten Teils des Telegramms im Durchlauf kann der EtherCAT Slave Controller jeweils Daten mit dem Mikrocontroller austauschen. Insbesondere bei einer Veränderung der Daten während des Austauschs, zum Beispiel im Rahmen eines Schreibzugriffs bzw. eines Schreibvorgangs oder eines Schreib-Lesezugriffs bzw. eines Schreib-Lesevorgangs kann die Verarbeitungseinheit 425 des EtherCAT Slave Controllersden verarbeiteten Datenblock des Telegramms zur Verschlüsselung an die Verschlüsselungseinheit 455 des Slaveteilnehmers 110 weiterleiten. Die Verschlüsselungseinheit 455 weist die Verschlüsselungseinheit-Speichereinheit 460 auf, wobei die Verschlüsselungseinheit-Speichereinheit 460 dieselbe DatenDatenblockgröße für die erneute Verschlüsselung nutzt sowie den geheimen Schlüssel vom Masterteilnehmer 105, um eine vertrauliche Telegrammübertragung über den Ausgangs-Port 405 des Slaveteilnehmers 110 und über das Datenleitungsnetz 200 an den nächsten Slaveteilnehmer zu gewährleisten.

Die oben stehende Erläuterung bezieht sich auf die erste Einstellung der Empfangslogik 410 in Figur 2, also der exklusiven Weiterleitung eines zumindest teilweise verschlüsselten Telegramms an die Entschlüsselungseinheit 415 (sowie eines unverschlüsselten Telegramms an die Verarbeitungseinheit 425). Das Beispiel wurde gewählt, um die Beschreibung der Figur 4 zu vereinfachen. Die Erfindung ist jedoch nicht auf die erste Einstellung der Empfangslogik 410 beschränkt, sondern kann alternativ auch mit der zweiten Einstellung der Empfangslogik 410 umgesetzt werden. Die oben stehenden Merkmale für die Komponenten der Figur 4 gelten demnach auch für die zweite Einstellung der Empfangslogik 410 in Figur 3.

Figur 5 zeigt einen schematischen Aufbau einer Datenstruktur 500, die zu einer Verwendung in dem Verfahren zum Verarbeiten von Telegrammen in dem in Figur 1 dargestellten Automatisierungsnetzwerk 100 dient. Die Datenstruktur 500 ist als Telegramm und kann insbesondere als Ethernet Telegramm ausgebildet sein und eine Länge von 64 bis 1518 Byte umfassen bzw. bei einem vorhandenem TAG-Feld 64 bis 1522 Byte. Die Datenstruktur 500 in Figur 3 weist einen ersten Telegrammaufbau TEL1 auf und umfasst einen Ethernet-Kopfabschnitt 505, einen Ethernet-Datenabschnitt 510 sowie einen Ethernet-Endabschnitt 515. Beispielsweise kann die Datenstruktur 500 nach der IEEE-Norm 802.3 ausgebildet sein und das Ethernet Datenframe Format für eine paketorientierte Übertragung der Daten umfassen. Ist die Datenstruktur 500 zusätzlich zur Einhaltung des Ethernet Datenframe Aufbaus für das echtzeitfähige EtherCAT Datenübertragungsprotokoll ausgelegt, so weist die Datenstruktur 500 einen zweiten Telegrammaufbau TEL2 auf. Vorzugsweise sind die vom Masterteilnehmer 105 ausgegebenen zumindest teilweise verschlüsselten Telegramme als EtherCAT Telegramme ausgebildet und können damit in der Grundstruktur den zweiten Telegrammaufbau TEL2 aufweisen.

Der Ethernet-Kopfabschnitt 505 weist ein Zieladressfeld 555 auf, welches eine Ziel-MAC-Adresse (MAC: Media Access Control) umfasst, die den Netzwerkteilnehmer 300 in Figur 1 identifiziert, der das EtherCAT Telegramm empfangen soll (sogenannte Unicast-Adresse). Die Ziel-MAC-Adresse kann dabei auch als Multicast-Adresse (Adressierung mehrerer Netzwerkteilnehmer 300 im Automatisierungsnetzwerk 100) oder Broadcast-Adresse (Adressierung aller Netzwerkteilnehmer 300 im Automatisierungsnetzwerk 100) ausgebildet sein. Nachfolgend an das Zieladressfeld 555 weist der Ethernet-Kopfabschnitt 505 ein Absenderadressfeld 560 auf. Das Absenderadressfeld 560 umfasst eine Absenderadresse, die ebenfalls als MAC-Adresse ausgebildet ist und den Sender identifiziert. Das Zieladressfeld 555 und das Absenderadressfeld 560 umfassen dabei jeweils 6 Byte.

Ferner weist der Ethernet-Kopfabschnitt 505 auf das Absenderadressfeld 560 folgend ein TAG-Feld 565 auf. Dieses kann beispielsweise gemäß der IEEE 802.1Q Norm als VLAN TAG TAG-Feld ausgebildet sein (VLAN: Virtual Local Area Network) und 4 Byte umfassen. Auf das TAG-Feld 565 folgend weist der Ethernet-Kopfabschnitt 505 ein erstes Datenfeld 570 auf. Das erste Datenfeld 570 kann als sogenanntes "Ethertype"-Feld ausgebildet sein, 2 Byte aufweisen und einen Wert umfassen, der ein verwendetes Protokoll einer nächsthöheren Schicht innerhalb von Nutzdaten angibt, wobei eine Schicht und eine nächsthöhere Schicht nach dem OSI-Modell (OSI: Open Systems Interconnection), also dem Referenzmodell für Datenübertragungsprotokolle in einer Schichtenarchitektur, definiert sind. Beispielsweise weist das erste Datenfeld 570 den Wert 0x88A4 (im Hexadezimalsystem) auf, wenn das Telegramm als EtherCAT Telegramm ausgebildet ist, da dieser Wert mit dem echtzeitfähigen EtherCAT Datenübertragungsprotokoll verknüpft ist. Das Ethertype-Feld, also das erste Datenfeld 570, weist eine erste Telegrammkennung auf, wenn der Masterteilnehmer 105 den Ethernet-Datenabschnitt 510 in einer ersten Verschlüsselungsmethode mit dem Schlüssel verschlüsselt hat. Dabei ist die erste Telegrammkennung zum Beispiel als Wert ausgebildet, der sich von den bisherigen Werten im Hexadezimalsystem zur Angabe des verwendeten Protokolls für die nächsthöhere Schicht innerhalb der Nutzdaten unterscheidet. Insbesondere kann die erste Telegrammkennung einem neuen Ethertype Wert entsprechen. Der Ethernet-Endabschnitt 515 kann gemäß der obigen Schilderung beispielsweise nicht Teil der Verschlüsselung sein. Alternativ ist auch eine Ausgestaltung denkbar, in der der Masterteilnehmer 105 den Ethernet-Datenabschnitt 510 sowie den Ethernet-Endabschnitt 515 mit verschlüsselt und die Verschlüsselung über die erste Telegrammkennung im ersten Datenfeld 570 anzeigt.

Der Masterteilnehmer 105 kann die Empfangslogik 410 des Slaveteilnehmers 110 derart einstellen, sodass die Empfangslogik 410 die erste Telegrammkennung des ersten Datenfelds 570 im Ethernet-Kopfabschnitt 505 auswerten kann. Das heißt die Empfangslogik 410 kann in diesem Zusammenhang ausgelegt sein, die erste Telegrammkennung im ersten Datenfeld 570 des Ethernet-Kopfabschnitts 505 auszulesen oder zu erkennen und mit der ersten Telegrammkennung im ersten Datenfeld 570 zu verknüpfen, dass der auf die erste Telegrammkennung folgende Ethernet-Datenabschnitt 510 im Telegramm verschlüsselt vorliegt. Ohne das TAG-Feld 565 kann der Ethernet-Kopfabschnitt 505 zum Beispiel 14 Byte umfassen. Zum Beispiel kann der Masterteilnehmer 105 die Empfangslogik 410 mittels Umschalttelegramm im Voraus auf die Weiterleitung der zumindest teilweise verschlüsselten Telegramme an die Speichereinheit 420 umgestellt haben. Die Empfangslogik 410 kann demnach das am Eingangs-Port 400 anliegende Telegramm mit dem zweiten Telegrammaufbau TEL2 an die Speichereinheit 420 weiterleiten und parallel zum Weiterleiten die erste Telegrammkennung auswerten. Auch kann die Empfangslogik 410 zur Erzeugung der ersten und zweiten Version des zumindest teilweise verschlüsselten Telegramms ausgelegt sein, wie im Zusammenhang mit Figur 3 beschrieben worden ist. Die Geschwindigkeit der Entschlüsselung durch die Entschlüsselungseinheit 415 wird dabei von der Geschwindigkeit mit der ein Telegramm über den Eingangs-Port 400 des Slaveteilnehmers 110 empfangen werden kann, vorgegeben. Dies führt dazu, dass die Verzögerung des Telegramms in der Speichereinheit 420 für den EtherCAT Slave Controller unbemerkt bleibt. Die Vorgänge der Entschlüsselung im Durchlauf sowie der Verarbeitung im Durchlauf und der erneuten Verschlüsselung mithilfe der Verschlüsselungseinheit 455 des Slaveteilnehmers 110 können dabei in ähnlicher Weise zur obigen Erläuterung erfolgen.

Alternativ zum Umschalten der Empfangslogik 410 mittels Umschalttelegramm kann der Masterteilnehmer 105 auch ein Zeitfenster vorgeben und dieses Zeitfenster mit der Weiterleitung der Telegramme durch die Empfangslogik 410 verknüpfen. Beispielsweise hätte der Masterteilnehmer 105 vor dem Versenden des in der ersten Verschlüsselungsmethode verschlüsselten Telegramms, die Empfangslogik 410 zur Weiterleitung der folgenden Telegramme (inkl. des in der ersten Verschlüsselungsmethode verschlüsselten Telegramms) über die Speichereinheit 420 und die Entschlüsselungseinheit 415 einstellen können.

Im zweiten Telegrammaufbau TEL2 weist der Ethernet-Datenabschnitt 510 der Datenstruktur 500 einen weiteren Kopfabschnitt auf. Der weitere Kopfabschnitt ist hierbei als ein EtherCAT-Kopfabschnitt 525 ausgebildet, der Instruktionen für die Slaveteilnehmer im Automatisierungsnetzwerk 100 umfasst. Weiterhin umfasst der Ethernet-Datenabschnitt 510 EtherCAT Daten, die in Form von Datagrammen umgesetzt sein können. Beispielsweise kann der Ethernet-Datenabschnitt 510 ein erstes Datagramm 530, ein zweites Datagramm 535 sowie ein n-tes Datagramm 540 aufweisen, wobei das n-te Datagramm 540 anzeigt, dass die Datenstruktur 500 insgesamt eine beliebige Anzahl an Datagrammen umfassen kann. An dieser Stelle soll jedoch keine Einschränkung auf eine bestimmte Anzahl an Datagrammen in der Datenstruktur 500 vorgenommen werden.

Der Ethernet-Endabschnitt 515 weist überdies im zweiten Telegrammaufbau TEL2 ein Prüfsummenfeld 550 auf. Weiterhin kann der Ethernet-Endabschnitt 515 ein nicht dargestelltes Padding-Feld aufweisen. Das Padding-Feld ist erforderlich, um das EtherCAT Telegramm in dem Ethernet Datenframe auf die notwendige Minimalgröße des Ethernet Datenframes von 64 Byte zu bringen, indem zusätzliche, als Pad angefügte Byte in das EtherCAT Telegramm eingefügt werden. Das Padding-Feld kann erforderlich sein, wenn mit dem EtherCAT Telegramm als Nutzdaten beispielsweise weniger als 46 bzw. 42 Byte (ohne bzw. mit einem der IEEE 802.1Q Norm entsprechenden VLAN-TAG) zu übertragen sind, wobei eine Präambel und ein Start Frame Delimiter (SFD) Feld, die in Figur 5 nicht enthalten sind, dabei nicht mitgezählt werden. Mithilfe des Prüfsummenfelds 550 kann eine Integritätsprüfung von versendeten Daten gewährleistet werden. Das Prüfsummenfeld 550 kann dazu beispielsweise eine berechnete CRC-Prüfsumme (CRC: Cyclic Redundancy Check) umfassen, die über den Ethernet Datenframe berechnet wird, beginnend mit einer Ziel-MAC-Adresse und endend mit dem Padding-Feld, sodass die Prüfsumme selbst nicht in der CRC-Prüfsumme enthalten ist. Die CRC-Prüfsumme wird vom Sender erstellt und an das Padding-Feld angehängt. Der Empfänger führt nach dem Empfang des EtherCAT Telegramms die gleiche CRC-Prüfsummenberechnung aus, und wenn die vom Empfänger berechnete CRC-Prüfsumme nicht mit der mit dem EtherCAT Telegramm übermittelten CRC-Prüfsumme übereinstimmt, so geht der Empfänger von einer fehlerhaften Datenübertragung aus. Das EtherCAT Telegramm kann in einem solchen Fall vom Empfänger verworfen werden. Für die vorliegende Erfindung ist zunächst nicht vorgesehen, dass der Masterteilnehmer 105 bei der zumindest teilweisen Verschlüsselung der Telegramme, den Ethernet-Endabschnitt 515 mit dem Prüfsummenfeld 550 mit in die Verschlüsselung integriert. Eine derartige Implementierung bei der das Prüfsummenfeld 550 mit integriert wird, ist jedoch nicht ausgeschlossen.

In einem dritten Telegrammaufbau TEL3 der Datenstruktur 500 umfasst der weitere Kopfabschnitt, der als EtherCAT-Kopfabschnitt 525 ausgebildet ist, ein erstes Längenfeld 575. Das erste Längenfeld 575 gibt Auskunft über die Länge der Datagramme im Ethernet-Datenabschnitt 510. Das erste Längenfeld 575 umfasst 11 Bit. Nachfolgend auf das erste Längenfeld 575 umfasst der EtherCAT-Kopfabschnitt 525 ein erstes Reservefeld 580 mit 1 Bit. Standardmäßig ist das erste Reservefeld nicht genutzt. Anschließend an das erste Reservefeld 580 umfasst der EtherCAT-Kopfabschnitt 525 ein zweites Datenfeld 585 mit 4 Bit, das als ein Typfeld ausgebildet ist. Das zweite Datenfeld 585 weist eine zweite Telegrammkennung auf. Die zweite Telegrammkennung kann als EtherCAT Protokolltyp ausgebildet sein. Für den EtherCAT Protokolltyp stehen 16 verschiedene Werte zur Darstellung bereit, also die Werte von Null bis 15, von denen der Wert 0x1 im Hexadezimalsystem bereits für die Anzeige der Verarbeitung eines EtherCAT Telegramms für die Verarbeitungseinheit 425 des EtherCAT Slave Controllers reserviert ist und ein weiterer Wert um der Verarbeitungseinheit 425 des EtherCAT Slave Controllers eine Sperrung der Verarbeitung eines EtherCAT Telegramms anzuzeigen. Folglich kann der Masterteilnehmer 105 beispielsweise einen von den verbleibenden 13 Werten des EtherCAT Protokolltyps nutzen, um in der zweiten Verschlüsselungsmethode eine Verschlüsselung wenigstens eines Datagramms im Ethernet-Datenabschnitt 510 anzuzeigen.

Zusätzlich kann der Masterteilnehmer 105 zum Beispiel über das erste Reservefeld 580 anzeigen, also über einen Wert des ersten Reservefelds 580, dass der Masterteilnehmer 105 alle Datagramme im Ethernet-Datenabschnitt 510 mit dem Schlüssel verschlüsselt hat. Alternativ dazu kann der Masterteilnehmer 105 auch nur einzelne Datagramme mit dem Schlüssel verschlüsseln. Die Empfangslogik 410 des Slaveteilnehmers 110 kann ausgelegt sein, das zweite Datenfeld 585 mit der zweiten Telegrammkennung sowie das erste Reservefeld 580, beides im EtherCAT-Kopfabschnitt 525, auszuwerten. Dazu kann die Empfangslogik 410 vom Masterteilnehmer 105 eingestellt worden sein. Auch kann die Empfangslogik 410 vom Masterteilnehmer 105 derart eingestellt worden sein, dass die Empfangslogik 410 ein in der zweiten Verschlüsselungsmethode verschlüsseltes Telegramm, bei dem einzelne Datagramme oder alle Datagramme mit dem Schlüssel verschlüsselt sind, von der Empfangslogik 410 an die Speichereinheit 420 und die Entschlüsselungseinheit 415 weitergeleitet werden. Für die Einstellung der Weiterleitung der Telegramme durch die Empfangslogik 410 können oben beschriebene Varianten auch im Zusammenhang mit der zweiten Verschlüsselungsmethode eingesetzt werden, also zum Beispiel das Umschalttelegramm oder das vorgegebene Zeitfenster. Für die Verschlüsselung der einzelnen Datagramme bzw. sämtlicher Datagramme im Ethernet-Datenabschnitt 510 in der zweiten Verschlüsselungsmethode ist die Verschlüsselung des Prüfsummenfelds 550 standardmäßig nicht vorgesehen, könnte aber ebenso mit integriert werden.

In einem vierten Telegrammaufbau TEL4 der Datenstruktur 500 kann zum Beispiel das erste Datagramm 530 (wie auch das zweite Datagramm 535 sowie das n-te Datagramm 540) im Ethernet-Datenabschnitt 510 einen Datagramm-Kopfabschnitt 590 aufweisen. Der Datagramm-Kopfabschnitt 590 kann 10 Byte umfassen. Nachfolgend auf den Datagramm-Kopfabschnitt 590 kann ein Datagramm-Datenabschnitt 595 mit bis zu 1486 Byte folgen. Auf den Datagramm-Datenabschnitt 595 folgt ein Zählfeld 600, das 2 Byte umfasst. Das Zählfeld 600 kann als sogenannter "Working Counter" ausgebildet sein. Ein Working Counter kann die Anzahl von Slaveteilnehmern im Automatisierungsnetzwerk 100 durchzählen, die erfolgreich mithilfe des EtherCAT Telegramms adressiert werden konnten. Das heißt der EtherCAT Slave Controller des jeweiligen Slaveteilnehmers 110 konnte mithilfe des EtherCAT Telegramms adressiert werden und zudem konnte auf den adressierten Speicher im Slaveteilnehmer zugegriffen werden.

Ein fünfter Telegrammaufbau TEL5 zeigt einen detaillierteren Aufbau des Datagramm-Kopfabschnitts 590 des vierten Telegrammaufbaus TEL4 der Datenstruktur 500. Der Datagramm-Kopfabschnitt 590 weist ein Befehlsfeld 605 auf. Das Befehlsfeld 605 umfasst 8 Bit und kann in Form eines "EtherCAT Command Types" ausgebildet sein und den Slaveteilnehmer 110 bzw. die Verarbeitungseinheit 425 des EtherCAT Slave Controllers über die Werte Null bis 14 veranlassen etwas zu tun. Beispielsweise Daten in den Speicher schreiben oder Daten aus dem Datagramm-Datenabschnitt 595 lesen (Lesezugriff bzw. Lesevorgang) oder Daten in den Datagramm-Datenabschnitt 595 einfügen (Schreibzugriff bzw. Schreibvorgang), etc.. Auf das Befehlsfeld 605 folgend, kann ein Indexfeld 610 im fünften Telegrammaufbau TEL5 angeordnet sein. Das Indexfeld 610 kann ebenfalls 8 Bit umfassen und vom Masterteilnehmer 105 zur Identifikation verlorengegangener oder duplizierter Datagramme mithilfe eines Index bzw. eines Werts genutzt werden. Der Slaveteilnehmer 110 kann dagegen zu keiner Veränderung des Index oder Werts des Indexfeldes 610 ausgelegt sein. Auf das Indexfeld 610 folgend kann ein Adressfeld 615 angeordnet sein. Das Adressfeld 615 kann 32 Bit aufweisen und zur Darstellung unterschiedlicher Adressierungsmodi der Slaveteilnehmer im Automatisierungsnetzwerk 100 dienen. Beispielsweise inkrementiert jeder Slaveteilnehmer den Positionswert um eins im "Auto Increment Adress"-Modus, wobei ein Slaveteilnehmer adressiert ist, falls der Positionswert den Wert Null aufweist, Insbesondere kann im Adressfeld 615 der Datenbereich im Slaveteilnehmer 110 festgelegt sein, mit dem der Slaveteilnehmer 110 beim Durchlauf des Datagramm-Datenabschnitts 595 Daten austauschen soll.

Auf das Adressfeld 615 folgt ein zweites Längenfeld 620 im Datagramm-Kopfabschnitt 590. Das zweite Längenfeld 620 umfasst 11 Bit und gibt Auskunft über die Länge des Datagramm-Datenabschnitts 595 im entsprechenden ersten Datagramm 530 (bzw. im zweiten Datagramm 535 oder im n-ten Datagramm 540). Nachfolgend auf das zweite Längenfeld 620 kann ein drittes Datenfeld 625 im Datagramm-Kopfabschnitt 590 angeordnet sein. Das dritte Datenfeld 625 kann 3 Bit umfassen und in Form eines zweiten Reservefelds ausgebildet sein und standardmäßig ungenutzten Puffer, in Form von unbelegten Bits, bieten. Der Masterteilnehmer 105 ist in einer dritten Verschlüsselungsmethode ausgelegt, den Datagramm-Datenabschnitt 595 wenigstens eines Datagramms mit dem Schlüssel zu verschlüsseln und die Verschlüsselung im dritten Datenfeld 625 mithilfe einer dritten Telegrammkennung im Datagramm-Kopfabschnitt 590 des wenigstens einen Datagramms zu kennzeichnen. Der Masterteilnehmer 105 kann die Empfangslogik 410 einstellen, sodass die Empfangslogik 410 die dritte Telegrammkennung im dritten Datenfeld 625 im Datagramm-Kopfabschnitts 590 wenigstens eines Datagramms auswerten kann. Beispielsweise kann die dritte Telegrammkennung in Form eines Werts ausgebildet sein, den die Empfangslogik 410 interpretieren kann, wie auch bereits oben im Zusammenhang mit der ersten Telegrammkennung und der zweiten Telegrammkennung erläutert wurde. Die Empfangslogik 410 kann aufgrund der vom Masterteilnehmer 105 vorgenommenen Einstellung den empfangenen Teil eines Telegramms, dessen Datagramm-Datenabschnitt 595 wenigstens eines Datagramms verschlüsselt ist, an die Speichereinheit 420 und die Entschlüsselungseinheit 415 weiterleiten.

Die Einstellung der Empfangslogik 410 zur Weiterleitung der vom Masterteilnehmer 105 in der dritten Verschlüsselungsmethode verschlüsselten Datagramm-Datenabschnitte 595 wenigstens eines Datagramms kann dabei in ähnlicher Weise zur obigen Erläuterung erfolgen. Also beispielsweise über das festgelegte bzw. vorgegebene Zeitfenster des Masterteilnehmers 105, in dem der Masterteilnehmer 105 die in der dritten Verschlüsselungsmethode verschlüsselten Datagramm-Datenabschnitte 595 wenigstens eines Datagramms der EtherCAT Telegramme an den Slaveteilnehmer 110 ausgibt. Alternativ dazu kann der Masterteilnehmer 105 auch, wie oben beschrieben, das Umschalttelegramm an den Slaveteilnehmer 110 versenden, mit welchem dem Slaveteilnehmer angezeigt wird, dass der Masterteilnehmer 105 den bisherigen zum Beispiel unverschlüsselten Telegrammverkehr auf den in der dritten Verschlüsselungsmethode verschlüsselten Telegrammverkehr umstellt.

Auf das dritte Datenfeld 625 folgend, ist im Datagramm-Kopfabschnitt 590 im fünften Telegrammaufbau TEL5 ein Zirkulationsfeld 630 angeordnet. Das Zirkulationsfeld 630 umfasst 1 Bit und kann mit den beiden darstellbaren Werten Auskunft geben, ob ein Ethernet Datenframe bereits im Automatisierungsnetzwerk 100 zirkuliert hat, also die einzelnen Slaveteilnehmer auf der Hinleitung des Datenleitungsnetzes 200 durchlaufen hat. Insbesondere soll durch das Zirkulationsfeld 630 eine mehrfache Zirkulation von Ethernet Datenframes bzw. Telegrammen im Automatisierungsnetzwerk 100 vermieden werden, da die EtherCAT Slave Controller der einzelnen Slaveteilnehmer jeweils dazu ausgelegt sein können, im Automatisierungsnetzwerk 100 zirkulierende Telegramme zu erkennen und zu verwerfen. Nachfolgend auf das Zirkulationsfeld 630 kann ein Folgefeld 635 angeordnet sein. Das Folgefeld 635 kann 1 Bit umfassen und dem EtherCAT Slave Controller des jeweiligen Slaveteilnehmers eine Auskunft darüber geben, ob es sich bei dem aktuellen Datagramm um das letzte Datagramm im Telegramm handelt oder ob weitere Datagramme auf das aktuelle Datagramm folgen.

Abschließend kann ein Registerfeld 640 im Datagramm-Kopfabschnitt 590 angeordnet sein. Das Registerfeld 640 kann 16 Bit umfassen und den Masterteilnehmer 105 über Ereignisse, zum Beispiel Unterbrechungen, die von einem oder mehreren Slaveteilnehmern ausgehen, informieren. Der Datagramm-Datenabschnitt 595 eines Datagramms kann auf verschiedene Arten von der Verarbeitungseinheit 425 des EtherCAT Slave Controllers des Slaveteilnehmers 110 im Durchlauf verarbeitet werden. So kann die Verarbeitungseinheit 425 des EtherCAT Slave Controllers des Slaveteilnehmers 110 Daten in einem Schreibvorgang in den Datagramm-Datenabschnitt 595 eines oder mehrerer Datagramme eines EtherCAT Telegramms einfügen. Weiterhin kann die Verarbeitungseinheit 425 des EtherCAT Slave Controllers des Slaveteilnehmers 110 zunächst Daten aus dem Datagramm-Datenabschnitt 595 eines oder mehrerer Datagramme eines EtherCAT Telegramms entnehmen und anschließend welche in den Datagramm-Datenabschnitt 595 eines oder mehrerer Datagramme eines EtherCAT Telegramms in einem Schreib-/Lesevorgang einfügen. Überdies kann die Verarbeitungseinheit 425 des EtherCAT Slave Controllers des Slaveteilnehmers 110 lediglich Daten aus dem Datagramm-Datenabschnitt 595 eines oder mehrerer Datagramme eines EtherCAT Telegramms in einem Lesevorgang entnehmen. Dabei können die Datagramme jeweils als oben genannte Prozessdaten-Datagramme oder als Register-Datagramme ausgebildet sein.

Auch kann der Masterteilnehmer 105 ausgelegt sein, die in Figur 5 gezeigte Datenstruktur 500 vollständig zu verschlüsseln, also inklusive des Ethernet Kopfabschnitts 505. Ist in einem solchen Fall ein Netzwerkverteiler zwischen dem Masterteilnehmer 105 und dem Slaveteilnehmer 110 angeordnet, so kann der Netzwerkverteiler die Adressinformation der Datenstruktur 500 zur Weiterleitung aufgrund deren Verschlüsselung nicht korrekt auswerten. Abhilfe des Problems kann jedoch geschaffen werden, wenn der Masterteilnehmer 105 den Schlüssel mit dem er die Datenstruktur 500 bzw. die Telegramme vollständig verschlüsseln kann, auch an den Netzwerkverteiler über die vertrauenswürdige Verbindung versendet, damit der Netzwerkverteiler die Datenstruktur 500 bzw. die Telegramme wieder entschlüsseln kann.

Werden nur die Daten, beispielsweise im Datagramm-Datenabschnitt 595, vom Masterteilnehmer 105 verschlüsselt, so kann alternativ auch auf die Verzögerung des zumindest teilweise verschlüsselten Telegramms in der Speichereinheit 420 verzichtet werden. Insbesondere wird ein Lesezugriff auf die Daten im Datagramm-Datenabschnitt 595 durch die Verarbeitungseinheit 425 des EtherCAT Slave Controllers des Slaveteilnehmers 110 erst ausgeführt, wenn das Prüfsummenfeld 550 des Telegramms empfangen worden ist und die Verarbeitungseinheit 425 des EtherCAT Slave Controllers eine Nachberechnung der CRC-Prüfsumme durchgeführt hat und festgestellt hat, dass das zumindest teilweise verschlüsselte Telegramm vollständig übertragen wurde. Die Entschlüsselung des zumindest teilweise verschlüsselten Telegramms kann dann parallel zum Empfang erfolgen. Da die Verarbeitung des entschlüsselten Telegramms erst dann erfolgt, wenn der die Verarbeitungseinheit 425 des EtherCAT Slave Controllers die Prüfsumme im Prüfsummenfeld 550 empfangen und geprüft hat, bleibt für die Entschlüsselung durch die Entschlüsselungseinheit 415 genug Zeit.

Anders ist die Situation jedoch bei einem auszuführenden Schreibzugriff. Die in den Datagramm-Datenabschnitt 595 eines oder mehrerer Datagramme zu schreibenden Daten müssen der Verarbeitungseinheit 425 des EtherCAT Slave Controllers rechtzeitig zur Verfügung gestellt werden, damit diese sie einfügen kann. Die zu schreibenden Daten können nicht sofort bereitgestellt werden. Damit die Verarbeitungseinheit 425 des EtherCAT Slave Controllers mehr Zeit zum Schreiben bekommt, kann ein nicht dargestelltes Zwischenfeld zwischen den Datagramm-Kopfabschnitt 590 und dem Datagramm-Datenabschnitt 595 in das zumindest teilweise verschlüsselte Telegramm eingefügt werden, um es dem Slaveteilnehmer 110 auch bei sehr kurzer Laufzeit des jeweiligen Datagramms zu ermöglichen, die zu schreibenden Daten bereitzustellen und das zumindest teilweise verschlüsselte Telegramm zu entschlüsseln.

Eine erneute Verschlüsselung des Telegramms durch die Verschlüsselungseinheit 455 des Slaveteilnehmers 110 kann also insbesondere für einen Schreibzugriff oder einen Schreib-/Lesezugriff vorteilhaft sein, da hier die Daten im Datagramm-Datenabschnitt 595 verändert werden.

Die Erfindung wurde im Detail durch bevorzugte Ausführungsbeispiele beschrieben. Anstelle der beschriebenen Ausführungsbeispiele sind weitere Ausführungsbeispiele denkbar, welche weitere Abwandlungen oder Kombinationen von beschriebenen Merkmalen aufweisen können. Die Erfindung ist aus diesem Grund nicht durch die offenbarten Beispiele eingeschränkt, da vom Fachmann andere Variationen daraus abgeleitet werden können, ohne dabei den Schutzumfang der Erfindung zu verlassen.

### Bezugszeichenliste

- 100: Automatisierungsnetzwerk

- 300: Netzwerkteilnehmer

- 105: Masterteilnehmer

- 110: Slaveteilnehmer
- 115: erster weiterer Slaveteilnehmer
- 120: zweiter weiterer Slaveteilnehmer

- 200: Datenleitungsnetz
- 205: erste Datenleitung
- 210: zweite Datenleitung
- 215: dritte Datenleitung

- 400: Eingangs-Port
- 405: Ausgangs-Port
- 410: Empfangslogik
- 415: Entschlüsselungseinheit
- 420: Speichereinheit
- 425: Verarbeitungseinheit
- 430: erster Prozessorchip
- 435: zweiter Prozessorchip
- 440: erste Schnittstelle
- 445: zweite Schnittstelle
- 450: dritte Schnittstelle
- 455: Verschlüsselungseinheit
- 460: Verschlüsselungseinheit-Speichereinheit

- RX: Empfang
- TX: Senden

- 500: Datenstruktur
- 505: Ethernet-Kopfabschnitt
- 510: Ethernet-Datenabschnitt
- 515: Ethernet-Endabschnitt
- 525: EtherCAT-Kopfabschnitt
- 530: erstes Datagramm
- 535: zweites Datagramm
- 540: n-tes Datagramm

- 550: Prüfsummenfeld
- 555: Zieladressfeld
- 560: Absenderadressfeld
- 565: TAG-Feld
- 570: erstes Datenfeld
- 575: erstes Längenfeld
- 580: erstes Reservefeld
- 585: zweites Datenfeld
- 590: Datagramm-Kopfabschnitt
- 595: Datagramm-Datenabschnitt
- 600: Zählfeld
- 605: Befehlsfeld
- 610: Indexfeld
- 615: Adressfeld
- 620: zweites Längenfeld
- 625: drittes Datenfeld
- 630: Zirkulationsfeld
- 635: Folgefeld
- 640: Registerfeld

- 700: erstes Ablaufdiagramm
- 800: zweites Ablaufdiagramm

- 1: erste Verweisstelle
- 2: zweite Verweisstelle

- 705: erster Verfahrensschritt
- 710: zweiter Verfahrensschritt
- 715: dritter Verfahrensschritt
- 720: vierter Verfahrensschritt
- 725: fünfter Verfahrensschritt
- 730: sechster Verfahrensschritt
- 735: siebter Verfahrensschritt
- 740: achter Verfahrensschritt
- 745: neunter Verfahrensschritt
- 750: zehnter Verfahrensschritt
- 755: elfter Verfahrensschritt
- 760: zwölfter Verfahrensschritt
- 765: dreizehnter Verfahrensschritt
- 770: vierzehnter Verfahrensschritt
- 775: fünfzehnter Verfahrensschritt
- 780: sechzehnter Verfahrensschritt
- 785: siebzehnter Verfahrensschritt
- 790: achtzehnter Verfahrensschritt
- 795: neunzehnter Verfahrensschritt

- 805: erster Schritt
- 807: zweiter Schritt
- 809: dritter Schritt
- 811: vierter Schritt
- 813: fünfter Schritt
- 815: sechster Schritt
- 817: siebter Schritt
- 819: achter Schritt
- 821: neunter Schritt
- 823: zehnter Schritt
- 825: elfter Schritt
- 827: zwölfter Schritt
- 829: dreizehnter Schritt
- 831: vierzehnter Schritt
- 833: fünfzehnter Schritt
- 835: sechzehnter Schritt
- 837: siebzehnter Schritt
- 839: achtzehnter Schritt
- 841: neunzehnter Schritt
- 843: zwanzigster Schritt
- 845: einundzwanzigster Schritt
- 847: zweiundzwanzigster Schritt
- 849: dreiundzwanzigster Schritt
- 851: vierundzwanzigster Schritt
- TEL1: erster Telegrammaufbau
- TEL2: zweiter Telegrammaufbau
- TEL3: dritter Telegrammaufbau
- TEL4: vierter Telegrammaufbau
- TEL5: fünfter Telegrammaufbau

## Patentansprüche

1. Verfahren zum Verarbeiten von Telegrammen in einem Automatisierungsnetzwerk (100), das mehrere Netzwerkteilnehmer (300) aufweist, wobei wenigstens ein Netzwerkteilnehmer (300) als ein Masterteilnehmer (105) und wenigstens ein Netzwerkteilnehmer (300) als ein Slaveteilnehmer (110) ausgebildet ist,
wobei der Masterteilnehmer (105) ausgelegt ist, Telegramme an den wenigstens einen Slaveteilnehmer (110) auszugeben,
wobei der Masterteilnehmer (105) ausgelegt ist, die Telegramme jeweils zumindest teilweise zu verschlüsseln,
wobei der wenigstens eine Slaveteilnehmer (110) einen Eingangs-Port (400), eine Empfangslogik (410), die mit dem Eingangs-Port (400) verbunden ist, eine Entschlüsselungseinheit (415), die mit der Empfangslogik (410) verbunden ist und eine Verarbeitungseinheit (425), die zur Verarbeitung der Telegramme im Durchlauf ausgelegt ist und mit der Entschlüsselungseinheit (415) und der Empfangslogik (410) verbunden ist, aufweist,
wobei die Empfangslogik (410) ausgelegt ist, wenn am Eingangs-Port (400) des wenigstens einen Slaveteilnehmers (110) ein vom Masterteilnehmer (105) zumindest teilweise verschlüsseltes Telegramm anliegt, das zumindest teilweise verschlüsselte Telegramm direkt an die Entschlüsselungseinheit (415) weiterzuleiten,
wobei die Entschlüsselungseinheit (415) ausgelegt ist, einen verschlüsselten Teil des zumindest teilweise verschlüsselten Telegramms mit einem Schlüssel im Durchlauf, also parallel zum fortlaufenden Empfang des zumindest teilweise verschlüsselten Telegramms, zu entschlüsseln und an die Verarbeitungseinheit (425) weiterzuleiten,
wobei die Verarbeitungseinheit (425) ausgelegt ist, den entschlüsselten Teil des zumindest teilweise verschlüsselten Telegramms im Durchlauf zu verarbeiten,
wobei die Empfangslogik (410) ausgelegt ist, wenn am Eingangs-Port (400) des wenigstens einen Slaveteilnehmers (110) ein vom Masterteilnehmer (105) unverschlüsseltes Telegramm anliegt, das unverschlüsselte Telegramm direkt an die Verarbeitungseinheit (425) weiterzuleiten,
wobei die Verarbeitungseinheit (425) ausgelegt ist, das unverschlüsselte Telegramm im Durchlauf zu verarbeiten,
wobei der wenigstens eine Slaveteilnehmer (110) einen Ausgangs-Port (405) und eine Verschlüsselungseinheit (455) aufweist, die mit der Verarbeitungseinheit (425) und dem Ausgangs-Port (405) verbunden ist,
wobei der wenigstens eine Slaveteilnehmer (110) über den Ausgangs-Port (405) über ein Datenleitungsnetz (200) mit einem nachfolgenden Slaveteilnehmer verbunden ist,
wobei die Verarbeitungseinheit (425) ausgelegt ist, den entschlüsselten Teil des zumindest teilweise verschlüsselten Telegramms an die Verschlüsselungseinheit (455) weiterzuleiten, und
wobei die Verschlüsselungseinheit (455) ausgelegt ist, den entschlüsselten Teil des zumindest teilweise verschlüsselten Telegramms mit dem Schlüssel im Durchlauf zu verschlüsseln und an den Ausgangs-Port (405) weiterzuleiten.

2. Verfahren nach Anspruch 1,
wobei die Empfangslogik (410) ausgelegt ist, eine erste Version und eine zweite Version eines zumindest teilweise verschlüsselten Telegramms durch Duplizierung des zumindest teilweise verschlüsselten Telegramms zu erzeugen,
wobei die Empfangslogik (410) ausgelegt ist, die erste Version an die Entschlüsselungseinheit (415) und die zweite Version an die Verarbeitungseinheit (425) weiterzuleiten,
wobei die Verarbeitungseinheit (425) ausgelegt ist, einen unverschlüsselten Teil der zweiten Version im Durchlauf zu verarbeiten und an den Ausgangs-Port (405) weiterzuleiten,
wobei die Verarbeitungseinheit (425) ausgelegt ist, die Weiterleitung der zweiten Version an den Ausgangs-Port (405) an der Stelle des verschlüsselten Teils der zweiten Version zu stoppen, sofern der verschlüsselte Teil einen Telegrammabschnitt mit Schreibzugriff für die Verarbeitungseinheit (425) aufweist,
wobei die Verarbeitungseinheit (425) ausgelegt ist, den Schreibzugriff für den von der Entschlüsselungseinheit (415) entschlüsselten und an die Verarbeitungseinheit (425) weitergeleiteten Teil der ersten Version auszuführen und somit diesen Teil der ersten Version im Durchlauf zu verarbeiten und danach zur Verschlüsselung an die Verschlüsselungseinheit (455) weiterzuleiten,
wobei die Verschlüsselungseinheit (455) ausgelegt ist, den entschlüsselten Teil der ersten Version im Durchlauf zu verschlüsseln und an den Ausgangs-Port weiterzuleiten, und wobei, sofern der verschlüsselte Teil der zweiten Version einen Telegrammabschnitt mit Schreibzugriff für die Verarbeitungseinheit (425) aufwies, der verarbeitete Teil des unverschlüsselten Teils der zweiten Version mit dem verschlüsselten Teil der ersten Version vor der Ausgabe über den Ausgangs-Port (405) verbunden wird.

3. Verfahren nach Anspruch 1,
wobei die Empfangslogik (410) ausgelegt ist, eine erste Version und eine zweite Version eines zumindest teilweise verschlüsselten Telegramms durch Duplizierung des zumindest teilweise verschlüsselten Telegramms zu erzeugen,
wobei die Empfangslogik (410) ausgelegt ist, die erste Version an die Entschlüsselungseinheit (415) und die zweite Version an die Verarbeitungseinheit (425) weiterzuleiten,
wobei die Verarbeitungseinheit (425) ausgelegt ist, einen unverschlüsselten Teil der zweiten Version im Durchlauf zu verarbeiten und an den Ausgangs-Port (405) weiterzuleiten,
wobei die Verarbeitungseinheit (425) ausgelegt ist, sofern der verschlüsselte Teil der zweiten Version einen Lesezugriff für die Verarbeitungseinheit (425) aufweist, den verschlüsselten Teil der zweiten Version an den Ausgangs-Port (405) weiterzuleiten und den Lesezugriff für den von der Entschlüsselungseinheit (415) entschlüsselten und an die Verarbeitungseinheit (425) weitergeleiteten Teil der ersten Version auszuführen und somit diesen Teil der ersten Version im Durchlauf zu verarbeiten, und
wobei, sofern der verschlüsselte Teil der zweiten Version einen Telegrammabschnitt mit Lesezugriff für die Verarbeitungseinheit (425) aufwies, der verarbeitete Teil des unverschlüsselten Teils der zweiten Version mit dem verschlüsselten Teil der zweiten Version vor der Ausgabe über den Ausgangs-Port (405) verbunden wird.

4. Verfahren nach Anspruch 1,
wobei die Empfangslogik (410) ausgelegt ist, eine erste Version und eine zweite Version eines zumindest teilweise verschlüsselten Telegramms durch Duplizierung des zumindest teilweise verschlüsselten Telegramms zu erzeugen,
wobei die Empfangslogik (410) ausgelegt ist, die erste Version an die Entschlüsselungseinheit (415) und die zweite Version an die Verarbeitungseinheit (425) weiterzuleiten, wobei, die Verarbeitungseinheit (425) ausgelegt ist, einen unverschlüsselten Teil der zweiten Version im Durchlauf zu verarbeiten und an den Ausgangs-Port (405) weiterzuleiten,
wobei, wenn ein verschlüsselter Teil der zweiten Version keinen Schreibzugriff für die Verarbeitungseinheit (425) und keinen Lesezugriff für die Verarbeitungseinheit (425) aufweist, die Verarbeitungseinheit (425) ausgelegt ist, den verschlüsselten Teil der zweiten Version an den Ausgangs-Port (405) weiterzuleiten, und
wobei, sofern der verschlüsselte Teil der zweiten Version keinen Telegrammabschnitt mit Schreibzugriff für die Verarbeitungseinheit und keinen Telegrammabschnitt mit Lesezugriff für die Verarbeitungseinheit (425) aufwies, der verarbeitete Teil des unverschlüsselten Teils der zweiten Version mit dem verschlüsselten Teil der zweiten Version vor der Ausgabe über den Ausgangs-Port (405) verbunden wird.

5. Verfahren nach einem der Ansprüche 1 bis 4,
wobei die Telegramme als Ethernet Telegramme ausgebildet sind und jeweils einen Ethernet-Kopfabschnitt (505) und einen Ethernet-Datenabschnitt (510) aufweisen,
wobei der Masterteilnehmer (105) in einer ersten Verschlüsselungsmethode ausgelegt ist, den Ethernet-Datenabschnitt (510) eines Ethernet Telegramms mit dem Schlüssel zu verschlüsseln und die Verschlüsselung des Ethernet-Datenabschnitts (510) mit einer ersten Telegrammkennung im Ethernet-Kopfabschnitt (505) anzuzeigen, und
wobei die Empfangslogik (410) des wenigstens einen Slaveteilnehmers (110) ausgelegt ist, die erste Telegrammkennung im Ethernet-Kopfabschnitt (505) auszuwerten.

6. Verfahren nach einem der Ansprüche 1 bis 4,
wobei die Telegramme als Ethernet Telegramme ausgebildet sind und jeweils einen Ethernet-Kopfabschnitt (505) und einen Ethernet-Datenabschnitt (510) aufweisen,
wobei der Ethernet-Datenabschnitt (510) einen weiteren Kopfabschnitt und Datagramme umfasst,
wobei der Masterteilnehmer (105) in einer zweiten Verschlüsselungsmethode ausgelegt ist, wenigstens ein Datagramm mit dem Schlüssel zu verschlüsseln und die Verschlüsselung des wenigstens einen Datagramms mit einer zweiten Telegrammkennung in dem weiteren Kopfabschnitt anzuzeigen, und
wobei die Empfangslogik (410) des wenigstens einen Slaveteilnehmers (110) ausgelegt ist, die zweite Telegrammkennung im weiteren Kopfabschnitt auszuwerten.

7. Verfahren nach einem der Ansprüche 1 bis 4,
wobei die Telegramme als Ethernet Telegramme ausgebildet sind und jeweils einen Ethernet-Kopfabschnitt (505) und einen Ethernet-Datenabschnitt (510) aufweisen,
wobei der Ethernet-Datenabschnitt (510) einen weiteren Kopfabschnitt und Datagramme umfasst,
wobei die Datagramme jeweils einen Datagramm-Kopfabschnitt (590) und einen Datagramm-Datenabschnitt (595) umfassen,
wobei der Masterteilnehmer (105) in einer dritten Verschlüsselungsmethode ausgelegt ist, den Datagramm-Datenabschnitt (595) wenigstens eines Datagramms mit dem Schlüssel zu verschlüsseln und die Verschlüsselung des Datagramm-Datenabschnitts (595) des wenigstens einen Datagramms mit einer dritten Telegrammkennung im Datagramm-Kopfabschnitt (590) anzuzeigen, und
wobei die Empfangslogik (410) des wenigstens einen Slaveteilnehmers (110) ausgelegt ist, die dritte Telegrammkennung im Datagramm-Kopfabschnitt (590) auszuwerten.

8. Verfahren nach einem der Ansprüche 6 oder 7,
wobei die Datagramme des Ethernet-Datenabschnitts (510) jeweils als Prozessdaten-Datagramme und/oder als Mailbox-Datagramme und/oder als Register-Datagramme ausgebildet sind.

9. Verfahren nach einem der Ansprüche 1 bis 8,
wobei der Masterteilnehmer (105) ausgelegt ist, ein Zeitfenster festzulegen, in dem der Masterteilnehmer (105) zumindest teilweise verschlüsselte Telegramme an den wenigstens einen Slaveteilnehmer (110) ausgibt,
wobei die Empfangslogik (410) ausgelegt ist, das zumindest teilweise verschlüsselte Telegramm im festgelegten Zeitfenster zur Entschlüsselung an die Entschlüsselungseinheit (415) weiterzuleiten.

10. Verfahren nach einem der Ansprüche 1 bis 9,
wobei der Masterteilnehmer (105) ausgelegt ist, vor dem Versenden der zumindest teilweise verschlüsselten Telegramme ein Umschalttelegramm an den wenigstens einen Slaveteilnehmer (110) auszugeben,
wobei die Empfangslogik (410) ausgelegt ist, nach dem Empfang des Umschalttelegramms das zumindest teilweise verschlüsselte Telegramme zur Entschlüsselung an die Entschlüsselungseinheit (415) weiterzuleiten.

11. Verfahren nach einem der Ansprüche 1 bis 10,
wobei die Empfangslogik (410) ausgelegt ist, vom Masterteilnehmer (105) zumindest teilweise verschlüsselte Telegramme und vom Masterteilnehmer (105) unverschlüsselte Telegramme auf der Grundlage einer Ausbildung der Telegramme zu unterscheiden, bei der jeweils ein Kopfabschnitt der zumindest teilweise verschlüsselten Telegramme verschieden von einem Kopfabschnitt der unverschlüsselten Telegramme ausgebildet ist.

12. Verfahren nach einem der Ansprüche 1 bis 11,
wobei der Masterteilnehmer (105) ausgelegt ist, eine vertrauenswürdige Verbindung zu dem wenigstens einen Slaveteilnehmer (110) aufzubauen,
wobei der Masterteilnehmer (105) ausgelegt ist, den Schlüssel, mit dem der Masterteilnehmer (105) die Telegramme zumindest teilweise verschlüsselt, mit einem Verschlüsselungsprotokoll zu verschlüsseln und über die vertrauenswürdige Verbindung an den wenigstens einen Slaveteilnehmer (110) zu übertragen, und
wobei der wenigstens eine Slaveteilnehmer (110) ausgelegt ist, den mit dem Verschlüsselungsprotokoll verschlüsselten Schlüssel zu entschlüsseln, um die zumindest teilweise verschlüsselten Telegramme des Masterteilnehmers (105) mit dem Schlüssel entschlüsseln zu können.

13. Automatisierungsnetzwerk (100) zur Durchführung eines Verfahrens nach einem der Ansprüche 1 bis 12,
wobei die Netzwerkteilnehmer (300) des Automatisierungsnetzwerks (100) in Form einer Master-Slave-Struktur ausgebildet sind,
wobei das Automatisierungsnetzwerk (100) einen Masterteilnehmer (105) und einen Slaveteilnehmer (110) aufweist,
wobei der Masterteilnehmer (105) eine Masterteilnehmer-Verschlüsselungseinheit aufweist,
wobei die Masterteilnehmer-Verschlüsselungseinheit ausgelegt ist, die vom Masterteilnehmer (105) erzeugten Telegramme zumindest teilweise zu verschlüsseln,
wobei der Slaveteilnehmer (110) einen ersten Prozessorchip (430) und einen zweiten Prozessorchip (435) umfasst,
wobei der erste Prozessorchip (430) die Verarbeitungseinheit (425) umfasst,
wobei der erste Prozessorchip (430) als EtherCAT Slave Controller und der zweite Prozessorchip (435) als Mikrocontroller ausgebildet ist,
wobei der EtherCAT Slave Controller eine Schnittstelle (445) umfasst und der EtherCAT Slave Controller über die Schnittstelle (445) mit dem Mikrocontroller verbunden ist,
wobei der Masterteilnehmer (105) ausgelegt ist, jeweils die vertrauenswürdige Verbindung zu der Schnittstelle (445) des EtherCAT Slave Controllers des Slaveteilnehmers (110) aufzubauen, um den Schlüssel, mit dem der Masterteilnehmer (105) die Telegramme zumindest teilweise verschlüsselt, mit dem Verschlüsselungsprotokoll zu verschlüsseln und über die vertrauenswürdige Verbindung an den EtherCAT Slave Controller des Slaveteilnehmers (110) zu übertragen,
wobei der EtherCAT Slave Controller ausgelegt ist, den mit dem Verschlüsselungsprotokoll verschlüsselten Schlüssel über die Schnittstelle (445) an den Mikrocontroller weiterzuleiten, und
wobei der Mikrocontroller ausgelegt ist, den mit dem Verschlüsselungsprotokoll vom Masterteilnehmer (105) verschlüsselten Schlüssel zu entschlüsseln und den Schlüssel an die Entschlüsselungseinheit (415) und an die Verschlüsselungseinheit (455) weiterzuleiten.

14. Automatisierungsnetzwerk (100) nach Anspruch 13,
wobei die Entschlüsselungseinheit (415) des Slaveteilnehmers (110) eine Speichereinheit (420) aufweist, die mit der Empfangslogik (410) verbunden ist,
wobei die Entschlüsselungseinheit (415) ausgelegt ist, den verschlüsselten Teil des vom Masterteilnehmer (105) zumindest teilweise verschlüsselten Telegramms in der Speichereinheit (420) zwischen zu speichern, bis der verschlüsselte Teil des zumindest teilweise verschlüsselten Telegramms einer vorgegebenen Länge in Byte entspricht,
wobei die vorgegebene Länge in Byte einer Datenblockgröße entspricht, mit der der Masterteilnehmer (105) jeweils Datenblöcke eines Telegramms verschlüsselt, und
wobei die Entschlüsselungseinheit (415) ausgelegt ist, wenn in der Speichereinheit (420) mindestens die vorgegebene Länge in Byte von dem verschlüsselten Teil des zumindest teilweise verschlüsselten Telegramms zwischengespeichert worden ist, den verschlüsselten Teil des zumindest teilweise verschlüsselten Telegramms zu entschlüsseln.

15. Automatisierungsnetzwerk (100) nach einem der Ansprüche 13 bis 14,
wobei die Verschlüsselungseinheit (455) eine Verschlüsselungseinheit-Speichereinheit (460) aufweist, die mit dem Ausgangs-Port (405) verbunden ist,
wobei die Verschlüsselungseinheit (455) ausgelegt ist, den entschlüsselten Teil des zumindest teilweise verschlüsselten Telegramms in der Verschlüsselungseinheit-Speichereinheit (460) zwischen zu speichern, bis der entschlüsselte Teil des zumindest teilweise verschlüsselten Telegramms der vorgegebenen Länge in Byte entspricht, und
wobei die Verschlüsselungseinheit (455) ausgelegt ist, den entschlüsselten Teil des zumindest teilweise verschlüsselten Telegramms zu verschlüsseln, sofern der entschlüsselte Teil des zumindest teilweise verschlüsselten Telegramms in der Verschlüsselungseinheit-Speichereinheit (460) mindestens der vorgegebenen Länge in Byte entspricht.

## Claims

1. A method for processing telegrams in an automation network (100) comprising a plurality of network subscribers (300), wherein at least one network subscriber (300) is embodied as a master subscriber (105) and at least one network subscriber (300) is embodied as a slave subscriber (110),
wherein the master subscriber (105) is embodied to output telegrams to the at least one slave subscriber (110),
wherein the master subscriber (105) is embodied to at least partially encrypt the telegrams in each case,
wherein the at least one slave subscriber (110) comprises an input port (400), a receiving logic (410) connected to the input port (400), a decryption unit (415) connected to the receiving logic (410) and a processing unit (425) embodied to process telegrams on the fly and connected to the decryption unit (415) and the receiving logic (410),
wherein the receiving logic (410) is embodied, in the event that a telegram at least partially encrypted by the master subscriber (105) is present at the input port (400) of the at least one slave subscriber (110), to forward the at least partially encrypted telegram directly to the decryption unit (415),
wherein the decryption unit (415) is embodied to decrypt an encrypted portion of the at least partially encrypted telegram on the fly with the aid of a key, that is in parallel to the continued receipt of the at least partially encrypted telegram, and to forward it to the processing unit (425),
wherein the processing unit (425) is embodied to process the decrypted portion of the at least partially encrypted telegram on the fly,
wherein the receiving logic (410) is embodied, in the event that a telegram unencrypted by the master subscriber (105) is present at the input port (400) of the at least one slave subscriber (110), to forward the unencrypted telegram directly to the processing unit (425),
wherein the processing unit (425) is embodied to process the unencrypted telegram on the fly,
wherein the at least one slave subscriber (110) comprises an output port (405) and an encryption unit (455) connected to the processing unit (425) and the output port (405),
wherein the at least one slave subscriber (110) is connected to the subsequent slave subscriber via the output port (405) via a data line network (200),
wherein the processing unit (425) is embodied to forward the decrypted part of the at least partially encrypted telegram to the encryption unit (455), and
wherein the encryption unit (455) is embodied to decrypt the encrypted portion of the at least partially encrypted telegram on the fly with the aid of the key and to forward it to the output port (405).

2. The method according to claim 1,
wherein the receiving logic (410) is embodied to generate a first version and a second version of an at least partially encrypted telegram by duplicating the at least partially encrypted telegram,
wherein the receiving logic (410) is embodied to forward the first version to the decryption unit (415) and the second version to the processing unit (425),
wherein the processing unit (425) is embodied to process an unencrypted portion of the second version on the fly and to forward it to the output port (405),
wherein the processing unit (425) is embodied to stop the forwarding of the second version to the output port (405) at the location of the encrypted portion of the second version, provided that the encrypted portion comprises a telegram portion having a write access for the processing unit (425),
wherein the processing unit (425) is embodied to carry out the write access for the portion of the first version decrypted by the decryption unit (415) and forwarded to the processing unit (425) and thus to process said portion of the first version on the fly and subsequently forward it to the encryption unit (455) for encryption,
wherein the encryption unit (455) is embodied to encrypt the decrypted portion of the first version on the fly and to forward it to the output port, and
wherein, provided that the encrypted portion of the second version comprised a telegram portion with a write access for the processing unit (425), the processed portion of the unencrypted portion of the second version is linked to the encrypted portion of the first version prior to output via the output port (405).

3. The method according to claim 1,
wherein the receiving logic (410) is embodied to generate a first version and a second version of an at least partially encrypted telegram by duplicating the at least partially encrypted telegram,
wherein the receiving logic (410) is embodied to forward the first version to the decryption unit (415) and the second version to the processing unit (425),
wherein the processing unit (425) is embodied to process an unencrypted portion of the second version on the fly and to forward it to the output port (405),
wherein the processing unit (425) is embodied, provided that the encrypted portion of the second version comprises a read access for the processing unit (425), to forward the encrypted portion of the second version to the output port (405) and to carry out the read access for the portion of the first version decrypted by the decryption unit (415) and forwarded to the processing unit (425) and thus to process said portion of the first version on the fly, and
wherein, provided that the encrypted portion of the second version comprised a telegram portion with a read access for the processing unit (425), the processed part of the unencrypted portion of the second version is linked to the encrypted portion of the second version prior to output via the output port (405).

4. The method according to claim 1,
wherein the receiving logic (410) is embodied to generate a first version and a second version of an at least partially encrypted telegram by duplicating the at least partially encrypted telegram,
wherein the receiving logic (410) is embodied to forward the first version to the decryption unit (415) and the second version to the processing unit (425), wherein the processing unit (425) is embodied to forward an unencrypted portion of the second version on the fly and to forward it to the output port (405),
wherein, in the event that an encrypted portion of the second version does not comprise a write access for the processing unit (425) nor a read access for the processing unit (425), the processing unit (425) is embodied to forward the encrypted portion of the second version to the output port (405), and
wherein, provided that the encrypted portion of the second version did not comprise a telegram section with a write access for the processing unit and no telegram section with a read access for the processing unit (425), the processed portion of the unencrypted portion of the second version is linked to the encrypted portion of the second version prior to output via the output port (405).

5. The method according to any one of claims 1 to 4,
wherein the telegrams are embodied as Ethernet telegrams and each comprise an Ethernet header section (505) and an Ethernet data section (510),
wherein, in a first encryption method, the master subscriber (105) is embodied to encrypt the Ethernet data section (510) of an Ethernet telegram with the aid of a key and to indicate the encryption of the Ethernet data section (510) with the aid of a first telegram identifier in the Ethernet header section (505), and
wherein the receiving logic (410) of the at least one slave subscriber (110) is embodied to evaluate the first telegram identifier in the Ethernet header section (505).

6. The method according to any one of claims 1 to 4,
wherein the telegrams are embodied as Ethernet telegrams and each comprise an Ethernet header section (505) and an Ethernet data section (510),
wherein the Ethernet data section (510) comprises a further header section and datagrams,
wherein, in a second encryption method, the master subscriber (105) is embodied to encrypt at least a datagram with the aid of a key and to indicate the encryption of the at least one datagram with the aid of a second telegram identifier in the further header section, and
wherein the receiving logic (410) of the at least one slave subscriber (110) is embodied to evaluate the second telegram identifier in the further header section.

7. The method according to any one of claims 1 to 4,
wherein the telegrams are embodied as Ethernet telegrams and each comprise an Ethernet header section (505) and an Ethernet data section (510), wherein the Ethernet data section (510) comprises a further header section and datagrams,
wherein the datagrams each comprise a datagram header section (590) and a datagram data section (595),
wherein, in a third encryption method, the master subscriber (105) is embodied to encrypt the datagram data section (595) of at least a datagram with the aid of the key and to indicate the encryption of the datagram data section (595) of the at least one datagram with the aid of a third telegram identifier in the datagram header section (590), and
wherein the receiving logic (410) of the at least one slave subscriber (110) is embodied to evaluate the third telegram identifier in the datagram header section (590).

8. The method according to any one of claims 6 or 7,
wherein the datagrams of the Ethernet data section (510) are each embodied as process data datagrams and/or as mailbox datagrams and/or as register datagrams.

9. The method according to any one of claims 1 to 8,
wherein the master subscriber (105) is embodied to define a time window in which the master subscriber (110) outputs at least partially encrypted telegrams to the at least one slave subscriber (110),
wherein the receiving logic (410) is embodied to forward the at least partially encrypted telegram to the decryption unit (415) for decryption within the predefined time window.

10. The method according to any one of claims 1 to 9,
wherein the master subscriber (105) is embodied to output a switch-over telegram to the at least one slave subscriber (110) prior to sending the at least partially encrypted telegram,
wherein the receiving logic (410) is embodied to forward the at least partially encrypted telegram to the decryption unit (415) for decryption after receiving the switch-over telegram.

11. The method according to any one of claims 1 to 10,
wherein the receiving logic (410) is embodied to discern telegrams at least partially encrypted by the master subscriber (105) and telegrams unencrypted by the master subscriber (105) on the basis of an embodiment of the telegrams in which, in each case, a header section of the at least partially encrypted telegrams is embodied differently from a header section of the unencrypted telegrams.

12. The method of any one of claims 1 to 11,
wherein the master subscriber (105) is embodied to establish a trustworthy connection with the at least one slave subscriber (110),
wherein the master subscriber (105) is embodied to encrypt the key, with the aid of which the master subscriber (10) at last partially encrypts the telegrams, with the aid of an encryption protocol and to transmit them to the at least one slave subscriber (110) via the trustworthy connection, and
wherein the at least one slave subscriber is embodied to decrypt the key encrypted with the aid of the encryption protocol in order to be able to decrypt the at least partially encrypted telegrams of the master subscriber (105) with the aid of the key.

13. An automation network (100) for carrying out a method according to any one of claims 1 to 12,
wherein the network subscribers (300) of the automation network (100) are embodied as a master-slave structure,
wherein the automation network (100) comprises a master subscriber (105) and a slave subscriber (110),
wherein the master subscriber (105) comprises a master-subscriber-encryption unit,
wherein the master-subscriber-encryption unit is embodied to encrypt the telegrams generated by the master subscriber (105),
wherein the slave subscriber (110) comprises a first processor chip (430) and a second processor chip (435),
wherein the first processor chip (430) comprises the processing unit (425),
wherein the first processor chip (430) is embodied as an EtherCAT slave controller and the second processor chip (435) is embodied as as a micro-controller,
wherein the EtherCAT slave controller comprises an interface (445) and the EtherCAT slave controller is connected to the micro-controller via the interface (445),
wherein the master subscriber (105) is embodied to respectively establish the trustworthy connection to the interface (445) of the EtherCAT slave controller of the slave subscriber (110) in order to encrypt the key, with the aid of which the master subscriber (105) at least partially encrypts the telegrams, with the aid of the encryption protocol and to forward it to the EtherCAT slave controller of the slave subscriber (110) via the trustworthy connection,
wherein the EtherCAT slave controller is embodied to forward the key encrypted with the aid of the encryption protocol to the micro-controller via the interface (445), and
wherein the micro-controller is embodied to decrypt the key encrypted by the master subscriber (105) with the aid of the encryption protocol and to forward the key to the decryption unit (415) and to the encryption unit (455).

14. The automation network (100) according to claim 13,
wherein the decryption unit (415) of the slave subscriber (110) comprises a memory unit (420), which is connected to the receiving logic (410),
wherein the decryption unit (415) is embodied to buffer the encrypted portion of the telegram at least partially encrypted by the master subscriber (105) in the memory unit (420) until the encrypted portion of the at least partially encrypted telegram corresponds to a predefined length in byte, and
wherein the predefined length in bytes corresponds to a data block size with the aid of which the master subscriber (105) in each case encrypts data blocks of a telegram, and
wherein the decryption unit (415) is embodied, in the event that at least the predetermined length in byte of the encrypted portion of the at least partially encrypted telegram has been buffered in the memory unit (420), to decrypt the encrypted portion of the at least partially encrypted telegram.

15. The automation network (100) according to any one of claims 13 to 14,
wherein the encryption unit (455) comprises an encryption-unit-memory unit (460) connected to the output port (405),
wherein the encryption unit (455) is embodied to buffer the decrypted portion of the at least partially encrypted telegram in the encryption-unit-memory unit (460) until the decrypted portion of the at least partially encrypted telegram corresponds to the predetermined length in byte, and
wherein the encryption unit (455) is embodied to encrypt the decrypted portion of the at least partially encrypted telegram, provided that the decrypted portion of the at least partially encrypted telegram in the encryption-unit-memory unit (460) at least corresponds to the predetermined length in byte.

## Revendications

1. Procédé de traitement de télégrammes dans un réseau d'automatisation (100) comportant plusieurs périphériques au réseau (300), au moins un périphérique de réseau (300) étant conçu comme un périphérique maître (105) et au moins un périphérique de réseau (300) étant conçu comme un périphérique esclave (110), le périphérique maître (105) étant conçu pour délivrer des télégrammes à au moins un périphérique esclave (110),
le périphérique maître (105) étant conçu pour crypter au moins partiellement les télégrammes,
l'au moins un périphérique esclave (110) comportant un port d'entrée (400), une logique de réception (410) qui est reliée au port d'entrée (400), une unité de décryptage (415) qui est reliée à la logique de réception (410) et une unité de traitement (425) qui est conçue pour traiter en continu les télégrammes et qui est reliée à l'unité de décryptage (415) et à la logique de réception (410),
la logique de réception (410) étant conçue pour transmettre le télégramme au moins partiellement crypté directement à l'unité de décryptage (415) lorsqu'un télégramme au moins partiellement crypté provenant du périphérique maître (105) est présent au port d'entrée (400) de l'au moins un périphérique esclave (110),
l'unité de décryptage (415) étant conçue pour décrypter en continu avec une clé, c'est-à-dire parallèlement à la réception continue du télégramme au moins partiellement crypté, une partie cryptée du télégramme au moins partiellement crypté, et la transmettre à l'unité de traitement (425),
l'unité de traitement (425) étant conçue pour traiter en continu la partie décryptée du télégramme au moins partiellement crypté,
l'unité de traitement (425) étant conçue pour traiter en continu la partie décryptée du télégramme au moins partiellement crypté,
la logique de réception (410) étant conçue pour transmettre le télégramme non crypté directement à l'unité de traitement (425) si un télégramme non crypté du périphérique maître (105) est présent au port d'entrée (400) de l'au moins un périphérique esclave (110),
l'unité de traitement (425) étant conçue pour traiter en continu le télégramme non crypté,
l'au moins un périphérique esclave (110) comportant un port de sortie (405) et une unité de cryptage (455) qui est reliée à l'unité de traitement (425) et au port de sortie (405),
l'au moins un périphérique esclave (110) étant relié à un périphérique esclave suivant par le biais du port de sortie (405) et d'un réseau de lignes de données (200),
l'unité de traitement (425) étant conçue pour transmettre la partie décryptée du télégramme au moins partiellement crypté à l'unité de cryptage (455), et l'unité de cryptage (455) étant conçue pour crypter en continu avec la clé la partie décryptée du télégramme au moins partiellement crypté et la transmettre au port de sortie (405).

2. Procédé selon la revendication 1,
la logique de réception (410) étant conçue pour générer une première version et une deuxième version d'un télégramme au moins partiellement crypté par duplication du télégramme au moins partiellement crypté,
la logique de réception (410) étant conçue pour transmettre la première version à l'unité de décryptage (415) et la deuxième version à l'unité de traitement (425),
l'unité de traitement (425) étant conçue pour traiter en continu une partie non cryptée de la deuxième version et la transmettre au port de sortie (405),
l'unité de traitement (425) étant conçue pour arrêter le transfert de la deuxième version vers le port de sortie (405) à l'emplacement de la partie cryptée de la deuxième version, à condition que la partie cryptée comporte une portion de télégramme présentant un accès en écriture pour l'unité de traitement (425),
l'unité de traitement (425) étant conçue pour effectuer un accès en écriture à la partie de la première version qui est décryptée par l'unité de décryptage (415) et transmise à l'unité de traitement (425) et pour traiter ainsi en continu cette partie de la première version et la transmettre ensuite l'unité de cryptage (455) puis pour le cryptage,
l'unité de cryptage (455) étant conçue pour crypter en continu la partie décryptée de la première version et la transmettre au port de sortie et,
la partie traitée de la partie non cryptée de la deuxième version étant reliée à la partie cryptée de la première version avant la sortie par le biais du port de sortie (405) à condition que la partie cryptée de la deuxième version comporte une portion de télégramme présentant un accès en écriture pour l'unité de traitement (425).

3. Procédé selon la revendication 1,
la logique de réception (410) étant conçue pour générer une première version et une deuxième version d'un télégramme au moins partiellement crypté par duplication du télégramme au moins partiellement crypté,
la logique de réception (410) étant conçue pour transmettre la première version à l'unité de décryptage (415) et la deuxième version à l'unité de traitement (425),
l'unité de traitement (425) étant conçue pour traiter en continu une partie non cryptée de la deuxième version et la transmettre au port de sortie (405),
l'unité de traitement (425) étant conçue, à condition que la partie cryptée de la deuxième version présente un accès en lecture pour l'unité de traitement (425), pour transmettre la partie cryptée de la deuxième version au port de sortie (405) et permettre l'accès en lecture à la partie de la première version décryptée par l'unité de décryptage (415) et transmise à l'unité de traitement (425) et traiter ainsi en continu cette partie de la première version, et
la partie traitée de la partie non cryptée de la deuxième version étant reliée à la partie cryptée de la deuxième version avant d'être délivrée par le biais du port de sortie (405) à condition que la partie cryptée de la deuxième version comporte une portion de télégramme présentant un accès en lecture pour l'unité de traitement (425).

4. Procédé selon la revendication 1,
la logique de réception (410) étant conçue pour générer une première version et une deuxième version d'un télégramme au moins partiellement crypté par duplication du télégramme au moins partiellement crypté,
la logique de réception (410) étant conçue pour transmettre la première version à l'unité de décryptage (415) et la deuxième version à l'unité de traitement (425),
l'unité de traitement (425) étant conçue pour traiter en continu une partie non cryptée de la deuxième version et la transmettre au port de sortie (405),
l'unité de traitement (425) étant conçue pour transmettre la partie cryptée de la deuxième version au port de sortie (405) à condition qu'une partie cryptée de la deuxième version ne présente pas d'accès en écriture pour l'unité de traitement (425) ni d'accès en lecture pour l'unité de traitement (425), et
la partie traitée de la partie non cryptée de la deuxième version étant reliée à la partie cryptée de la deuxième version avant la sortie par le biais du port de sortie (405) à condition que la partie cryptée de la deuxième version ne comporte pas de portion de télégramme présentant un accès en écriture pour l'unité de traitement et de portion de télégramme présentant un accès en lecture pour l'unité de traitement (425).

5. Procédé selon l'une des revendications 1 à 4,
les télégrammes étant conçus comme des télégrammes Ethernet et comportant chacun une portion d'en-tête Ethernet (505) et une portion de données Ethernet (510),
le périphérique maître (105) étant conçu dans une première méthode de cryptage pour crypter la portion de données Ethernet (510) d'un télégramme Ethernet avec la clé et pour indiquer le cryptage de la portion de données Ethernet (510) avec un premier identifiant de télégramme dans le Portion d'en-tête Ethernet (505), et
la logique de réception (410) de l'au moins un périphérique esclave (110) étant conçue pour évaluer le premier identifiant de télégramme dans la portion d'entête Ethernet (505).

6. Procédé selon l'une des revendications 1 à 4,
les télégrammes étant conçus comme des télégrammes Ethernet et comportant chacun une portion d'en-tête Ethernet (505) et une portion de données Ethernet (510),
la portion de données Ethernet (510) comprenant une autre portion d'en-tête et des datagrammes,
le périphérique maître (105) étant conçu dans une deuxième méthode de cryptage pour crypter au moins un datagramme avec la clé et pour indiquer le cryptage dudit au moins un datagramme avec un deuxième identifiant de télégramme dans l'autre portion d'entête, et
la logique de réception (410) de l'au moins un périphérique esclave (110) étant conçue pour évaluer le deuxième identifiant de télégramme dans l'autre portion d'en-tête.

7. Procédé selon l'une des revendications 1 à 4,
les télégrammes étant conçus comme des télégrammes Ethernet et comportant chacun une portion d'en-tête Ethernet (505) et une portion de données Ethernet (510),
la portion de données Ethernet (510) comprenant une autre portion d'en-tête et des datagrammes,
les datagrammes comprenant chacun une portion d'en-tête de datagramme (590) et une portion de données de datagramme (595),
le périphérique maître (105) étant conçu dans une troisième méthode de cryptage pour crypter la portion de données de datagramme (595) d'au moins un datagramme avec la clé et pour crypter la portion de données de datagramme (595) d'au moins un datagramme avec un troisième identifiant de télégramme dans la portion d'en-tête de datagramme (590), et
la logique de réception (410) de l'au moins un périphérique esclave (110) étant conçue pour évaluer le troisième identifiant de télégramme dans la portion d'en-tête de datagramme (590).

8. Procédé selon l'une des revendications 6 ou 7,
les datagrammes de la portion de données Ethernet (510) étant chacun conçus comme des datagrammes de données de processus et/ou comme des datagrammes de boîte aux lettres et/ou comme des datagrammes de registre.

9. Procédé selon l'une des revendications 1 à 8,
le périphérique maître (105) étant conçu pour spécifier une fenêtre temporelle dans laquelle le périphérique maître (105) délivre des télégrammes au moins partiellement cryptés à l'au moins un périphérique esclave (110),
la logique de réception (410) étant conçue pour transmettre le télégramme au moins partiellement crypté à l'unité de décryptage (415) dans la fenêtre temporelle spécifiée en vue du décryptage.

10. Procédé selon l'une des revendications 1 à 9,
le périphérique maître (105) étant conçu pour délivrer un télégramme de commutation à l'au moins un périphérique esclave (110) avant d'envoyer les télégrammes au moins partiellement cryptés,
la logique de réception (410) étant conçue pour transmettre les télégrammes au moins partiellement cryptés à l'unité de décryptage (415) en vue du décryptage après réception du télégramme de commutation.

11. Procédé selon l'une des revendications 1 à 10,
la logique de réception (410) étant conçue pour faire la distinction entre les télégrammes au moins partiellement cryptés du périphérique maître (105) et les télégrammes non cryptés du périphérique maître (105) sur la base d'une configuration des télégrammes dans laquelle une portion d'en-tête des télégrammes au moins partiellement cryptés est conçue pour différer d'une portion d'en-tête de télégrammes non cryptés.

12. Procédé selon l'une des revendications 1 à 11,
le périphérique maître (105) étant conçu pour établir une liaison fiable avec au moins un périphérique esclave (110),
le périphérique maître (105) étant conçu pour crypter la clé, avec laquelle le périphérique maître (105) crypte au moins partiellement les télégrammes, à l'aide d'un protocole de cryptage et pour la transmettre à l'au moins un périphérique esclave (110) par le biais de la liaison fiable, et
l'au moins un périphérique esclave (110) étant conçu pour décrypter la clé cryptée avec le protocole de cryptage afin de pouvoir décrypter les télégrammes au moins partiellement cryptés du périphérique maître (105) avec la clé.

13. Réseau d'automatisation (100) destiné à mettre en œuvre un procédé selon l'une des revendications 1 à 12,
les périphériques de réseau (300) du réseau d'automatisation (100) étant conçus sous la forme d'une structure maître-esclave,
le réseau d'automatisation (100) comportant un périphérique maître (105) et un périphérique esclave (110),
le périphérique maître (105) comportant une unité de cryptage de périphérique maître,
l'unité de cryptage de périphérique maître étant conçue pour crypter au moins partiellement les télégrammes générés par le périphérique maître (105),
le périphérique esclave (110) comprenant une première puce de processeur (430) et une deuxième puce de processeur (435),
la première puce de processeur (430) comprenant l'unité de traitement (425),
la première puce de processeur (430) étant conçue comme contrôleur esclave EtherCAT et la deuxième puce de processeur (435) étant conçue comme microcontrôleur,
le contrôleur esclave EtherCAT comprenant une interface (445) et le contrôleur esclave EtherCAT étant relié au microcontrôleur par le biais de l'interface (445),
le périphérique maître (105) étant conçu pour établir la liaison fiable avec l'interface (445) du contrôleur esclave EtherCAT du périphérique esclave (110) afin de crypter la clé, avec laquelle le périphérique maître (105) crypte au moins partiellement les télégrammes, à l'aide du protocole de cryptage et pour la transmettre par le biais de la liaison fiable au contrôleur esclave EtherCAT du périphérique esclave (110),
le contrôleur esclave EtherCAT étant conçu pour transmettre la clé cryptée avec le protocole de cryptage au microcontrôleur par le biais de l'interface (445), et
le microcontrôleur étant conçu pour décrypter la clé cryptée par le périphérique maître (105) à l'aide du protocole de cryptage et pour transmettre la clé à l'unité de décryptage (415) et à l'unité de cryptage (455) .

14. Réseau d'automatisation (100) selon la revendication 13,
l'unité de décryptage (415) du périphérique esclave (110) comportant une unité de mémorisation (420) qui est reliée à la logique de réception (410),
l'unité de décryptage (415) étant conçue pour mémoriser temporairement dans l'unité de mémorisation (420) la partie cryptée du télégramme au moins partiellement cryptée par le périphérique maître (105) jusqu'à ce que la partie cryptée du télégramme au moins partiellement crypté corresponde à un longueur spécifiée en octets,
la longueur spécifiée en octets correspondant à une taille de bloc de données avec laquelle le périphérique maître (105) crypte les blocs de données d'un télégramme, et
l'unité de décryptage (415) étant conçue, si au moins la longueur spécifiée en octets de la partie cryptée du télégramme au moins partiellement crypté a été temporairement mémorisée dans l'unité de mémorisation (420), pour décrypter la partie cryptée du télégramme au moins partiellement crypté.

15. Réseau d'automatisation (100) selon l'une des revendications 13 à 14,
l'unité de cryptage (455) comportant une unité de mémorisation d'unité de cryptage (460) qui est reliée au port de sortie (405),
l'unité de cryptage (455) étant conçue pour mémoriser temporairement dans l'unité de mémorisation de l'unité de cryptage (460) la partie décryptée du télégramme au moins partiellement crypté jusqu'à ce que la partie décryptée du télégramme au moins partiellement crypté corresponde à la longueur spécifiée en octets, et
l'unité de cryptage (455) étant conçue pour crypter la partie décryptée du télégramme au moins partiellement crypté, à condition que la partie décryptée du télégramme au moins partiellement crypté dans l'unité de mémorisation de l'unité de cryptage (460) corresponde au moins à la longueur spécifiée en octets.
